# EUROPEAN PATENT APPLICATION

(11) **EP 4 645 889 A1**
(43) Date of publication of application: **05.11.2025**
(21) Application number: 24813810.9
(22) Date of filing: 13.03.2024
(51) Int. Cl.: H04N 23/60

(54) **PHOTOGRAPHING METHOD AND ELECTRONIC DEVICE**

(30) Priority: 29.05.2023 CN 202310623035
(71) Applicant: Honor Device Co., Ltd., Shenzhen, Guangdong 518040 (CN)
(72) Inventor: SUN, Xiaomei, Shenzhen, Guangdong 518040 (CN); XIA, Xing, Shenzhen, Guangdong 518040 (CN); MIAO, Feng, Shenzhen, Guangdong 518040 (CN)
(74) Representative: Gill Jennings & Every LLP
(86) International application number: PCT/CN2024/081447
(87) International publication number: WO 2024/244604

(57) **Abstract**

A shooting method and an electronic device are provided. The method is applied to the electronic device, and includes: starting a first video encoder in response to a first operation performed on a shooting control; encoding a first video frame by using the first video encoder; in a process in which the first video encoder encodes the first video frame, encoding a second video frame by using the first video encoder in response to a second operation performed on the shooting control; generating a first dynamic image, where the first dynamic image corresponds to the first video frame; generating a second dynamic image, where the second dynamic image corresponds to the second video frame; and controlling the first video encoder to stop encoding. Embodiments of this application are used to implement burst shooting of dynamic images, improve encoding efficiency, and save processing and storage resources.

## Description

This application claims priority to Chinese Patent Application No. 202310623035.X, filed with the Chinese National Intellectual Property Administration on May 29, 2023 and entitled "SHOOTING METHOD AND ELECTRONIC DEVICE", which is incorporated herein by reference in its entirety.

### TECHNICAL FIELD

This application relates to the field of terminal technologies, and in particular, to a shooting method and an electronic device.

### BACKGROUND

When an electronic device shoots a photo, a user may tap shooting for a plurality of successive times, so that the electronic device can continuously shoot a plurality of frames of images. The electronic device shoots dynamic images (which may be briefly referred to as "dynamic images"), and each dynamic image obtained through shooting includes a video with short duration. Therefore, if a user shoots dynamic images for a plurality of successive times within a short time, when the electronic device receives a new shooting request when processing a previous shooting request, in this case, the electronic device cannot perform processing in response to the new shooting request, and cannot implement burst shooting of dynamic images. As a result, the electronic device cannot continuously shoot a plurality of dynamic images within a short time like shooting photos, and shooting experience of the user is poor.

### SUMMARY

Embodiments of this application provide a shooting method and an electronic device, to implement a dynamic image burst shooting function within a short time, thereby improving encoding efficiency and saving processing resources.

According to a first aspect, an embodiment of this application provides a shooting method. The method is applied to an electronic device, and includes: starting a first video encoder in response to a first operation performed on a shooting control; encoding a first video frame by using the first video encoder; in a process in which the first video encoder encodes the first video frame, encoding a second video frame by using the first video encoder in response to a second operation performed on the shooting control; generating a first dynamic image, where the first dynamic image corresponds to the first video frame; generating a second dynamic image, where the second dynamic image corresponds to the second video frame; and controlling the first video encoder to stop encoding.

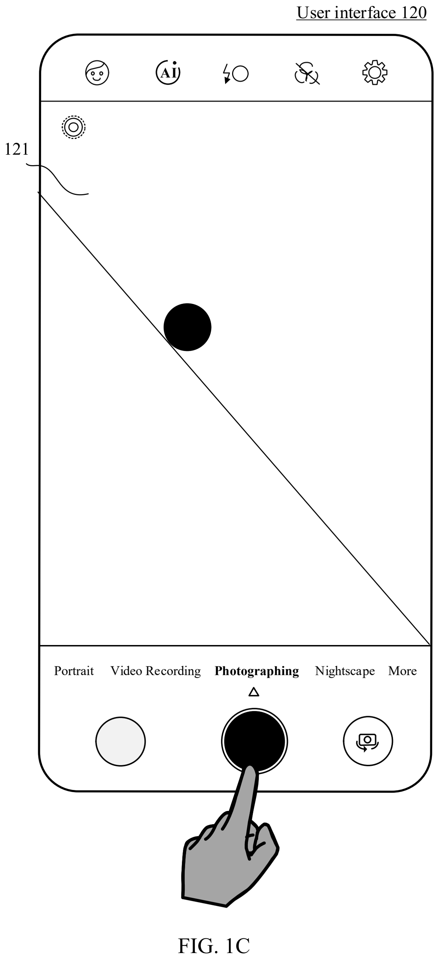

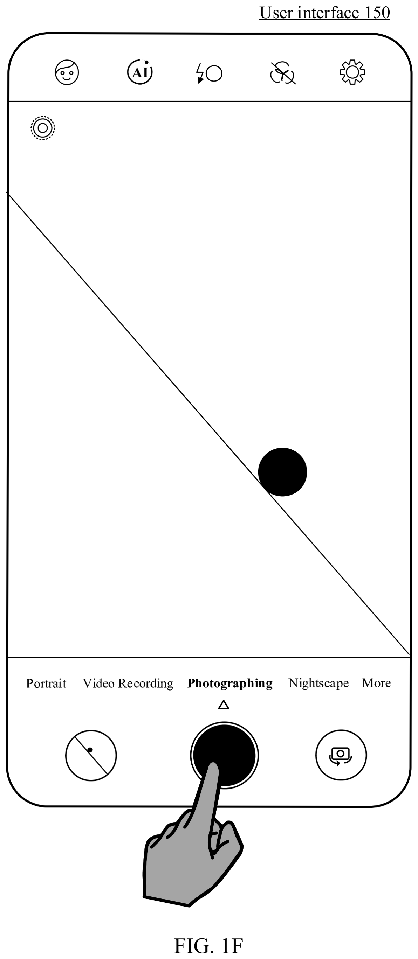

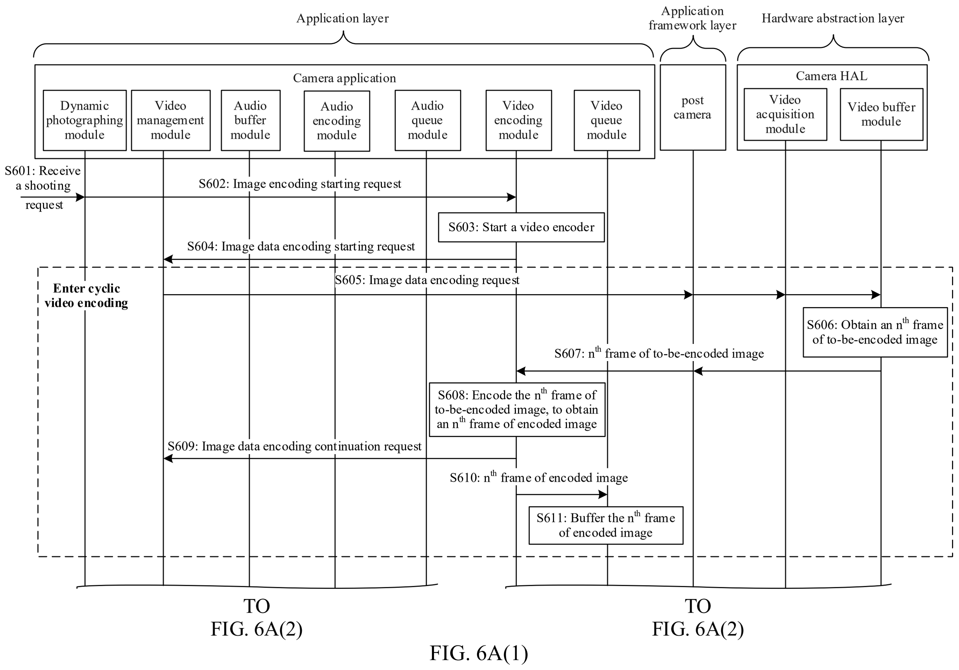

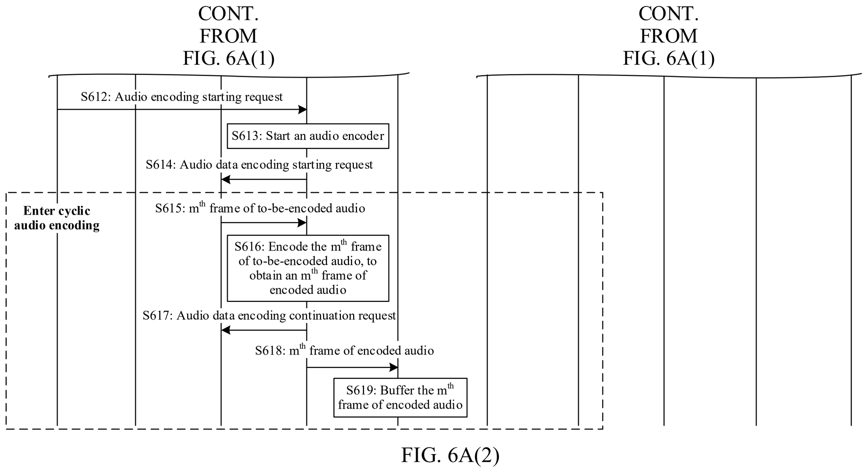

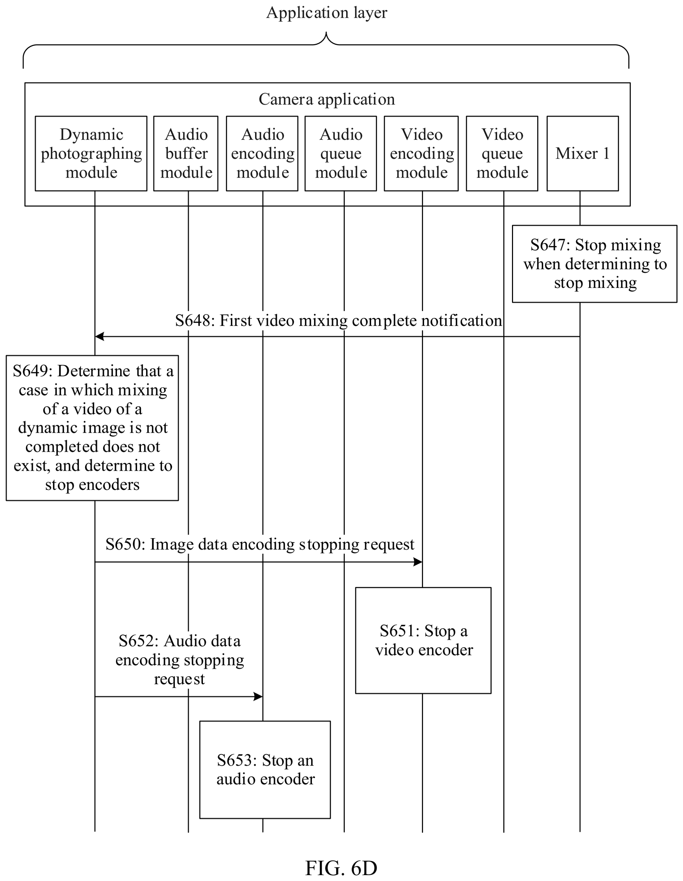

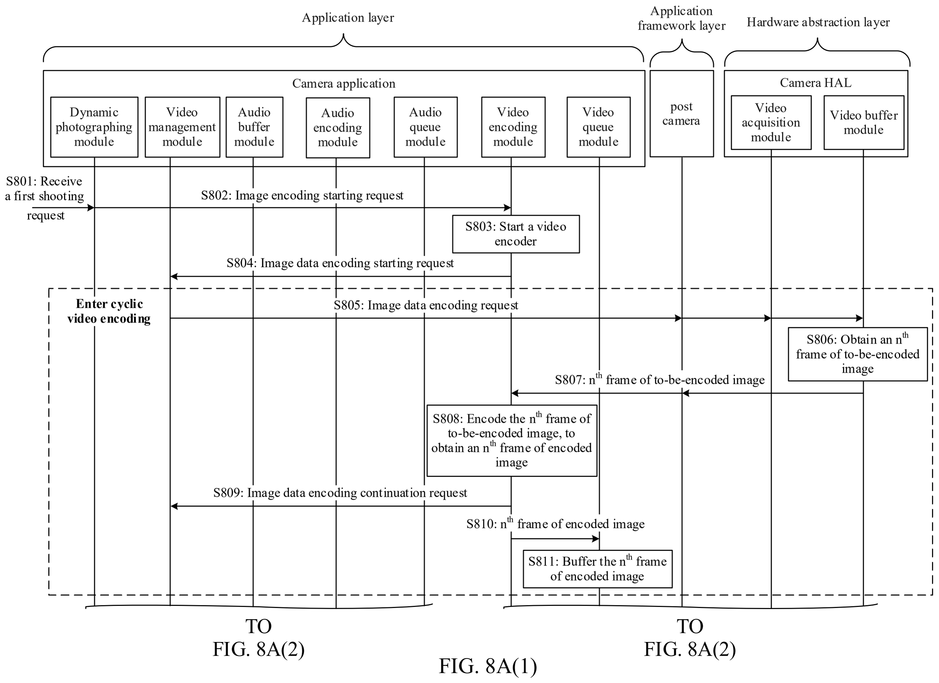

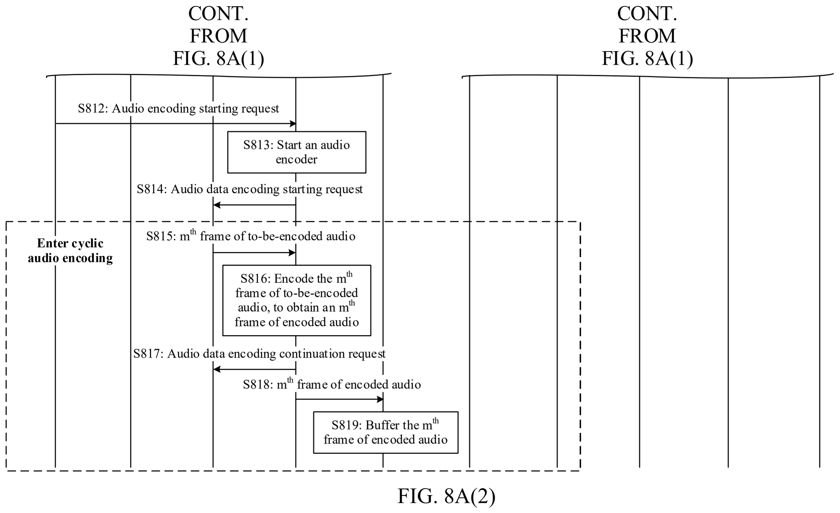

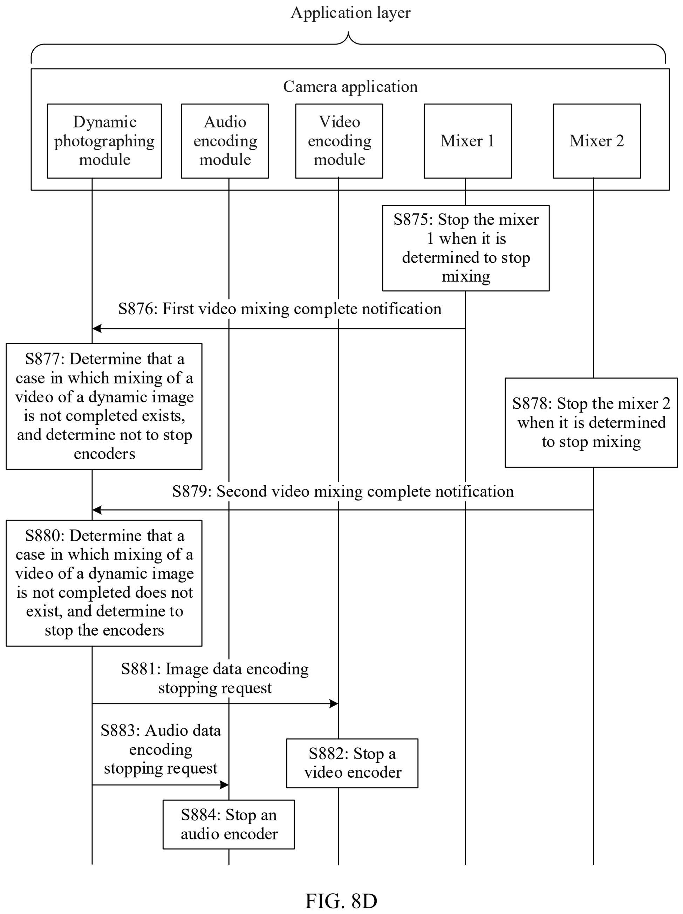

The first video frame and the second video frame are both to-be-encoded images. The first video frame and the second video frame may include a plurality of frames of to-be-encoded images. To-be-encoded images in the first video frame and the second video frame are not repetitive. The first dynamic image includes all to-be-encoded images of the first video frame, and the first dynamic image further includes some second video frames. The second dynamic image includes all second video frames, and the second dynamic image may further include some first video frames. To be specific, it may be understood that, to-be-encoded images used for generating the first dynamic image and the second dynamic image may be partially repetitive. For the first operation, refer to related descriptions of FIG. 1C and S801. Details are not described herein. For the second operation, refer to related operations of FIG. 1F and S834. Details are not described herein. The first video encoder may be the video encoder in FIG. 6A(1) and FIG. 6A(2) to FIG. 6D and FIG. 8A(1) and FIG. 8A(2) to FIG. 8D. The first video encoder may obtain the first video frame and the second video frame from the first video buffer queue.

In this embodiment of this application, after continuously receiving a plurality of dynamic image shooting requests, the electronic device may keep one group of encoders not to stop encoding, and to provide encoding for a plurality of mixers. After videos of all dynamic images are synthesized, encoding is stopped. This can implement a scenario in which the user continuously shoots dynamic images, thereby improving shooting experience of the user.

In a possible implementation, after the controlling the first video encoder to stop encoding, the method further includes: starting a second video encoder in response to a third operation performed on the shooting control; encoding a third video frame by using the second video encoder; generating a third dynamic image, where the third dynamic image corresponds to the third video frame; controlling the second video encoder to stop encoding after the third dynamic image is generated; starting a third video encoder in response to a fourth operation performed on the shooting control; encoding a fourth video frame by using the third video encoder; and generating a fourth dynamic image, where the fourth dynamic image corresponds to the fourth video frame. In this way, the electronic device can also implement a dynamic image shooting process during single shooting of the user.

The third video frame and the fourth video frame may also be to-be-encoded images. The third video frame and the fourth video frame may both include a plurality of frames of to-be-encoded images. There is no same image frame between every two of the first video frame, the second video frame, the third video frame, and the fourth video frame. The third video encoder and the fourth video encoder are different video encoders started by the electronic device in different time periods.

In a possible implementation, before controlling, by the electronic device, the first video encoder to stop encoding, the method further includes: adding a first shooting task to a task list in response to the first operation; adding a second shooting task to the task list in response to the second operation; when the first dynamic image is generated, clearing the first shooting task; controlling the first encoder to continue encoding when there is a task in the task list; when the second dynamic image is generated, clearing the second shooting task; and controlling the first video encoder to stop encoding when there is no task in the task list. In this way, stopping of the encoder needs to be determined based on a task condition in the task list, to ensure that encoding is not stopped when there is a shooting request, and an encoded image is provided for a mixer, to implement a burst shooting process of dynamic images.

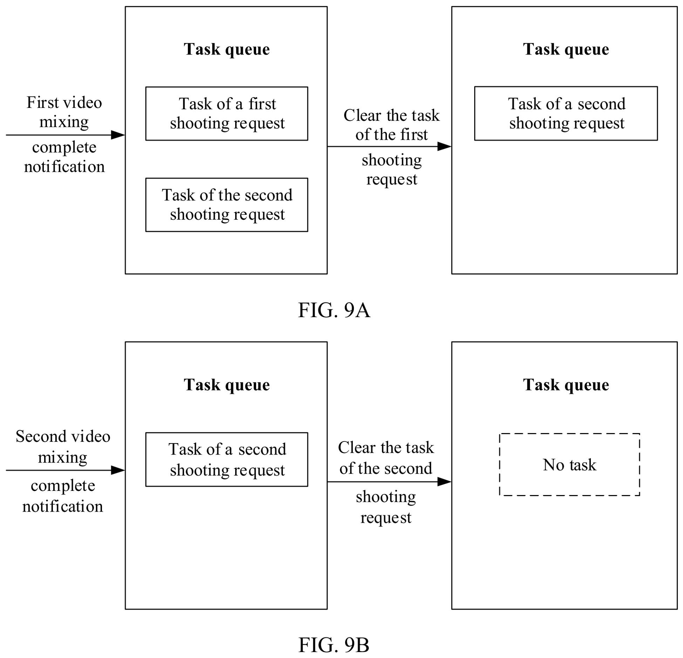

For the task list, refer to cases of FIG. 9A and FIG. 9B, and descriptions of related steps S649, S877, and S880. Details are not described herein. Generating the first dynamic image may be a process of receiving a first video mixing complete notification in S876. Similarly, generating the second dynamic image may be a process of receiving a second video mixing complete notification in S879.

In a possible implementation, before controlling, by the electronic device, the second video encoder to stop encoding, the method further includes: adding a third shooting task to a task list in response to the third operation; clearing the third shooting task when the third dynamic image is generated; and controlling the third video encoder to stop encoding when there is no task in the task list. In this way, stopping of the encoder needs to be determined based on a task condition in the task list, to ensure that encoding is not stopped when there is a shooting request, and an encoded image is provided for a mixer, to implement a burst shooting process of dynamic images.

For the foregoing description, refer to the description of S649. Generating the third dynamic image may be a process of receiving the first video mixing complete notification in S648.

In a possible implementation, after generating, by the electronic device, a first dynamic image, the method further includes: displaying a second user interface in response to an operation of starting a gallery, where the second user interface includes a first thumbnail of a first still image of the first dynamic image; displaying a third user interface in response to an operation performed on the first thumbnail, where the third user interface includes the first still image; and playing, by the electronic device, the first dynamic image in response to an operation performed on the first still image. In this way, the electronic device completes shooting, and the user may tap to play a dynamic image.

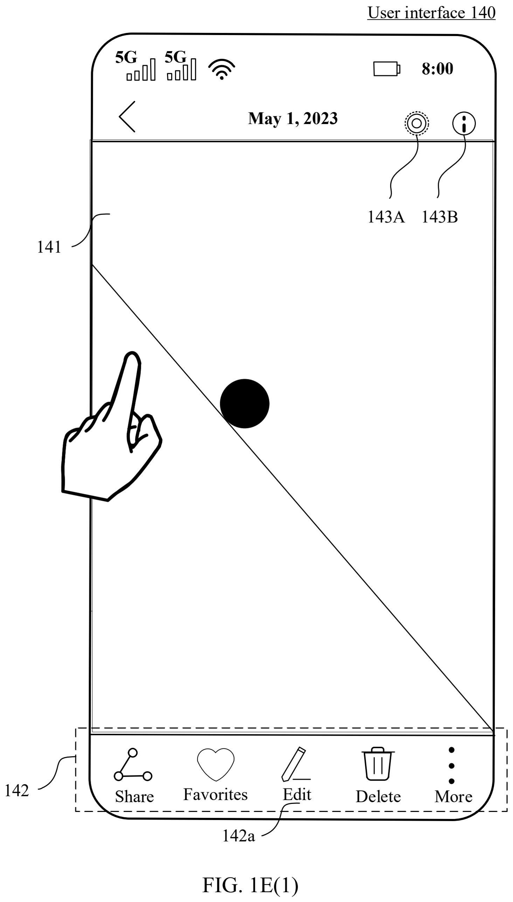

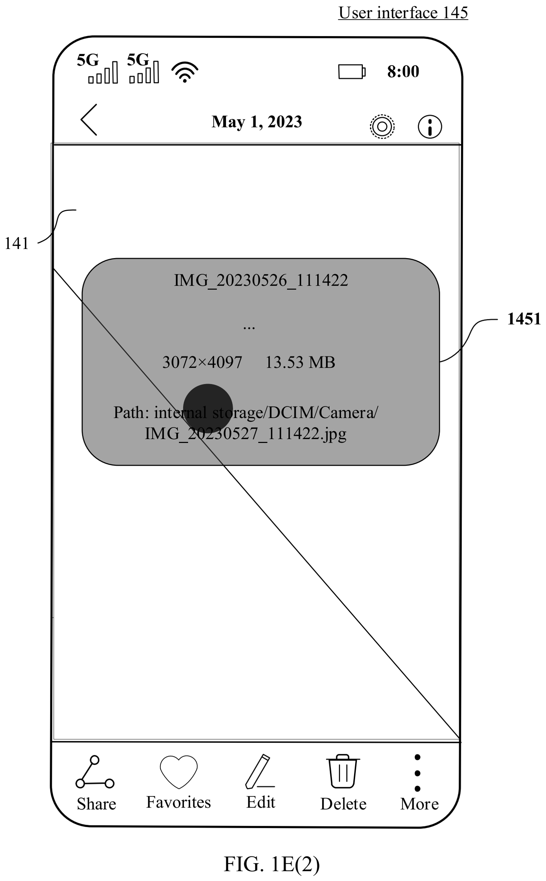

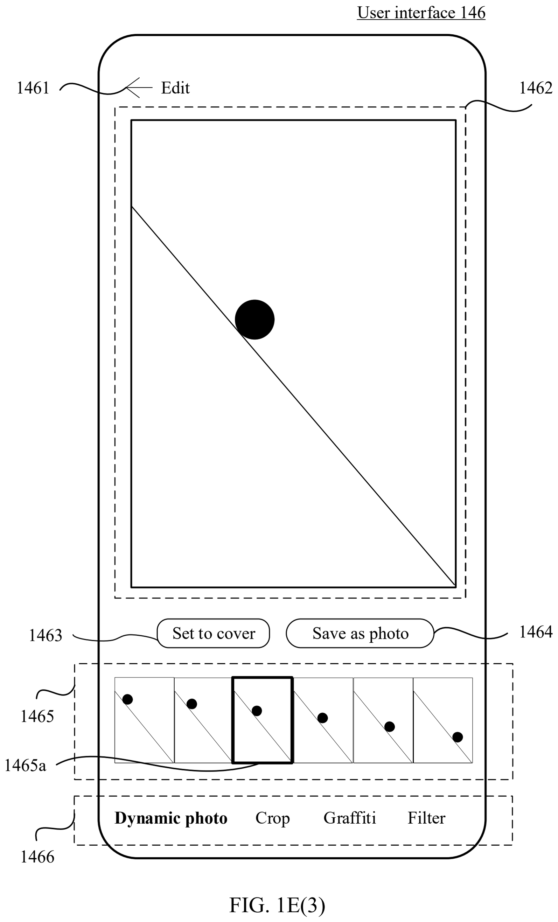

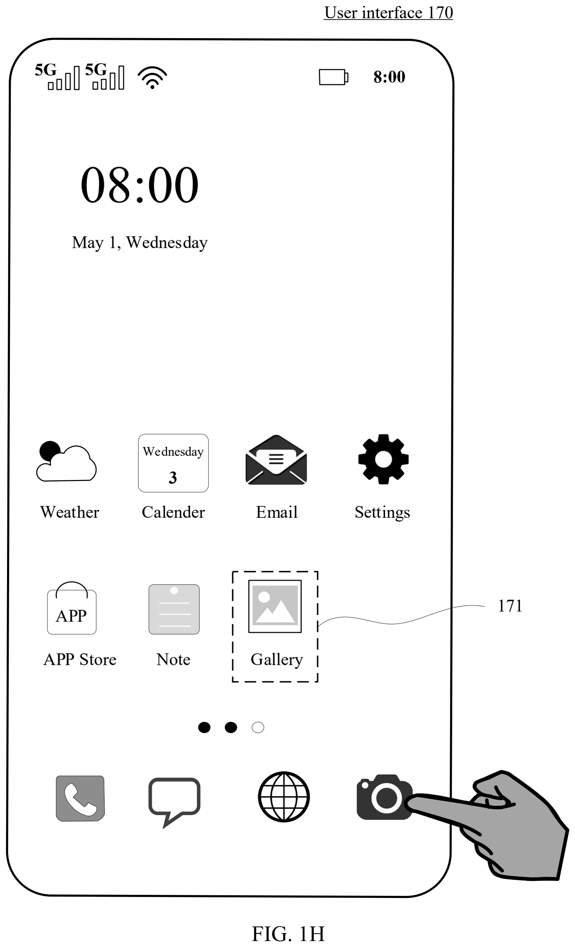

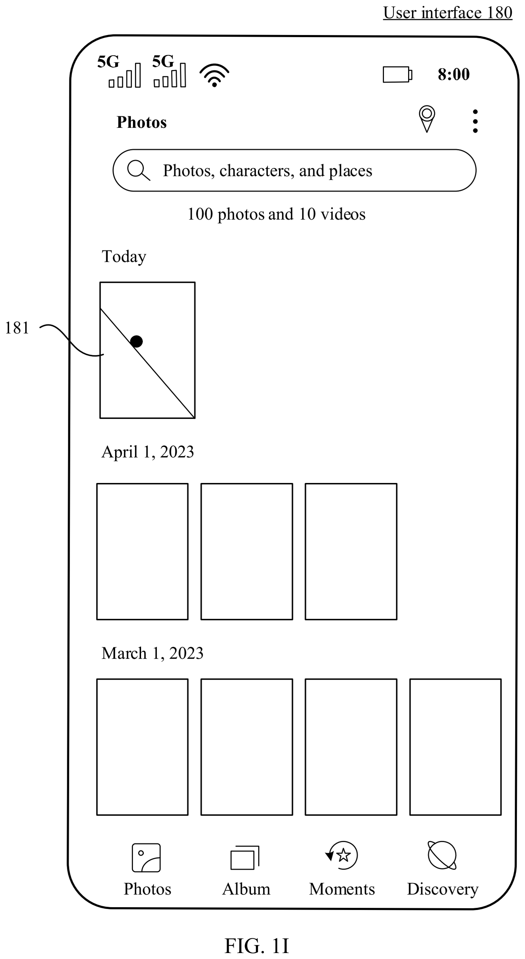

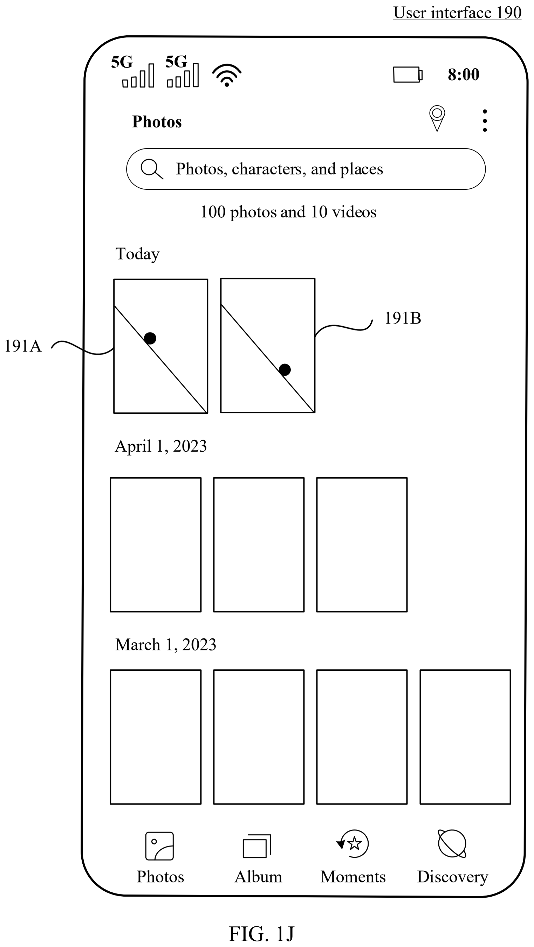

For the operation of starting the gallery, refer to the description of FIG. 1H; for the second user interface, refer to FIG. 1I or FIG. 1J; and for the second user interface, refer to the description of (a) in FIG. 1E. Details are not described herein.

In a possible implementation, the first dynamic image includes the first still image and a first video, the first video includes M frames of still images, and M is an integer greater than 1.

There is a correspondence between the M frames of still images and the video frames included in the first dynamic image.

In a possible implementation, the method further includes: starting a first audio encoder in response to the first operation; encoding a first audio frame by using the first audio encoder, where the first dynamic image corresponds to the first audio frame; and in a process in which the first audio encoder encodes the first audio frame, encoding a second audio frame by using the first audio encoder in response to the second operation, where the second dynamic image corresponds to the second audio frame. In this way, when receiving a new shooting request, the audio encoder keeps encoding, to ensure that a plurality of times of shooting is completed through one way of encoding, thereby ensuring that a plurality of times of burst shooting is implemented, and improving user experience.

The first audio frame and the second audio frame are both to-be-encoded audio. The first audio frame and the second audio frame may both include a plurality of frames of to-be-encoded audio. Audio in the first audio frame and the second audio frame is not repetitive. The first dynamic image includes all audio in the first audio frame, and some audio in the second audio frame. The second dynamic image includes all audio in the second audio frame, and some audio in the first audio frame.

In a possible implementation, the generating a first dynamic image includes: mixing a first encoded video frame and a first audio code video frame by using a first mixer to generate the first dynamic image, where the first encoded video frame is obtained after the first video encoder encodes the first video frame to generate the first dynamic image, and the first encoded audio frame is obtained after the first audio encoder encodes the first audio frame; and the generating a second dynamic image includes: mixing a second encoded video frame and a second audio code video frame by using a second mixer to generate the second dynamic image, where the second encoded video frame is obtained after the first video encoder encodes the second video frame, and the second encoded audio frame is obtained after the second audio encoder encodes the second audio frame. In this way, the electronic device can start two mixers, to consume encoding results of one way of encoders. In this way, when dynamic image burst shooting is implemented, a quantity of started encoders is reduced, processing efficiency is improved, and processing resources are saved, thereby preventing a freezing case caused by dynamic image burst shooting.

The first encoded video frame and the second encoded video frame may both include a plurality of frames of encoded images. The first encoded video frame and the second encoded video frame may include some repetitive encoded images.

In a possible implementation, after generating, by the electronic device, the first dynamic image and the second dynamic image, the method further includes: controlling the first video encoder to stop encoding, and controlling the first audio encoder to stop encoding. In this way, after obtaining two dynamic images obtained through burst shooting, the electronic device may determine to end encoding, to ensure that encoding can be provided for two mixers at the same time, thereby ensuring implementability of burst shooting.

In a possible implementation, the method further includes: obtaining the first video frame by using a camera in response to an operation of starting the camera; storing the first video frame into a first video buffer queue; and encoding, by the first video encoder, the first video frame to obtain the first encoded video frame, and then storing the first encoded video frame into a second video buffer queue. In this way, the one-off mixing consumption problem can be resolved by using the second video buffer queue, so that input data can also be provided for a mixer that is subsequently started, to ensure implementability of one-way encoding and multi-way mixing. Similarly, an original problem limit is also broken, encoding efficiency is improved, and processing resources and storage resources are saved, to ensure program security, and reduce problems such as freezing.

In a possible implementation, the method further includes: obtaining the first audio frame by using a microphone in response to an operation of starting a camera; storing the first audio frame into a first audio buffer queue; and encoding, by the first audio encoder, the first audio frame to obtain the first encoded audio frame, and then storing the first encoded audio frame into a second audio buffer queue. In this way, the one-off mixing consumption problem can be resolved by using the second video buffer queue, so that input data can also be provided for a mixer that is subsequently started, to ensure implementability of one-way encoding and multi-way mixing. Similarly, an original problem limit is also broken, encoding efficiency is improved, and processing resources and storage resources are saved, to ensure program security, and reduce problems such as freezing.

In a possible implementation, the method further includes: creating the first video buffer queue, creating the second video buffer queue, creating the first audio buffer queue, and creating the second audio buffer queue in response to an operation performed on a dynamic mode control. In this way, in a stream configuration process, the electronic device can store data queues before and after encoding, to ensure that the mixer can obtain encoded images in a time period before shooting.

In a possible implementation, the first video buffer queue is stored in a hardware abstraction layer HAL of the electronic device, and the second video buffer queue, the first audio buffer queue, and the second audio buffer queue are stored at an application layer of the electronic device. In this way, because an application memory is limited, a YUV image is buffered in the HAL, to reduce pressure of the application layer, and the YUV image has better quality, to ensure a better encoding effect, and also a better dynamic image effect.

In a possible implementation, the method further includes: determining a first time based on a shooting time of the first operation and specific video duration by using a first mixer; when a first time difference between a timestamp of an ith frame of encoded image and a timestamp of a 1st frame of encoded image is less than or equal to the first time, mixing the ith frame of encoded image to the first dynamic image by using the first mixer, where the ith frame of encoded image is an encoded video frame in the second video buffer queue; and when the first time difference between the timestamp of the ith frame of encoded image and the timestamp of the 1st frame of encoded image is greater than the first time, controlling the first mixer to end mixing. In this way, the mixer can determine when to end mixing, to ensure validity of a video mixed by the mixer.

The shooting time of the first operation may be Y. For the first time, refer to related descriptions of S625 and S825. Details are not described herein.

In a possible implementation, the method further includes: determining a second time based on the shooting time and the specific video duration by using the first mixer; and selecting, by using the first mixer from the second video buffer queue, a frame of encoded video frame whose timestamp is closest to the second time as the 1st frame of encoded image. In this way, the electronic device can ensure that duration of the dynamic image is satisfied, to ensure a shooting effect.

The shooting time of the first operation may be Y. For the second time, refer to related descriptions of S625 and S825. Details are not described herein. The 1st frame of encoded image is a first frame of encoded image mixed by the mixer 1.

In a possible implementation, the method further includes: creating the first video encoder and a first audio encoder in response to an operation performed on a dynamic mode control.

In a possible implementation, the method further includes: releasing the first video encoder and the first audio encoder in response to an operation of exiting from a camera.

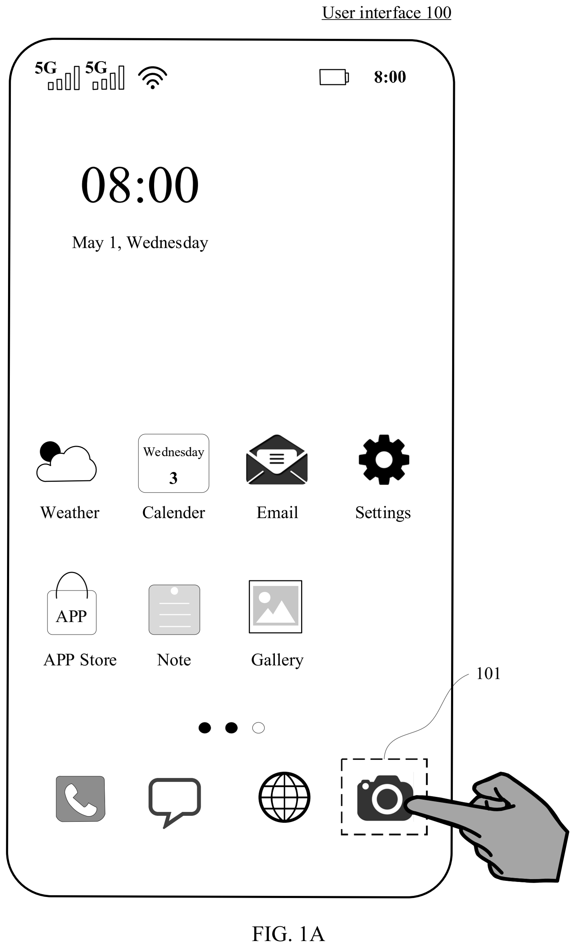

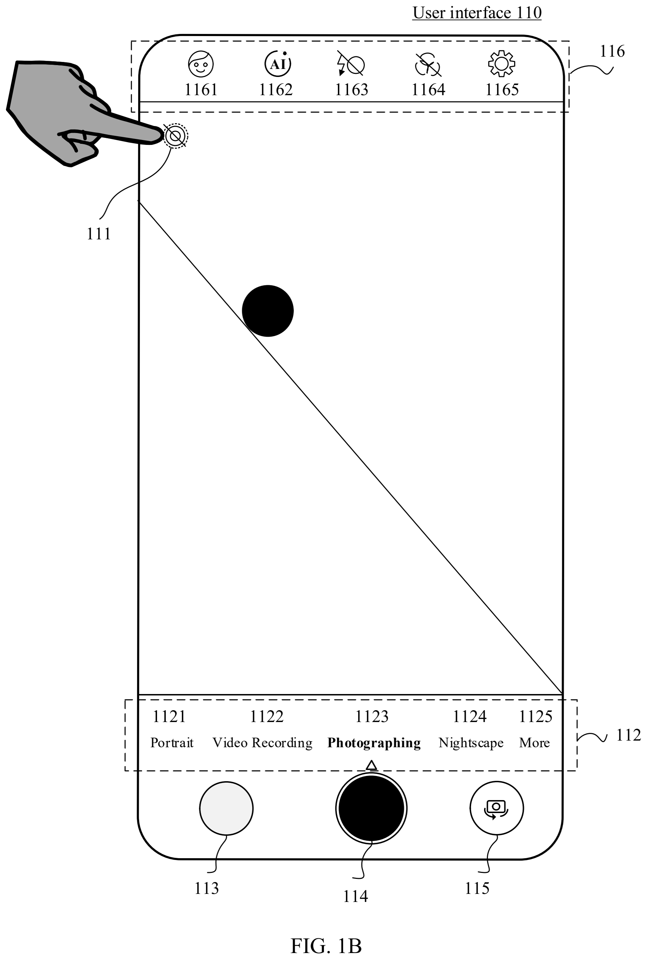

In a possible implementation, the method further includes: displaying a first user interface in response to an operation of starting a camera, where the first user interface displays an image obtained by the camera, and the first user interface includes a dynamic mode control in a disabled state; and switching, by the dynamic mode control, to an enabled state in response to an operation performed on the dynamic mode control. For the operation of starting the camera, refer to FIG. 1A. For the first user interface and the user, refer to FIG. 1B. The dynamic mode control is the dynamic mode switch 111 in FIG. 1B. For switching the dynamic mode control to the enabled state, refer to FIG. 1C.

According to a second aspect, an embodiment of this application provides an electronic device, including: a touchscreen, a camera, one or more processors, and one or more memories. The one or more processors are coupled to the touchscreen, the camera, and the one or more memories. The one or more memories are configured to store computer program code. The computer program code includes computer instructions. When the one or more processors execute the computer instructions, the electronic device is enabled to perform:
starting a first video encoder in response to a first operation performed on a shooting control; encoding a first video frame by using the first video encoder; in a process in which the first video encoder encodes the first video frame, encoding a second video frame by using the first video encoder in response to a second operation performed on the shooting control; generating a first dynamic image, where the first dynamic image corresponds to the first video frame; generating a second dynamic image, where the second dynamic image corresponds to the second video frame; and controlling the first video encoder to stop encoding.

The first video frame and the second video frame are both to-be-encoded images. The first video frame and the second video frame may include a plurality of frames of to-be-encoded images. To-be-encoded images in the first video frame and the second video frame are not repetitive. The first dynamic image includes all to-be-encoded images of the first video frame, and the first dynamic image further includes some second video frames. The second dynamic image includes all second video frames, and the second dynamic image may further include some first video frames. To be specific, it may be understood that, to-be-encoded images used for generating the first dynamic image and the second dynamic image may be partially repetitive. For the first operation, refer to related descriptions of FIG. 1C and S801. Details are not described herein. For the second operation, refer to related operations of FIG. 1F and S834. Details are not described herein. The first video encoder may be the video encoder in FIG. 6A(1) and FIG. 6A(2) to FIG. 6D and FIG. 8A(1) and FIG. 8A(2) to FIG. 8D.

In this embodiment of this application, after continuously receiving a plurality of dynamic image shooting requests, the electronic device may keep one group of encoders not to stop encoding, and to provide encoding for a plurality of mixers. After videos of all dynamic images are synthesized, encoding is stopped. This can implement a scenario in which the user continuously shoots dynamic images, thereby improving shooting experience of the user.

In a possible implementation, after controlling the first video encoder to stop encoding, the electronic device further performs: starting a second video encoder in response to a third operation performed on the shooting control; encoding a third video frame by using the second video encoder; generating a third dynamic image, where the third dynamic image corresponds to the third video frame; controlling the second video encoder to stop encoding after the third dynamic image is generated; starting a third video encoder in response to a fourth operation performed on the shooting control; encoding a fourth video frame by using the third video encoder; and generating a fourth dynamic image, where the fourth dynamic image corresponds to the fourth video frame. In this way, the electronic device can also implement a dynamic image shooting process during single shooting of the user.

The third video frame and the fourth video frame may also be to-be-encoded images. The third video frame and the fourth video frame may both include a plurality of frames of to-be-encoded images. There is no same image frame between every two of the first video frame, the second video frame, the third video frame, and the fourth video frame.

In a possible implementation, before controlling the first video encoder to stop encoding, the electronic device further performs: adding a first shooting task to a task list in response to the first operation; adding a second shooting task to the task list in response to the second operation; when the first dynamic image is generated, clearing the first shooting task; controlling the first encoder to continue encoding when there is a task in the task list; when the second dynamic image is generated, clearing the second shooting task; and controlling the first video encoder to stop encoding when there is no task in the task list. In this way, stopping of the encoder needs to be determined based on a task condition in the task list, to ensure that encoding is not stopped when there is a shooting request, and an encoded image is provided for a mixer, to implement a burst shooting process of dynamic images.

For the task list, refer to cases of FIG. 9A and FIG. 9B, and descriptions of related steps S649, S877, and S880. Details are not described herein. Generating the first dynamic image may be a process of receiving a first video mixing complete notification in S876. Similarly, generating the second dynamic image may be a process of receiving a second video mixing complete notification in S879.

In a possible implementation, before controlling the second video encoder to stop encoding, the electronic device further performs: adding a third shooting task to a task list in response to the third operation; clearing the third shooting task when the third dynamic image is generated; and controlling the third video encoder to stop encoding when there is no task in the task list. In this way, stopping of the encoder needs to be determined based on a task condition in the task list, to ensure that encoding is not stopped when there is a shooting request, and an encoded image is provided for a mixer, to implement a burst shooting process of dynamic images.

For the foregoing description, refer to the description of S649. Generating the third dynamic image may be a process of receiving the first video mixing complete notification in S648.

In a possible implementation, after generating the first dynamic image, the electronic device further performs: displaying a second user interface in response to an operation of starting a gallery, where the second user interface includes a first thumbnail of a first still image of the first dynamic image; displaying a third user interface in response to an operation performed on the first thumbnail, where the third user interface includes the first still image; and playing, by the electronic device, the first dynamic image in response to an operation performed on the first still image. In this way, the electronic device completes shooting, and the user may tap to play a dynamic image.

For the operation of starting the gallery, refer to the description of FIG. 1H; for the second user interface, refer to FIG. 1I or FIG. 1J; and for the second user interface, refer to the description of (a) in FIG. 1E. Details are not described herein.

In a possible implementation, the first dynamic image includes the first still image and a first video, the first video includes M frames of still images, and M is an integer greater than 1.

There is a correspondence between the M frames of still images and the video frames included in the first dynamic image.

In a possible implementation, the electronic device further performs: starting a first audio encoder in response to the first operation; encoding a first audio frame by using the first audio encoder, where the first dynamic image corresponds to the first audio frame; and in a process in which the first audio encoder encodes the first audio frame, encoding a second audio frame by using the first audio encoder in response to the second operation, where the second dynamic image corresponds to the second audio frame. In this way, when receiving a new shooting request, the audio encoder keeps encoding, to ensure that a plurality of times of shooting is completed by controlling one way of encoding, thereby ensuring that a plurality of times of burst shooting is implemented, and improving user experience.

The first audio frame and the second audio frame are both to-be-encoded audio. The first audio frame and the second audio frame may both include a plurality of frames of to-be-encoded audio. Audio in the first audio frame and the second audio frame is not repetitive. The first dynamic image includes all audio in the first audio frame, and some audio in the second audio frame. The second dynamic image includes all audio in the second audio frame, and some audio in the first audio frame.

In a possible implementation, the generating a first dynamic image specifically includes: mixing a first encoded video frame and a first audio code video frame by using a first mixer to generate the first dynamic image, where the first encoded video frame is obtained after the first video encoder encodes the first video frame, and the first encoded audio frame is obtained after the first audio encoder encodes the first audio frame; and the generating a second dynamic image includes: mixing a second encoded video frame and a second audio code video frame by using a second mixer to generate the second dynamic image, where the second encoded video frame is obtained after the first video encoder encodes the second video frame, and the second encoded audio frame is obtained after the second audio encoder encodes the second audio frame. In this way, the electronic device can start two mixers, to consume encoding results of one way of encoders. In this way, when dynamic image burst shooting is implemented, a quantity of started encoders is reduced, processing efficiency is improved, and processing resources are saved, thereby preventing a freezing case caused by dynamic image burst shooting.

The first encoded video frame and the second encoded video frame may both include a plurality of frames of encoded images. The first encoded video frame and the second encoded video frame may include some repetitive encoded images. The first dynamic image may be a first file of this application, and the second dynamic image may be a second file of this application.

In a possible implementation, after generating the first dynamic image and the second dynamic image, the electronic device further performs: controlling the first video encoder to stop encoding, and controlling the first audio encoder to stop encoding. In this way, after obtaining two dynamic images obtained through burst shooting, the electronic device may determine to end encoding, to ensure that encoding can be provided for two mixers at the same time, thereby ensuring implementability of burst shooting.

In a possible implementation, the electronic device further performs: obtaining the first video frame by using a camera in response to an operation of starting the camera; storing the first video frame into a first video buffer queue; and encoding, by the first video encoder, the first video frame to obtain the first encoded video frame, and then storing the first encoded video frame into a second video buffer queue. In this way, the one-off mixing consumption problem can be resolved by using the second video buffer queue, so that input data can also be provided for a mixer that is subsequently started, to ensure implementability of one-way encoding and multi-way mixing. Similarly, an original problem limit is also broken, encoding efficiency is improved, and processing resources and storage resources are saved, to ensure program security, and reduce problems such as freezing.

In a possible implementation, the electronic device further performs: obtaining the first audio frame by using a microphone in response to an operation of starting a camera; storing the first audio frame into a first audio buffer queue; and encoding, by the first audio encoder, the first audio frame to obtain the first encoded audio frame, and then storing the first encoded audio frame into a second audio buffer queue. In this way, the one-off mixing consumption problem can be resolved by using the second video buffer queue, so that input data can also be provided for a mixer that is subsequently started, to ensure implementability of one-way encoding and multi-way mixing. Similarly, an original problem limit is also broken, encoding efficiency is improved, and processing resources and storage resources are saved, to ensure program security, and reduce problems such as freezing.

In a possible implementation, the electronic device further performs: creating the first video buffer queue, creating the second video buffer queue, creating the first audio buffer queue, and creating the second audio buffer queue in response to an operation performed on a dynamic mode control. In this way, in a stream configuration process, the electronic device can store data queues before and after encoding, to ensure that the mixer can obtain encoded images in a time period before shooting.

In a possible implementation, the first video buffer queue is stored in a hardware abstraction layer HAL of the electronic device, and the second video buffer queue, the first audio buffer queue, and the second audio buffer queue are stored at an application layer of the electronic device. In this way, because an application memory is limited, a YUV image is buffered in the HAL, to reduce pressure of the application layer, and the YUV image has better quality, to ensure a better encoding effect, and also a better dynamic image effect.

In a possible implementation, the electronic device further performs: determining a first time based on a shooting time of the first operation and specific video duration by using a first mixer; when a first time difference between a timestamp of an ith frame of encoded image and a timestamp of a 1st frame of encoded image is less than or equal to the first time, mixing the ith frame of encoded image to the first dynamic image by using the first mixer, where the ith frame of encoded image is an encoded video frame in the second video buffer queue; and when the first time difference between the timestamp of the ith frame of encoded image and the timestamp of the 1st frame of encoded image is greater than the first time, controlling the first mixer to end mixing. In this way, the mixer can determine when to end mixing, to ensure validity of a video mixed by the mixer.

The shooting time of the first operation may be Y. For the first time, refer to related descriptions of S625 and S825. Details are not described herein.

In a possible implementation, the electronic device further performs: determining a second time based on the shooting time and the specific video duration by controlling the first mixer; and selecting, by using the first mixer from the second video buffer queue, a frame of encoded video frame whose timestamp is closest to the second time as the 1st frame of encoded image. In this way, the electronic device can ensure that duration of the dynamic image is satisfied, to ensure a shooting effect.

The shooting time of the first operation may be Y. For the second time, refer to related descriptions of S625 and S825. Details are not described herein. The 1st frame of encoded image is a first frame of encoded image mixed by the mixer 1.

In a possible implementation, the electronic device further performs: creating the first video encoder and a first audio encoder in response to an operation performed on a dynamic mode control.

In a possible implementation, the electronic device further performs: releasing the first video encoder and the first audio encoder in response to an operation of exiting from a camera.

In a possible implementation, the electronic device further performs: displaying a first user interface in response to an operation of starting a camera, where the first user interface displays an image obtained by the camera, and the first user interface includes a dynamic mode control in a disabled state; and switching, by the dynamic mode control, to an enabled state in response to an operation performed on the dynamic mode control.

For the operation of starting the camera, refer to FIG. 1A. For the first user interface and the user, refer to FIG. 1B. The dynamic mode control is the dynamic mode switch 111 in FIG. 1B. For switching the dynamic mode control to the enabled state, refer to FIG. 1C.

According to a third aspect, an embodiment of this application provides a chip system. The chip system is used in an electronic device, and the chip system includes one or more processors. The processor is configured to invoke computer instructions to enable the electronic device to perform the shooting method according to the first aspect or any possible implementation of the first aspect.

According to a fourth aspect, an embodiment of this application provides a computer program product including instructions. When the computer program product is run on an electronic device, the electronic device is enabled to perform the shooting method according to the first aspect or any possible implementation of the first aspect.

According to a fifth aspect, an embodiment of this application provides a computer-readable storage medium including instructions. When the instructions are run on an electronic device, the electronic device is enabled to perform the shooting method according to the first aspect or any possible implementation of the first aspect.

### BRIEF DESCRIPTION OF DRAWINGS

FIG. 1A to FIG. 1J are a group of diagrams of shooting scenarios in a dynamic mode according to an embodiment of this application;
FIG. 2A to FIG. 2D are a group of diagrams of data structures of photos and videos in a burst shooting scenario according to an embodiment of this application;
FIG. 3 is a diagram of a hardware structure of an electronic device according to an embodiment of this application;
FIG. 4A is a diagram of software and hardware structures of an electronic device according to an embodiment of this application;
FIG. 4B is a diagram of software and hardware structures of another electronic device according to an embodiment of this application;
FIG. 5A, FIG. 5B, and FIG. 5C are a schematic flowchart of a video data processing method in a dynamic mode according to an embodiment of this application;
FIG. 6A(1) and FIG. 6A(2) to FIG. 6C(1) and FIG. 6C(2) are a group of schematic flowcharts of a video processing method in a dynamic mode according to an embodiment of this application;
FIG. 6D is a schematic flowchart of a method for stopping video encoding according to an embodiment of this application;
FIG. 7A is a diagram of a format structure of a first file according to an embodiment of this application;
FIG. 7B is a diagram of encapsulation time of audio data and video data of video data according to an embodiment of this application;
FIG. 8A(1) and FIG. 8A(2) to FIG. 8C(1), FIG. 8C(2), and FIG. 8C(3) are another group of schematic flowcharts of a video data processing method in a dynamic mode according to an embodiment of this application;
FIG. 8D is a schematic flowchart of another method for stopping video encoding according to an embodiment of this application;
FIG. 9A and FIG. 9B are a group of diagrams of a change of a task queue according to an embodiment of this application;
FIG. 10 is a diagram of mixed encoding of videos in dynamic images according to an embodiment of this application;
FIG. 11A to FIG. 11E are a group of diagrams of producing and consuming image frames in a second video buffer queue according to an embodiment of this application;
FIG. 12A(1) and FIG. 12A(2) are a schematic flowchart of a shooting exiting method according to an embodiment of this application; and
FIG. 12B is a schematic flowchart of another shooting exiting method according to an embodiment of this application.

### DESCRIPTION OF EMBODIMENTS

Terms used in the following embodiments of this application are merely intended to describe specific embodiments, but are not intended to limit this application. The singular expressions "one", "one type of', "the", "the foregoing", "that", and "this" used in this specification and the appended claims of this application are also intended to include plural expressions, unless otherwise specified in the context clearly. It should also be understood that, the term "and/or" used in this application indicates and includes any or all possible combinations of one or more listed items.

In an embodiment provided in this application, a terminal device (denoted as an electronic device, and the electronic device is uniformly used subsequently to refer to the foregoing terminal device) that has shooting and image processing functions such as a mobile phone or a tablet computer may be used in a shooting scenario for a user to shoot a dynamic image, that is, a photo with a dynamic effect. The dynamic image (video data within a short time) may include a video and images within the short time. The electronic device may further store a dynamic image, and the user may select an image from a plurality of frames of dynamic images. The video included in the dynamic image is formed by mixing images acquired by a camera and audio acquired by a microphone.

The dynamic image is an image with a dynamic effect. The dynamic effect may be reflected as switching display of a plurality of still images according to a preset rule. To be specific, video playback may generate the dynamic image. The still image is an image with a still and unchanged picture. In embodiments of this application, the dynamic image may include a still image (that is, a cover image) and a video clip (for example, an MP4 file). For example, when displaying the dynamic image, the electronic device may display a cover of the dynamic image when not receiving a user operation, and may display a video corresponding to the dynamic image when receiving a user operation (for example, a long press operation). The cover image may be referred to as a cover frame. For example, content of the cover image may be the same as content of a frame of image in the video, and a resolution of the cover image is different from a resolution of the frame of image.

In embodiments of this application, the electronic device may be not limited to a mobile phone and a tablet computer, and the electronic device may alternatively be a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an onboard device, a smart home device, and/or a smart city device. A specific type of the terminal is not specifically limited in embodiments of this application.

The following describes an application scenario in embodiments of this application.

In daily life, people usually perform shooting by using an electronic device such as a smartphone or a tablet computer. FIG. 1A to FIG. 1J are examples of diagrams of dynamic image shooting scenarios according to this application. The following describes a process in which the electronic device performs dynamic shooting in a preview state after entering a dynamic mode.

FIG. 1A shows an example of a diagram of a user interface of an electronic device. A user starts the electronic device of the user, so that a display of the electronic device displays a desktop of the electronic device, namely, a user interface 100. As shown in FIG. 1A, the user interface 100 may include an icon of at least one application (for example, weather, calendar, email, settings, app store, note, gallery, phone, messages, browser, and camera (a camera control 101)). The icon of the application and the location of the name of the corresponding application may be adjusted based on a user preference. This is not limited in this application.

It should be noted that the diagram of the interface of the electronic device shown in FIG. 1A is an example in embodiments of this application, and the diagram of the interface of the electronic device may alternatively be in another style. This is not limited in this application.

In FIG. 1A, the user may tap the camera control 101 in the user interface 100. After receiving an operation performed on the camera control 101, the electronic device may display a user interface 110 shown in FIG. 1B. FIG. 1B shows an example of a shooting preview interface according to an embodiment of this application. As shown in FIG. 1B, the user performs shooting by using the electronic device. To be specific, the electronic device is currently in a photographing mode. In the user interface 110, the electronic device may display specific controls or switches of FIG. 1B. The following provides specific descriptions:

A shooting mode menu 112 may include options of a plurality of camera modes such as a portrait 1121, video recording 1122, photographing 1123, nightscape 1124, and more 1125. Different camera modes may implement different shooting functions. A camera mode pointed by a "triangle" in the shooting mode menu 112 indicates an initial camera mode or a camera mode selected by the user. For example, as shown in FIG. 1B, the "triangle" points to "photographing", indicating that the camera is currently in a photographing mode.

A gallery 113 is used by the user to view shot pictures and videos.

A shooting control 114 is configured to enable the electronic device to shoot an image or record a video in response to a user operation.

A camera switching control 115 is configured to switch, between a front-facing camera and a rear-facing camera, a camera that acquires an image.

A shooting function switch 116 may include a beauty switch 1161, an AI mode switch 1162, a flash switch 1163, a filter switch 1164, and a setting control 1165.

The beauty switch 1161 is configured to enable or disable a beauty function.

The AI mode switch 1162 is configured to enable or disable an automatic mode recognition function.

The flash switch 1163 is configured to enable or disable a flash.

The filter switch 1164 is configured to enable or disable a filter.

The setting control 1165 is configured to set various parameters during image acquisition.

In addition, the user interface 110 may further display a dynamic mode switch 111, configured to enable or disable a dynamic mode. When the dynamic mode is in an enabled state, the user can shoot a dynamic image by tapping the shooting control 114.

After the user enables the camera and enters a shooting preview interface, the dynamic mode may be in an enabled state or a disabled state.

Optionally, if the dynamic mode is in the disabled state when the camera is enabled, the user taps to enable the dynamic mode. In FIG. 1A, in the user interface 100, the user taps the camera control 101. In response to an operation of enabling the camera, the electronic device displays FIG. 1B. In the user interface 110, the dynamic mode switch 111 is in a disabled state. The user may tap the dynamic mode switch 111. In response to an operation of enabling the dynamic mode by the electronic device, the electronic device may display a user interface 120. FIG. 1C is a diagram of a user interface for shooting when a dynamic mode is enabled according to an embodiment of this application. As shown in FIG. 1C, in the user interface 120, when the user taps the shooting control, the electronic device may shoot a dynamic image. A dynamic mode switch 121 is in the enabled state.

Optionally, when the camera is enabled, the dynamic mode is in the enabled state. In FIG. 1A, in the user interface 100, the user taps the camera control 101. In response to an operation of enabling the camera, the electronic device displays FIG. 1C. In the user interface 120, the dynamic mode switch 111 is in the enabled state. The user may tap the shooting control 114, and the electronic device may shoot a dynamic image.

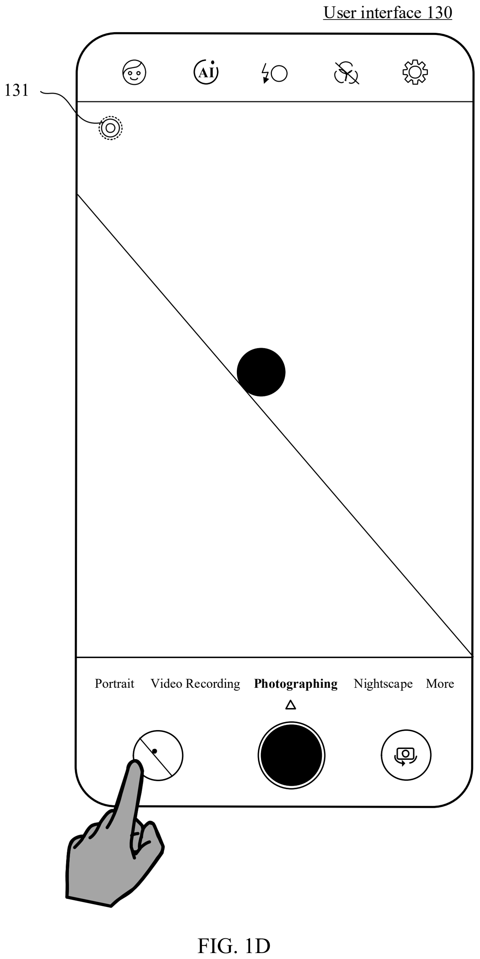

The user may tap to view the dynamic image stored in the gallery. For example, if the user has shot a dynamic image, as shown in FIG. 1D, in a user interface 130, the user may tap the gallery control. In response to an operation of enabling the gallery, the electronic device may display a most recent dynamic image. As shown in (a) in FIG. 1E, in a user interface 140, the electronic device may display a dynamic image that is shot most recently. When the user long presses a preview area 141, the electronic device may display the dynamic image. The user may process the current dynamic image. The user interface 140 may display a dynamic image processing function 142. The dynamic image processing function 142 may include share, favorites, edit, delete, more, and the like. The user interface 140 may further include an identifier 143A and a parameter 143B. The identifier 143A may indicate that an image displayed on the current interface is a dynamic image. The parameter 143B may be used to display information such as a shooting parameter of the image displayed on the current interface. The foregoing is merely one operation manner of viewing the dynamic image. The user may alternatively view the dynamic image by enabling the gallery on the desktop. This is not limited in this application.

It should be noted that display of a pattern and a location of the foregoing dynamic mode switch is merely an example for description. This is not limited in this application. In addition, a display interface of a shot dynamic image displayed by the electronic device in (a) in FIG. 1E is also an example of display. This is not limited in this application.

When the electronic device displays (a) in FIG. 1E, the electronic device may tap the parameter control 143B. In response to the foregoing tapping operation, the electronic device may display detailed parameter information of a picture. As shown in (b) in FIG. 1E, in comparison with the user interface 140, an information box 1451 is added to a user interface 145. The information box 1451 is configured to display parameters of an HDR image (the preview area 141). A name of the image is IMG_20230527_111422, a resolution of the image displayed in the preview area 141 is 3072×4097, a data size of the image displayed in the preview area 141 is 13.53 MB, and a storage path of a file of the foregoing image is internal storage/DCIM/Camera/IMG_20230501_111422.jpg. Information in the information box indicates that the foregoing image is an image in a jpg format.

When the electronic device displays (a) in FIG. 1E, the electronic device may tap an editing control 142a. In response to an operation of tapping the editing control 142a, the electronic device may display an image encoding interface. As shown in (c) in FIG. 1E, in a user interface 146 (the image encoding interface), the user may perform an editing operation on the shot dynamic image. The user interface 146 may include a return control 1461, a picture display window 1462, a set-to-cover control 1463, a save-as-photo control 1464, a video image frame preview window 1465, and an image editing bar 1466. The video image frame preview window 1465 may include thumbnails of a plurality of successive frames of images in a video of the dynamic image. The picture display window 1462 displays an image corresponding to a thumbnail 1465a. The thumbnail 1465a may correspond to a cover frame of the current dynamic image. The image editing bar 1466 may include functions such as dynamic photo, cropping, graffitiing, and filtering. In the user interface 146, the dynamic photo is in an enabled state. The user may swipe the video image frame preview window 1465 leftward and rightward to select a frame. An image displayed in the picture display window 1462 also correspondingly changes.

When the user continuously shoots a plurality of dynamic images, if the user taps the shooting control 114 once within a short time after tapping the shooting control once, the electronic device cannot obtain a dynamic image in response to the later shooting operation. In this case, if the gallery is enabled, the electronic device stores only the dynamic image shot at the earlier time.

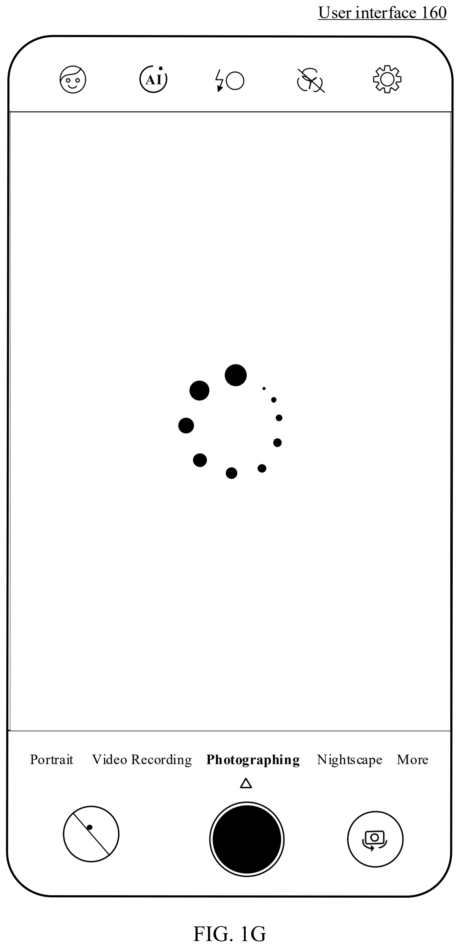

For example, as shown in FIG. 1C, the user immediately taps the shooting control 114 for shooting for the second time after tapping the shooting control 114 for the first time (assuming a time difference between the first shooting and the second shooting is 0.7s). As shown in FIG. 1F, in a user interface 150, the second taps the shooting control 114 for the second time. The electronic device has not completed in processing the dynamic image shot through first tapping. Therefore, when processing the dynamic image shot through first tapping, if the electronic device receives second tapping for shooting, the electronic device has no time to process the second dynamic image, and therefore cannot shoot the second dynamic image. The electronic device may display a preview image for a failure to respond. As shown in FIG. 1G, in response to the operation of second tapping to shoot, the electronic device cannot process the dynamic image shot through second tapping, and a user interface 160 may display a buffer icon on a preview picture.

In the foregoing process, because the electronic device cannot respond to a request for second tapping to shoot, the electronic device cannot obtain two dynamic images. As shown in FIG. 1H, after the forgoing two shootings (no shooting is performed subsequently), in a user interface 170, the user may tap a gallery control 171 (for specific descriptions of FIG. 1H, refer to FIG. 1A, and details are not described herein). In response to the operation of enabling the gallery, the electronic device may display a user interface 180. As shown in FIG. 1I, the electronic device stores 100 photos and 10 videos in the gallery, including a dynamic image 181 that has just been obtained by tapping the shooting control for the first time. The dynamic image shot by tapping the shooting control for the second time is not obtained (stored) in the gallery. In this way, the electronic device cannot shoot the dynamic image in response to the second shooting operation of the user, resulting in poor dynamic image shooting experience of the user.

For the forgoing case in which dynamic images cannot be continuously shot, in embodiments of this application, also for the two shootings in FIG. 1C and FIG. 1F, the electronic device does not display a load and buffer icon for the second tapping to shoot, and still displays a normal preview picture (as shown in FIG. 1F). After the foregoing two shootings, the electronic device may also enable the gallery. As shown in FIG. 1J, a user interface 190 includes two dynamic images: a dynamic image 191A and a dynamic image 191B. The dynamic image 191A is shot through first tapping, and the dynamic image 191B is shot through second tapping. In this way, the electronic device can respond to the second successive shooting of the user, to obtain the dynamic image, thereby improving dynamic image shooting experience of the user.

In the foregoing two shooting processes, the second shooting is performed after the first shooting. In a preview picture, a small ball slides down from a slope with time. Therefore, the small ball in the dynamic image 191A is located at an upper location of the slope than the small ball in the dynamic image 191B.

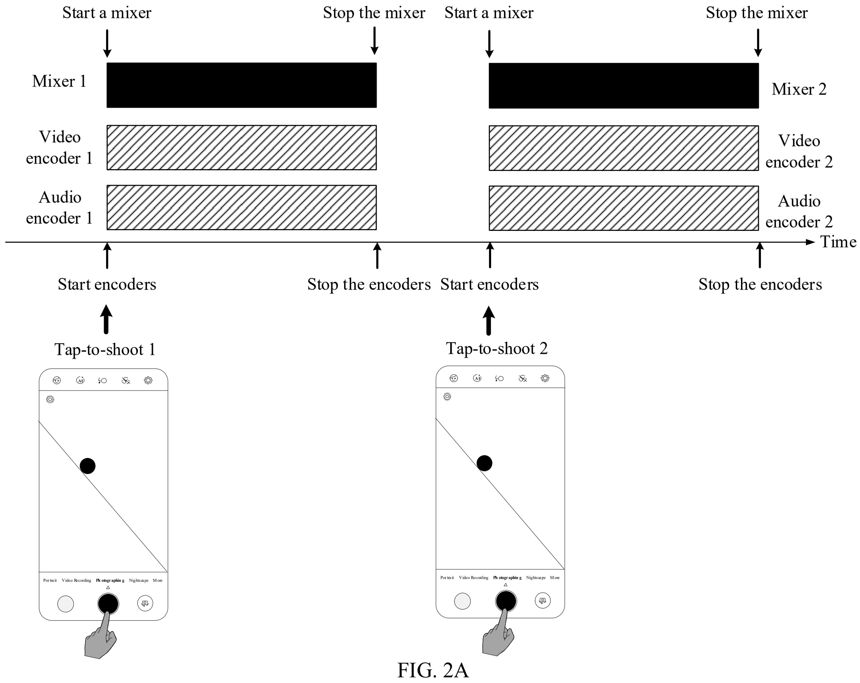

The electronic device can complete shooting a dynamic image upon single tapping of the user. As shown in FIG. 2A, after the user taps to shoot a dynamic image, in response to a tap-to-shoot 1 operation of the user (as shown in FIG. 1C), the electronic device may need to generate a video in the dynamic image. To be specific, the electronic device starts a video encoder, an audio encoder, and a mixer. The video encoder, the audio encoder, and the mixer may be started one after another in response to the tap-to-shoot 1 operation, and may not be started simultaneously. The video encoder and the audio encoder respectively encode images and audio. The mixer mixes images and audio on which encoding is performed, to obtain the video in the dynamic image. When the video is obtained, the video encoder, the audio encoder, and the mixer may be stopped. For a case of shooting a dynamic image through single tapping, the video encoder and the audio encoder provide encoding processing of only one video. Therefore, the encoding process can be implemented. For a case of tapping to shoot dynamic images for a plurality of discontinuous times, as shown in FIG. 2A, a first group of encoders (an audio encoder 1 and a video encoder 1) and a mixer 1 are created. The electronic device may start the group of encoders (the audio encoder 1 and the video encoder 1) and the mixer in response to the tap-to-shoot 1 (FIG. 1C) of the user. After a dynamic image is obtained, the audio encoder 1, the video encoder 1, and the mixer 1 are stopped, and are released. Then, the user may tap (FIG. 1C) for another time. In response to tap-to-shoot 2, the electronic device creates and starts an audio encoder 2, a video encoder 2, and a mixer 2. After the second dynamic image is obtained, the audio encoder 2, the video encoder 2, and the mixer 2 may be stopped and released.

Certainly, before starting encoders, the electronic device may create the encoders, and after stopping the encoders, the electronic device may clear (release) the encoders.

In a process in which the user shoots a photo, because an image is obtained at a time point (an image acquisition interval is extremely short), the user may perform a burst shooting operation, that is, taps the shooting control successively within a short time, and the electronic device may correspondingly obtain a plurality of frames of images. However, based on the habitual burst shooting manner of the user, in the dynamic (shooting) mode, burst shooting cannot be implemented when the user successively taps the shooting control.

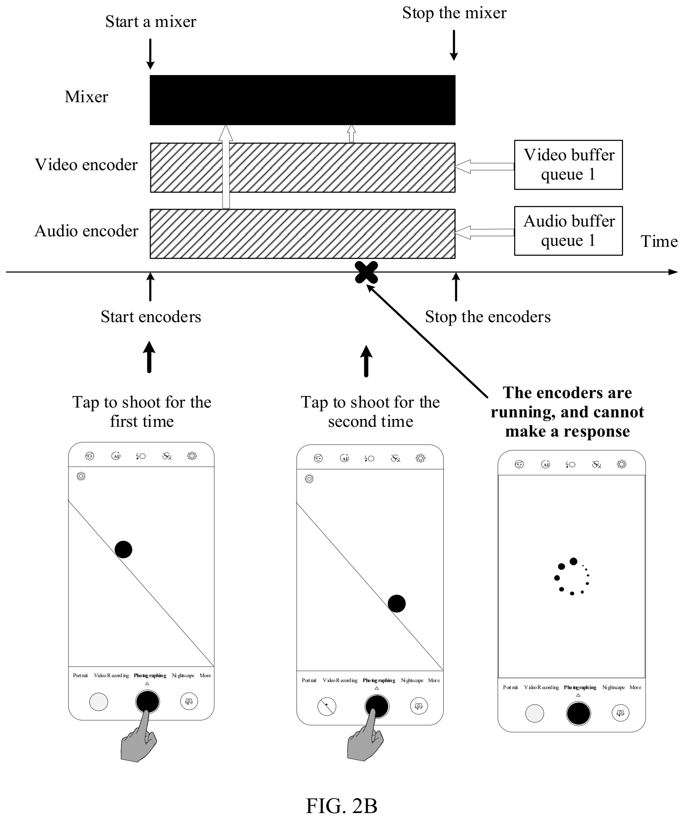

As shown in FIG. 2B, when the user taps to shoot for the first time (as shown in FIG. 1C), in response to the first tap-to-shoot operation, the electronic device may start the video encoder, the audio encoder, and the mixer, to perform a processing process of encoding and mixing. In the process of encoding and mixing, the user taps to shoot for the second time (as shown in FIG. 1F). In response to the second tap-to-shoot operation, the electronic device should start the video encoder, the audio encoder, and the mixer. For example, after the first tap-to-shoot, the video encoder and the audio encoder need to perform encoding processing within a time of 1.5s. The second tap-to-shoot is received at 0.7s after the first tap-to-shoot. In this case, the electronic device has not completed in processing the first tap-to-shoot, and has no time to process the second tap-to-shoot. Specifically, encoding of one video corresponds to one group of encoders. Only when encoding of a previous video (a video that needs to be encoded and that is shot through first tapping) is stopped, encoding of a next video (a video that needs to be encoded and that is shot through second tapping) can be started. For the case in FIG. 2B, this group of encoders are in a running process, and cannot respond to an encoding starting request for the second tap-to-shoot. As shown in an image in FIG. 2B, because no response can be made to the second tap-to-shoot, the electronic device may display a pattern of being loaded (as shown in FIG. 1G) on a shooting preview interface. The electronic device cannot obtain a dynamic image shot at this time.

In an encoding and mixing process of FIG. 2B, the video encoder obtains a to-be-encoded image from a video buffer queue 1 for encoding, the audio encoder obtains to-be-encoded audio from an audio buffer queue 1 for encoding, and the mixer directly mixes the encoded image and the encoded audio. In a mixing process, an image input to the mixer is immediately obtained from an output of the encoder. To be specific, after one frame of data is encoded, the mixer obtains one frame of data for mixing. The foregoing process means that one group of encoders provide an encoding result to only one mixer at a same moment. To be specific, one group of encoders and one mixer are bound in a complete set.

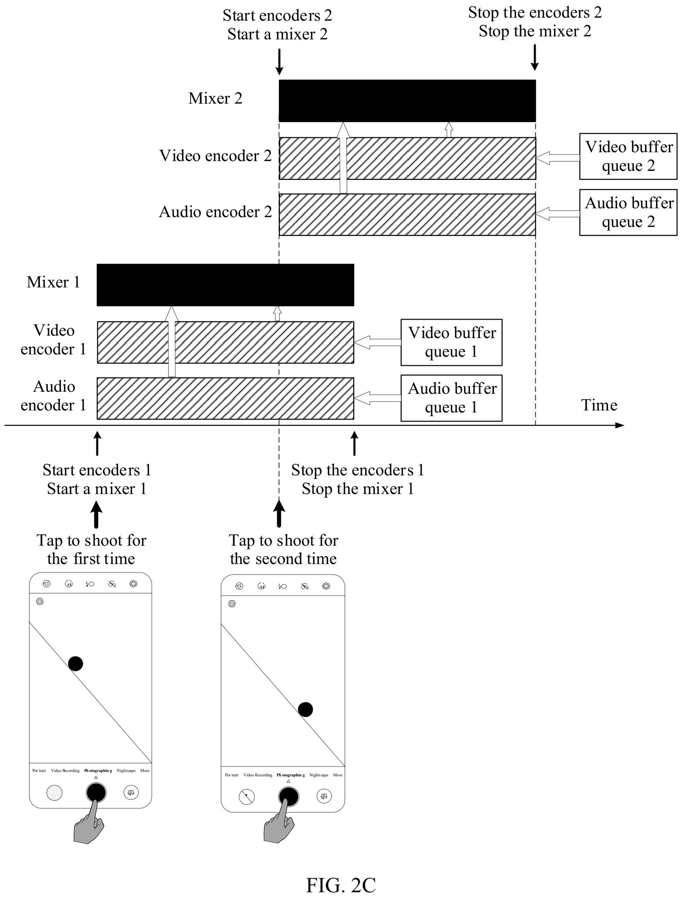

To resolve the foregoing problem, in FIG. 2C, in a scenario of continuously shooting dynamic images, once the electronic device receives a shooting request, the electronic device correspondingly starts one group of encoders and one mixer. In comparison with the solution of FIG. 2B, in response to the second tap-to-shoot, the electronic device may start the video encoder 2, the audio encoder 2, and the mixer 2 on the basis that the video encoder 1, the audio encoder 1, and the mixer 1 have been started. In the foregoing process, the electronic device needs to start a plurality of (two, three, or even more) sets of encoders and mixers in a same time period. This is a tremendous test for processing resources of the electronic device, and a device freezing case easily occurs. Further, in FIG. 2C, the electronic device also has four buffer queues simultaneously, namely, the video buffer queue 1, the audio buffer queue 1, a video buffer queue 2, and a video buffer queue 2. This needs to occupy a large quantity of storage resources of the electronic device simultaneously. Shortage of storage resources also causes freezing, a slow response, and the like to the electronic device.

Considering resource scheduling and program security, the Android system has a limited quantity of encoders in service. Generally, the electronic device can start only one group of encoders. Therefore, none of the foregoing solutions can resolve the problem of dynamic video burst shooting.

For the foregoing problem, embodiments of this application provide a shooting method. After the dynamic mode is started, when the user taps to shoot a dynamic image for the first time, the audio encoder, the video encoder, and the mixer 1 are started. The audio encoder performs audio encoding, the video encoder performs image encoding, and the mixer 1 mixes encoded audio and encoded images. In the foregoing encoding and mixing process, the second taps to shoot a dynamic image for the second time, and the electronic device starts the mixer 2, which mixes encoded data of the audio encoder and the video encoder. The mixer 1 and the mixer 2 may reuse some encoding results for mixing. After mixing by the mixer 1 is completed, because encoding and mixing for the second tap-to-shoot are not completed, the audio encoder and the video encoder keep encoding, until the mixer 2 completes mixing. In this case, the audio encoder, the video encoder, and the mixer 2 may be stopped.

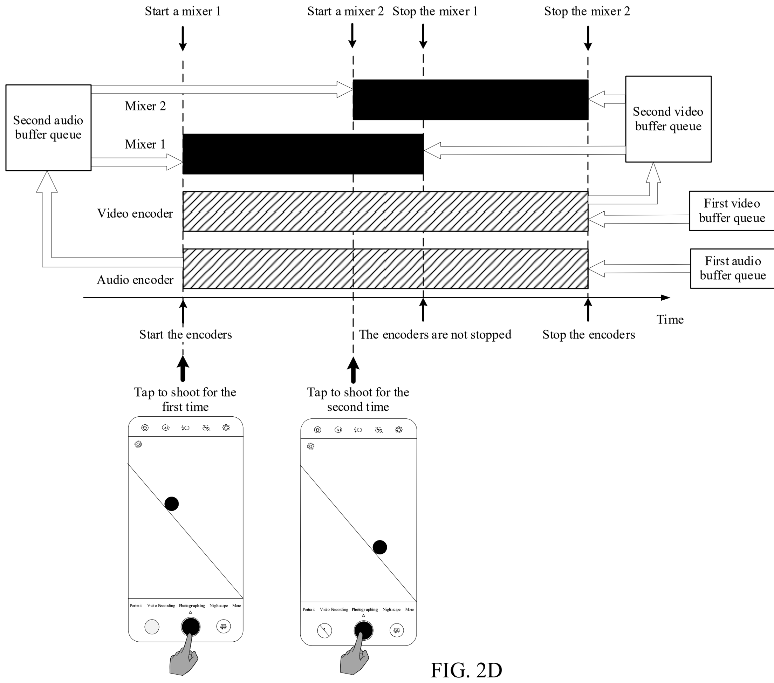

As shown in FIG. 2D, when the user taps the shooting control for the first time, in response to the first tap-to-shoot operation, the electronic device may start the video encoder, the audio encoder, and the mixer 1. The electronic device may start to perform encoding and mixing, to generate a first video. In an encoding process of the video encoder and the audio encoder, the user taps the shooting control for the second time, and in response to the second tap-to-shoot operation, the electronic device may start the mixer 2 to start mixing encoding results of the video encoder and the audio encoder that currently perform encoding. When mixing of the video of the dynamic image shot through first tapping is completed, the mixer 1 is stopped, but the encoders are not stopped. To be specific, the video encoder and the audio encoder continue encoding. The mixer 2 is stopped when mixing of the video shot through second tapping is completed. If the electronic device does not receive third tap-to-shoot in the encoding process, the electronic device may determine that video mixing tasks of all shooting requests are all completed, and the video encoder and the audio encoder are stopped. If the third tap-to-shoot is received, the video encoder and the audio encoder keep encoding, and a process thereof is consistent with that of the case of the second tap-to-shoot. Details are not described herein.

In the foregoing implementation, after continuously receiving a plurality of dynamic image shooting requests, the electronic device may keep one group of encoders not to stop encoding, and to provide encoding for a plurality of mixers. After videos of all dynamic images are synthesized, encoding is stopped. This can implement a scenario in which the user continuously shoots dynamic images, thereby improving shooting experience of the user.

Further, a plurality of frames of images obtained within a continuous time before and after the user taps to shoot need to be used to generate a dynamic image. For the case in which one group of encoders provide encoded data for only one mixer in FIG. 2C, for example, the video encoder 1 in FIG. 2C obtains data encoding from the video buffer queue 1, the audio encoder 1 buffer queue obtains data encoding from the audio buffer queue 1, and the video encoder 1 and the audio encoder 1 immediately send editing results to the mixer 1 for consumption and mixing. After the mixer 1 consumes the encoding results, the mixer 1 does not continue storing the frame of encoded data. This consumption process is one-off. Consequently, a plurality of mixers cannot be used to simultaneously use encoding results of a same group of encoders. For example, the user taps to shoot for the first time, and the corresponding mixer 1 consumes a first frame of encoding result, and clears data of the first frame of encoding result. The user taps to shoot for the second time, and the corresponding mixer 2 also needs to use the first frame of encoding result. Because the data has been cleared, the first frame of encoding result cannot be used. Therefore, one group of encoders cannot provide encoded data to a plurality of mixers. As shown in FIG. 2D, in embodiments of this application, the electronic device needs to add two buffer queues: the second video buffer queue and the second audio buffer queue. The encoding results of the video encoder and the audio encoder are respectively stored by using the second video buffer queue and the second audio buffer queue. The second video buffer queue and the second audio buffer queue store encoded data in a time period. In this way, for a time of a current shooting request, each mixer can distinguish, from the second video buffer queue and the second audio buffer queue, data that needs to be mixed by the mixer, so that a binding relationship between the mixer and one group of encoders can be removed. Therefore, a quantity of started encoders and processing processes can be reduced, to save processing resources, thereby ensuring program running security.

It should be noted that, the encoders and the mixers in FIG. 2A to FIG. 2D may be simultaneously started, or may be started one after another after tap-to-shoot. A specific sequence of starting the encoders and the mixers in response to a same shooting request is not limited in this application. Certainly, for a case in which the encoders and the mixers are stopped simultaneously, there may alternatively be a chronological order in an actual program execution process, and this is not limited. In the foregoing process, during dynamic image burst shooting, when receiving a new shooting request in the encoding process, the electronic device may use another mixer. In this case, the two ways of encoders may reuse encoding results of a same group of encoders (as inputs of the mixers). In this way, two videos can be obtained through separate mixing. After mixing of the video shot through previous tapping is completed, the mixer 1 may be stopped, and the encoders are not stopped. Encoded data of the group of encoders is consumed by the mixer 2, until mixing is completed. When mixing is completed, if all tap-to-shoot tasks are completed (there is no new tap-to-shoot), encoding is completed, and the encoders are stopped. In this way, it can be ensured that the encoders stop encoding only after mixing of videos of all dynamic images is completed, to ensure reliability of starting and stopping of the encoders, and provide reliable encoding results for dynamic image burst boosting, thereby ensuring implementability of dynamic image burst boosting. Further, the quantity of started encoders can also be reduced, freezing cases of the electronic device are reduced, and security of resources and programs is ensured.

In addition, during dynamic image burst shooting, the image needs to be encoded only once, and a video of each dynamic image is separately mixed, so that a dynamic image shot each time can be obtained, thereby ensuring implementability of a solution of continuously shooting a plurality of dynamic images. In addition, a quantity of times of encoding can also be reduced, to improve execution efficiency, thereby saving processing resources.

**The following describes an apparatus in embodiments of this application.**

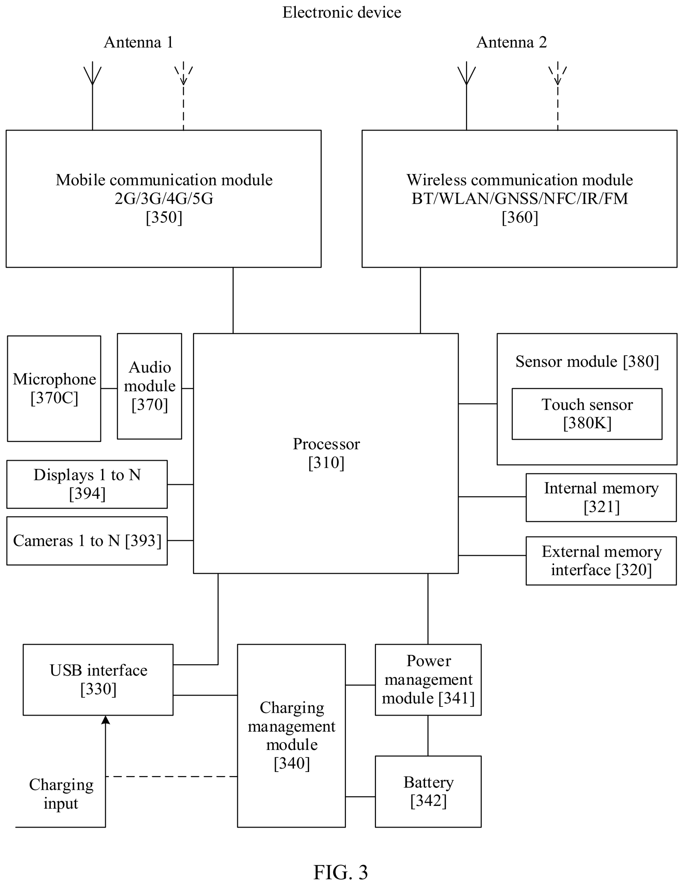

FIG. 3 is a diagram of a hardware structure of an electronic device according to an embodiment of this application.

The electronic device may include a processor 310, an external memory interface 320, an internal memory 321, a universal serial bus (Universal Serial Bus, USB) interface 330, a charging management module 340, a power management module 341, a battery 342, an antenna 1, an antenna 2, a mobile communication module 350, a wireless communication module 360, an audio module 370, a microphone 370C, a sensor module 380, a camera 393, a display 394, and the like. The sensor module 380 may include a touch sensor 380K.

It may be understood that the structure shown in this embodiment of the present invention does not constitute a specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware.

The processor 310 may include one or more processing units. For example, the processor 310 may include an application processor (Application Processor, AP), a modem processor, a Graphics Processing unit (graphics processing unit, GPU), an image signal processor (Image Signal Processor, ISP), a controller, a memory, a video codec, a digital signal processor (Digital Signal Processor, DSP), a baseband processor, a neural-network processing unit (neural-network processing unit, NPU), and/or the like. Different processing units may be independent components, or may be integrated in one or more processors. The controller may be a nerve center and a command center of the electronic device. The controller may generate an operation control signal based on instruction operation code and a timing signal, to control instruction fetching and instruction execution. A memory may be further disposed in the processor 310, to store instructions and data.

In embodiments provided in this application, the electronic device may perform the shooting method by using the processor 310.

The internal memory 321 may be configured to store computer executable program code, and the executable program code includes instructions. The processor 310 performs various functional applications and data processing of the electronic device by running the instructions stored in the internal memory 321.

The antenna 1 and the antenna 2 are configured to transmit and receive an electromagnetic wave signal. The mobile communication module 350 may provide a solution applied to the electronic device for wireless communication such as 2G/3G/4G/5G. The wireless communication module 360 may provide a solution for wireless communication including a wireless local area network (Wireless Local Area Networks, WLAN) (such as a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), a near field communication technology (Near Field Communication, NFC), an infrared technology (Infrared, IR) and the like to be applied to the electronic device.

The electronic device implements a display function by using the GPU, the display 394, the application processor, and the like. The GPU is an image processing microprocessor and is connected to the display 394 and the application processor. The GPU is configured to perform mathematical and geometric computing for graphics rendering. The processor 310 may include one or more GPUs, and the GPU executes a program instruction to generate or change display information.

The display 394 is configured to display an image, a video, and the like. The display 394 includes a display panel. The display panel may be a liquid crystal display (Liquid Crystal Display, LCD), an organic light-emitting diode (Organic Light-Emitting Diode, OLED), an active-matrix organic light emitting diode or an active-matrix organic light emitting diode (Active-Matrix Organic Light Emitting Diode, AMOLED), a flex light-emitting diode (Flex Light-Emitting Diode, FLED), a Mini LED, a Micro LED, a Micro-OLED, quantum dot light emitting diodes (Quantum Dot Light Emitting Diodes, QLED), or the like. In some embodiments, the electronic device may include 1 or N displays 394. N is a positive integer greater than 1.

The electronic device may implement an obtaining function by using the ISP, the camera 393, the video codec, the GPU, the display 394, the application processor, and the like.

The ISP is configured to process data fed back by the camera 393. For example, when photographing is performed, a shutter is opened, light is transmitted to a camera photosensitive element through a lens, an optical signal is converted into an electrical signal, and the camera photosensitive element transmits the electrical signal to the ISP for processing, and the electrical signal is converted into an image or a video visible to naked eyes. The ISP may further perform algorithm optimization on noise, brightness, and a color of the image. The ISP may further optimize parameters such as exposure and a color temperature of a shooting scenario. In some embodiments, the ISP may be disposed in the camera 393.

The camera 393 is configured to capture a still image or a video. An optical image is generated for an object through the lens and is projected to the photosensitive element. The photosensitive element may be a charge coupled device (charge coupled device, CCD) or a complementary metal-oxide-semiconductor (Complementary Metal-Oxide-Semiconductor, CMOS) phototransistor. The photosensitive element converts an optical signal into an electrical signal, and then transmits the electrical signal to the ISP to convert the electrical signal into a digital image or a video signal. The ISP outputs the digital image or the video signal to the DSP for processing. The DSP converts the digital image or the video signal into an image or a video signal in a standard format, for example, RGB or YUV. In some embodiments, the electronic device may include a plurality of cameras 393.

The video codec is configured to compress or decompress a digital video. The electronic device may support one or more video codecs. In this way, the electronic device may play or record videos in a plurality of encoding formats, for example, moving picture experts group (Moving Picture Experts Group, MPEG) 1, MPEG2, MPEG3, and MPEG4.

The touch sensor 380K is also referred to as a "touch panel". The touch sensor 380K may be disposed on the display 394. A touchscreen includes the touch sensor 380K and the display 394, and is also referred to as a "touch screen". The touch sensor 380K is configured to detect a touch operation acting on or near the touch sensor 380K. The touch sensor may transfer the detected touch operation to the application processor, to determine a touch event type. A visual output related to the touch operation may be provided by using the display 394. In some other embodiments, the touch sensor 380K may alternatively be disposed on a surface of the electronic device, and at a location different from that of the display 394.

It should be noted that for a function of another unmentioned module in the electronic device shown in FIG. 3, refer to a related technical document. This is not described in detail in this application.

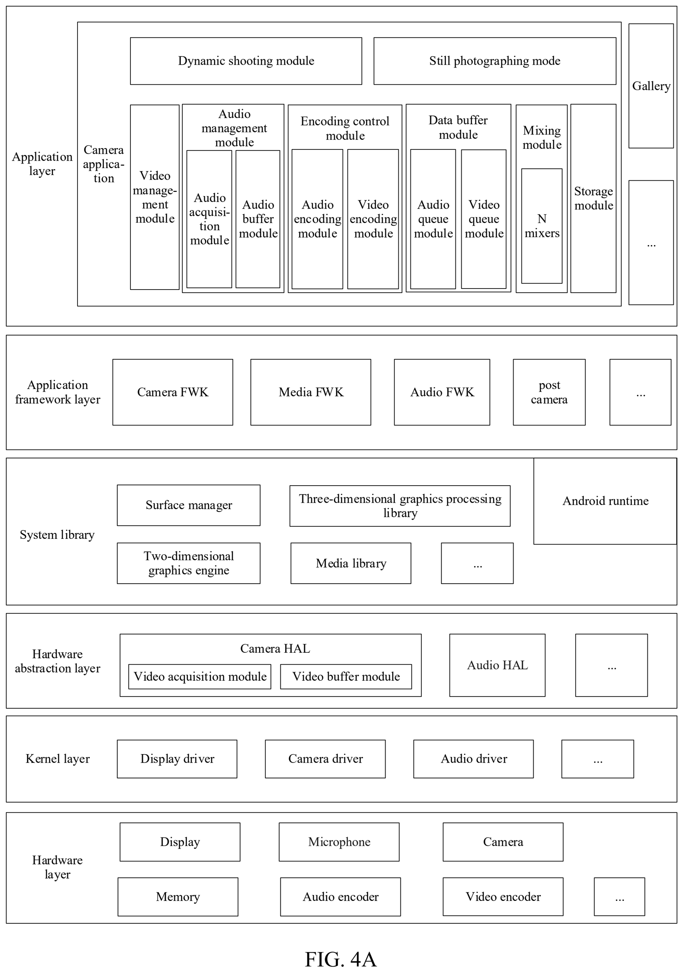

FIG. 4A is a diagram of software and hardware structures of an electronic device according to an embodiment of this application.

As shown in FIG. 4A, a software framework of the electronic device in this application may include an application layer, an application framework layer (framework, FWK), a system library, an Android Runtime, a hardware abstraction layer (HAL), and a kernel layer (kernel).

The application layer may include a series of application packages, such as camera, gallery, calendar, phone, map, navigation, WLAN, Bluetooth, music, video, and messages (which may also be referred to as applications, and some of the applications are not shown). The camera application may be configured to obtain an image and a video.

As shown in FIG. 4A, the camera application may include a dynamic photographing module, a still photographing module, a video management module, an audio management module, an encoding control module, a data buffer module, a mixing module, and a storage module.

Modes of the camera may include but are not limited to: a dynamic mode, a photographing mode, a video recording mode, a portrait mode, a nightscape mode, and the like. The modes may include the dynamic mode. In the dynamic mode, the user may shoot a dynamic image, and the dynamic image includes audio and a plurality of frames of images. The dynamic photographing module and the still photographing module may both be configured to: detect a user operation and determine a mode of the camera. In the dynamic mode, the dynamic photographing module may control encoding and mixing, and generate a video in the dynamic image. The still photographing module may obtain images in the dynamic image in the dynamic mode, for example, a cover frame in the dynamic image.

The video management module is configured to manage video data, for example, deliver video data configuration information. The video management module may include an area in which video data is buffered, for example, a Video-surface. The Video-surface may be stored in a video acquisition module in the camera HAL, and is provided for a video encoding module. The video management module may further configure an FWK path for dynamic image encoding, that is, a post camera.

The encoding control module may include the video encoding module and an audio encoding module. The video encoding module may control a video encoder to encode a to-be-encoded image. The audio encoding module controls an audio encoder to encode to-be-encoded audio in an audio buffer module.

The data buffer module includes an audio queue module and a video queue module. The data buffer module may buffer data encoded by the encoding control module. The audio queue module may buffer encoded audio output by the audio encoding module, and the video queue module may buffer encoded images output by the video encoding module.

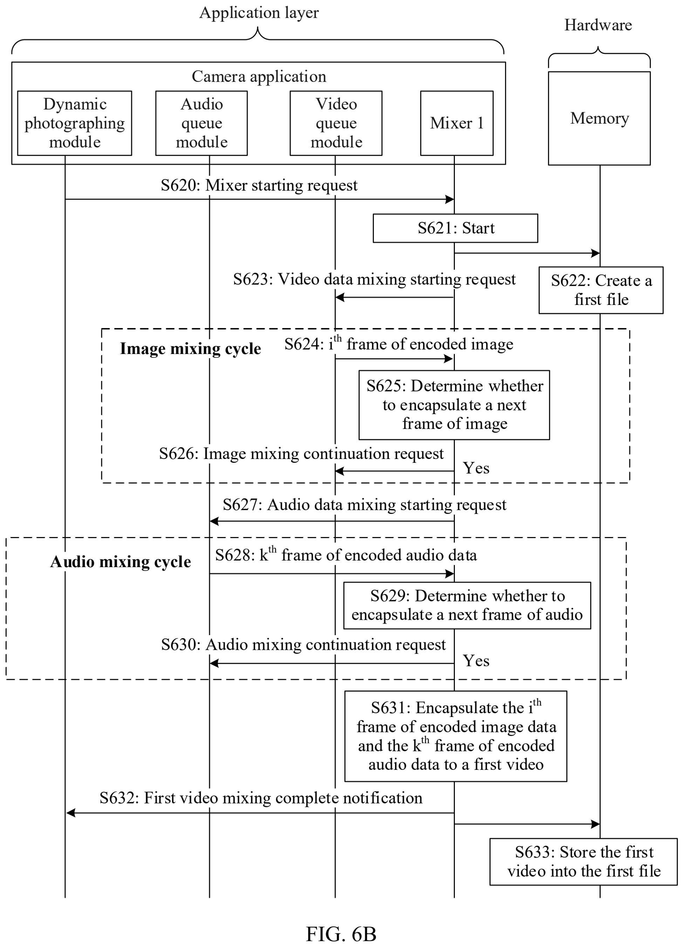

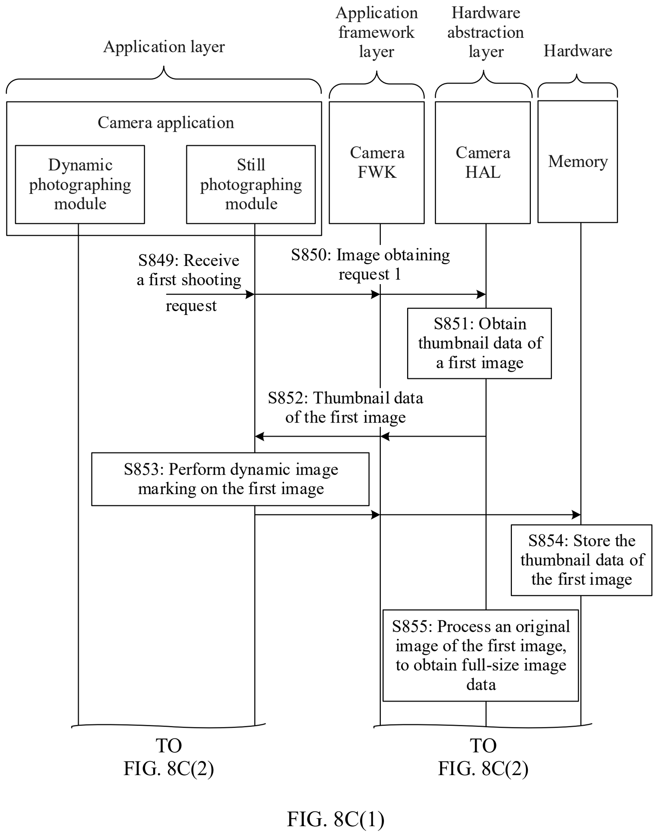

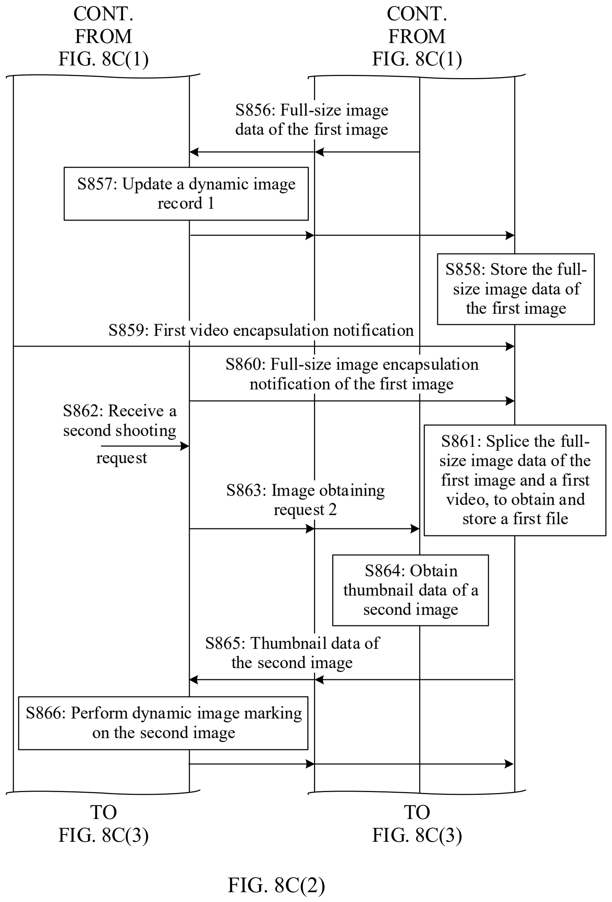

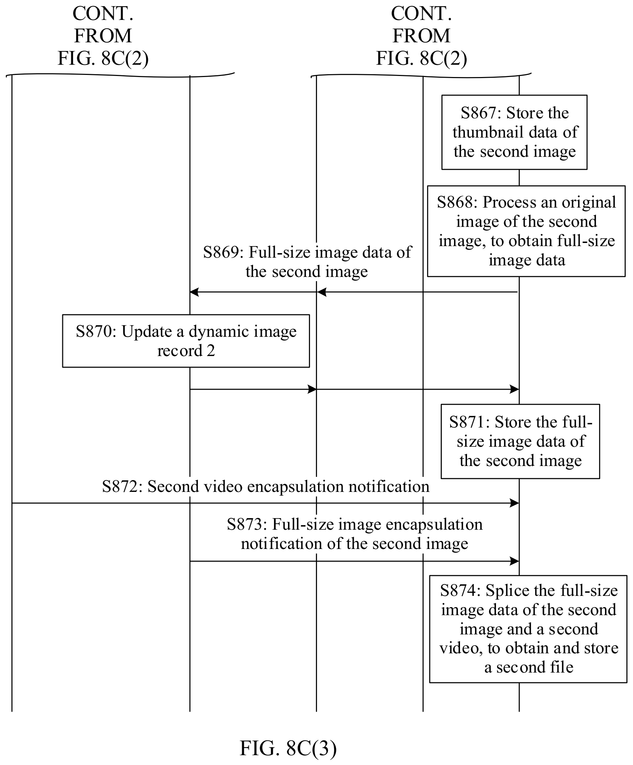

The mixing module is configured to encapsulate the encoded images and the encoded audio into video data, that is, encapsulate the encoded audio data buffered by the audio queue module and the encoded video data buffered by the video queue module, to obtain a video. In a process of needing to perform mixing to obtain a dynamic image, the mixing module may include N mixers at a same moment, where N is a positive integer. N in FIG. 6A(1) and FIG. 6A(2) and FIG. 6B is 1, and N in FIG. 8A(1) and FIG. 8A(2) to FIG. 8C(1), FIG. 8C(2), and FIG. 8C(3) is 2. Each mixer may be configured to perform mixing to obtain a video of a dynamic image.

The storage module is configured to store a dynamic image obtained after the mixer performs mixing, that is, store a video, images, and related description information in the dynamic image. The storage module may control the memory to perform storage.

The application framework layer provides an application programming interface (application programming interface, API) and a programming framework for the applications at the application layer. The application framework layer includes some predefined functions.

As shown in FIG. 4A, the application framework layer may include a camera FWK (framework layer), a media FMK (framework layer), an audio FWK (framework layer), and a post camera. The camera FWK may provide an API interface for an application (for example, the camera application) to invoke, so as to receive a request from the application, maintain a service logic of the request in internal circulation at the same time, and finally send, by invoking a camera AIDL cross-process interface, the request to a camera service (Camera Service) for processing, and then wait for returning of a result from the camera service (Camera Service), so as to send the final result to the camera application. The full name of AIDL is Android Interface Definition Language, which means Android Interface Definition Language. Similarly, the media FWK may provide an API interface for a corresponding application (for example, the camera application) to invoke, so as to receive a request from the application (for example, the camera application), deliver the request of the application downward, and then return the request back to the application. The audio FWK may provide an API interface for an application to invoke. The application may transmit audio, deliver instructions (deliver instructions to an audio HAL), or the like by using the audio FWK.

The post camera may also provide an interface for an application to invoke. In a dynamic mode, the video management module may configure the post camera. As a new data path, the post camera may be invoked by a camera application. Encoding requests of the dynamic shooting module and the video management module are received. Video buffer data in the camera HAL may be filled into the Video-surface by using the post camera for transmission to the camera application. The video encoding module consumes to-be-encoded data of the Video-surface, so as to form a data path. It may be understood that the application framework layer may further include a window manager, a content provider, a view system, a phone manager, a resource manager, a notification manager, and the like. For specific meanings thereof, refer to a related technical document. This is not described in detail herein.

The Runtime (Runtime) is responsible for scheduling and managing the system. The Runtime includes a core library and a virtual machine. The core library includes two parts: a performance function that a programming language (for example, java language) needs to invoke, and a core library of the system.

The application layer and the application framework layer run in the virtual machine. The virtual machine executes programming files (for example, java files) of the application layer and the application framework layer as binary files. The virtual machine is configured to execute functions such as object life cycle management, stack management, thread management, security and exception management, and garbage collection.

The system library may include a plurality of functional modules, for example, a surface manager (Surface Manager), a media library (Media Libraries), a three-dimensional graphics processing library (for example, an openGL ES), and a two-dimensional graphics engine (for example, an SGL).

The surface manager is configured to: manage a display subsystem, and provide fusion of two dimensional (2-Dimensional, 2D) and three-dimensional (3-Dimensional, 3D) layers to a plurality of applications.

The media library supports playback and recording of a plurality of common audio and video formats, a still image file, and the like. The media library may support a plurality of audio and video encoding formats, such as MPEG4, H.264, MP3, AAC, AMR, JPG, and PNG.

The three-dimensional graphics processing library is configured to implement 3D graphics drawing, image rendering, composition, layer processing, and the like.

The 2D graphics engine is a drawing engine for 2D drawing.

The hardware abstraction layer (HAL) is an interface layer between an operating system kernel and upper software, and aims to abstract hardware. The hardware abstraction layer is an abstract interface driven by a device kernel, and is configured to provide a higher-level Java API framework with an application programming interface for accessing an underlying device. The HAL includes a plurality of library modules, such as a camera HAL, an audio HAL, a display, and Bluetooth. Each library module implements an interface for a specific type of hardware component. It may be understood that the camera HAL may provide an interface for the camera FWK and the post camera to access a hardware component such as the camera. The camera HAL may include the video acquisition module and a video buffer module. The video acquisition module is configured to: configure a video stream and manage original video data obtained from the camera. The video buffer module may be configured to store processed original image data obtained by the video acquisition module from the camera. The audio HAL may provide an interface for the audio FWK to access a hardware component such as the microphone.

It is assumed that the video buffer module is located at the application layer. The application buffer has a limited memory. A data volume of buffered YUV image data (to-be-encoded images) is large. The application layer can only compress the images, resulting in a poor video effect, poor pixels, and the like of the dynamic image. In embodiments of this application, the camera HAL performs stream configuration and buffering on the image data, so that storage and processing burden of the camera at the application layer can be reduced, to improve processing efficiency and a running speed of the camera application. In addition, buffered images can also be processed by using a sufficient buffer space, to ensure an effect of the dynamic image.

The kernel layer is a foundation of the Android operating system, and a final function of the Android operating system is implemented by using the kernel layer. The kernel layer includes at least a display driver, a camera driver, an audio driver, and the like.

The hardware layer may include a display, a microphone, a camera, a memory, an audio encoder, a video encoder, and the like. The microphone acquires original audio data, the camera acquires original image data, and the memory can store files of videos, images, and dynamic images. The audio encoder is hardware that performs audio encoding, and the video encoder is hardware that performs video encoding.

It should be noted that, the diagram of the software structure of the electronic device shown in FIG. 4A provided in this application is merely used as an example.

Specific module division at different layers in the Android operating system is not limited. For details, refer to the description to the software structure of the Android operating system in the conventional technology. In addition, the shooting method provided in this application may be further implemented based on another operating system, and examples are not provided in this application one by one.

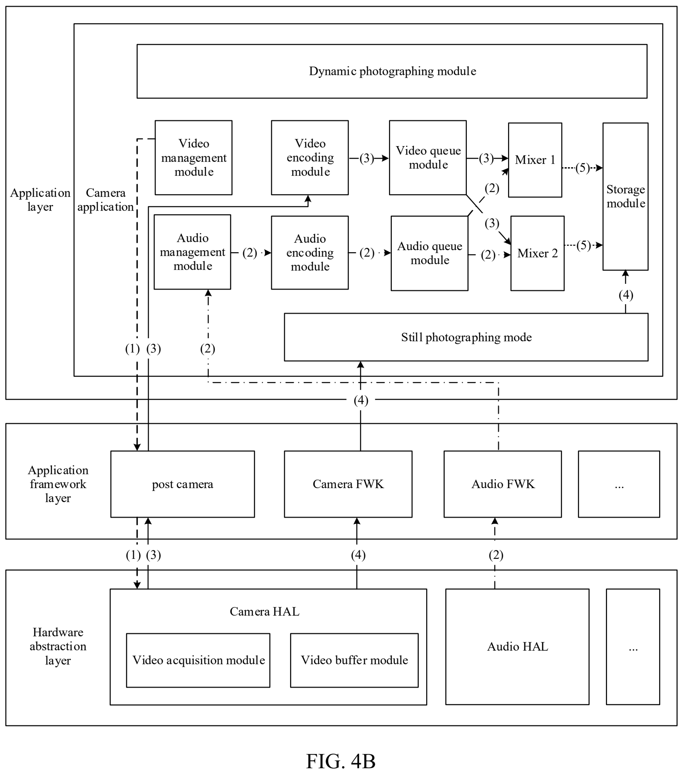

Based on the software and hardware structures of the electronic device shown in FIG. 3 and FIG. 4A, FIG. 4B is a diagram of software and hardware structures of another electronic device according to an embodiment of this application. A basic processing logic in a shooting method provided in embodiments of this application is described from the perspective of coordination between software and hardware with reference to FIG. 4B.

After starting the camera application in response to an operation of starting the camera, the dynamic photographing module notifies the camera to start acquiring images. When the dynamic mode is started, the dynamic photographing module requests to create a first video buffer queue (the video buffer module) in the camera HAL. The microphone is started to start acquiring audio, and a first audio buffer queue (the audio buffer module) is created in the camera application, and audio encoding is performed. This is initialization of video encoding.

Step (1): Enable the camera, and perform video stream configuration when the dynamic mode is enabled.

The dynamic photographing mode may detect a user operation (or obtain an enabled state and a disabled state of the current dynamic mode), so as to determine that a current camera mode is the dynamic mode, and notify the video management module. Correspondingly, the video management module may create the Video-surface, and deliver stream configuration information of video data to the post camera. After receiving the stream configuration information, the post camera may store an address of the Video-surface, to generate an image reporting path. Then, the post camera may deliver the stream configuration information to the camera HAL, so that the camera HAL can receive a stream configuration initialization success message. The camera HAL processes and buffers the original image data acquired by the camera. The camera HAL notifies, by using the camera FWK, the dynamic photographing module of a message that the original image data is obtained, to trigger audio acquisition and video data configuration.

When the user taps the shooting control to shoot a dynamic image, the acquired audio and images are encoded and mixed, to generate a video, and the video and the images are encapsulated, to obtain the dynamic image.

Step (2): Data flow direction of audio acquisition and encoding.

The audio HAL may obtain the original audio data acquired by the microphone, and upload, by using the audio FWK, the original audio data to the audio management module for buffering (the first audio buffer queue). The audio encoding module encodes to-be-encoded audio of the first audio buffer queue, to obtain encoded audio, and buffer the encoded audio into the audio queue module (the second audio buffer queue).

Step (3): Data flow direction of image acquisition and encoding.

In the camera HAL, the video acquisition module may process the original image data acquired by the camera, and store the original image data into the video buffer module (the first video buffer queue) (for example, YUV images). The video buffer module may transmit the image data to the video encoding module by using the post camera. The video encoding module encodes to-be-encoded images, to obtain encoded images, and buffers the encoded images into the video queue module (the second video buffer queue).

In a process of obtaining the video of the dynamic image, the original images (or image data on which effect processing is performed) acquired by the camera need to be encoded, to obtain the encoded images for encapsulation and storage. For example, the video encoder may compress color space (luminance chrominance chroma, YUV) data acquired by the Camera module into a video bitstream in an MPEG-4 or advanced video coding (advanced video coding, AVC) format. After being sent to a File Muxer (File Muxer) module, the video bitstream is encapsulated into a video file in a format such as 3gpp, mp4, H.264, or AAC that can be played by a player.

Step (4): Data flow direction of image acquisition in the dynamic image.

The still photographing mode may detect a user operation (or obtain an operation of tapping, by the user, the shooting control to shoot a dynamic image), and may obtain an image from the camera HAL by using the camera FWK, and store the frame of image into the storage module.

Step (5): Mix the encoded images and audio into the video, and store the video.

The mixer 1 and the mixer 2 may separately obtain encoded data from the video queue module and the audio queue module and separately perform mixing. In a process of executing steps (2) and (3), the mixer 1 and the mixer 2 may separately mix encoded images and audio into videos, and store the videos into the storage module. After the videos and the images are stored into the storage module, the videos and the images may be encapsulated, to obtain dynamic images, and storage is updated. The two mixers correspond to two dynamic images. Dynamic images stored in the storage module may be shown in FIG. 1J.

In addition, when the dynamic photographing module and the still photographing module enable the dynamic mode, the application layer configures the camera HAL. The dynamic photographing module may send first stream configuration parameter information to the video acquisition module. The first stream configuration parameter information may include a first width width 1 and a first height height 1 of the image. For example, width 1 *height 1 is 1440*1080. The video acquisition module stores the first stream configuration parameter information, that is, configuration is completed. After configuration is completed, in the first video buffer queue, a size of an image stored in the video buffer module is width 1 *height 1. The still photographing module sends second stream configuration parameter information to the camera HAL. The second stream configuration parameter information may include a second width width 2 and a second height height 2 of the image. For example, width 2*height 2 is 4000*8000. The camera HAL stores the second stream configuration parameter information. After configuration is completed, full-size images of the first image and the second image in the dynamic images obtained by the camera HAL satisfy the foregoing second width and second height.

For specific descriptions of the modules in FIG. 4B, refer to related descriptions of FIG. 4A. Details are not described herein.

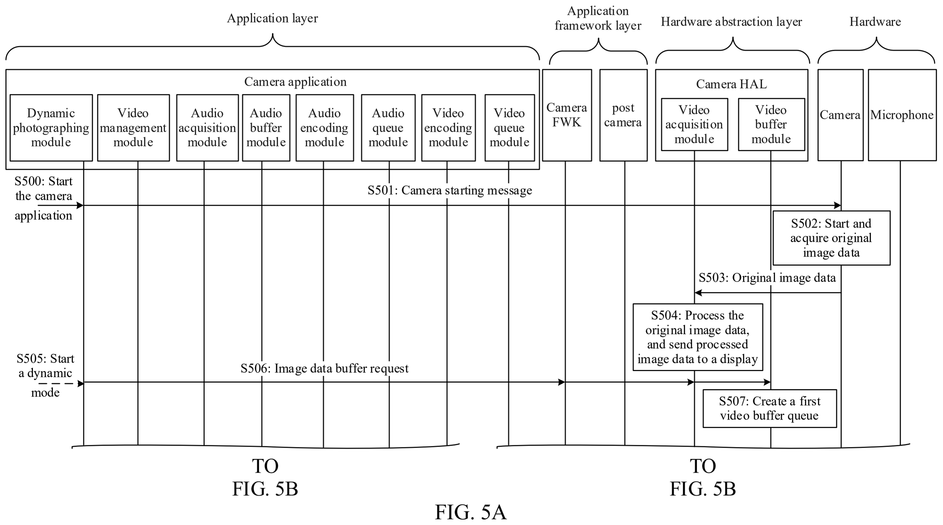

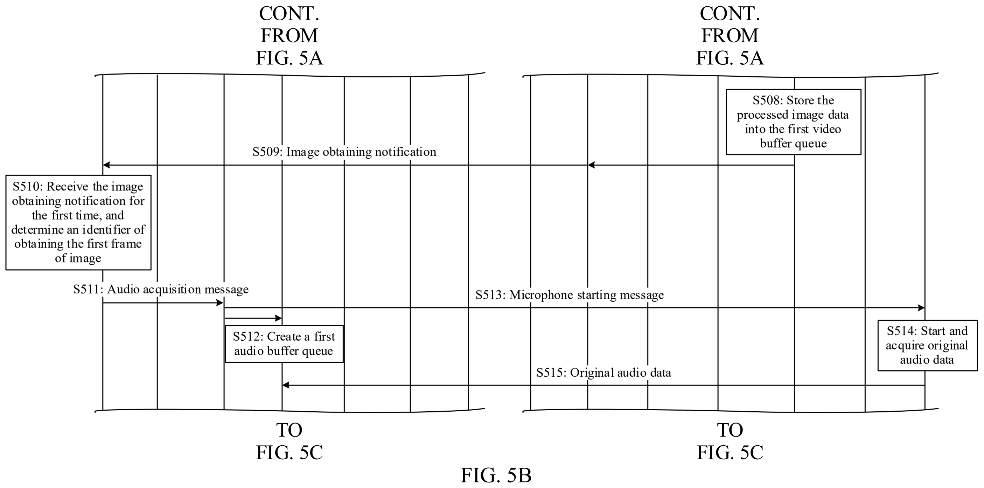

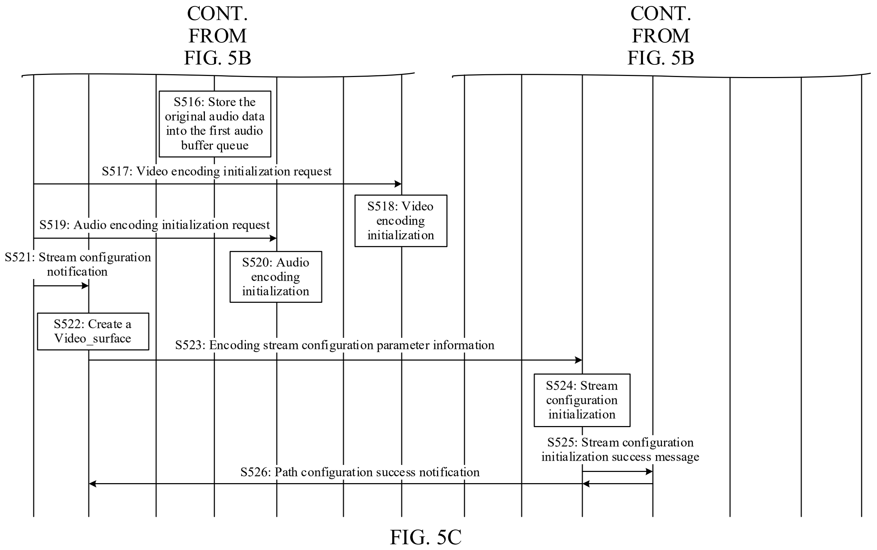

**The following describes specific implementations of the foregoing embodiments with reference to** FIG. 5A, FIG. 5B, and FIG. 5C **to** **FIG. 12B****.**

FIG. 5A, FIG. 5B, and FIG. 5C are a schematic flowchart of a video data processing method in a dynamic mode according to an embodiment of this application.

It may be understood that, the user may tap an icon of the camera application (the operation of enabling the camera by the user). Correspondingly, after detecting the user operation, the dynamic photographing module determines that the camera is started, and delivers a camera starting message to the camera. The camera starting message is used to request to start the camera. After receiving the camera starting message, the camera is started to acquire images.
**1. Obtain original image data and original audio data, and configure video data (step S500 to step S526 shown in** FIG. 5A, FIG. 5B, and FIG. 5C).

S500: The dynamic photographing module receives a request for starting the camera application.

It may be understood that the user may trigger the electronic device to start the camera application. Correspondingly, the dynamic photographing module in the electronic device may receive the request for starting the camera application.

For example, as shown in FIG. 1A, the user may tap the camera control 101. Correspondingly, the electronic device may receive the request for starting the camera application. In response to the operation of starting the camera application, the electronic device may start the camera application and display the user interface 110 shown in FIG. 1B. It may be understood that the user may also start the camera application in a voice manner, a gesture manner, or the like. A specific manner in which the user triggers the electronic device to start the camera application is not limited in this application.

S501: The dynamic photographing module sends the camera starting message to the camera.

Correspondingly, the camera may receive the camera starting message sent by the dynamic photographing module. The camera starting message indicates the camera to start to expose and obtain the original image data.

S502: The camera is started and acquires the original image data.

It may be understood that, after receiving the camera starting message sent by the dynamic photographing module, the camera may be started. After being started, the camera may continuously acquire the original image data. The camera may acquire the original image data according to a first time interval. Each frame of original image data includes an acquisition timestamp of the frame of image and the frame of image. For example, the camera exposes once every 33 ms, to obtain one frame of original image.

S503: The camera sends the original image data to the video acquisition module.

It may be understood that the camera lens may send the captured original image data to the camera HAL. The camera may send the original image data to the video acquisition module. Correspondingly, the video acquisition module may receive the original image data from the camera.

S504: The video acquisition module processes the original image data, and sends processed image data to the display.

It may be understood that, when the camera application is in a preview mode, the camera HAL (the video acquisition module) may process the original image data, and send processed images to the display for display. It may be understood that, the preview mode mentioned herein may include the photographing mode, the dynamic mode, and the like.

S505: The dynamic photographing module obtains a request for starting the dynamic mode.

Optionally, when the camera starts the camera application, the dynamic mode is in the disabled state, and the user may trigger to start the dynamic mode. Correspondingly, the dynamic photographing module may receive the request for starting the dynamic mode. For example, as shown in FIG. 1B, when the user enables the camera, the dynamic mode is in the disabled state, and the user may tap the dynamic mode switch 111 (an operation of starting the dynamic mode), to enable the dynamic mode. It may be understood that the user may alternatively start the dynamic mode in a manner such as voice or gesture. A specific manner in which the user triggers the electronic device to start the dynamic mode is not limited in this application.

Optionally, when the camera starts the camera application, if the dynamic mode is in the enabled state, the dynamic photographing module can obtain the request for starting the dynamic mode. For example, as shown in FIG. 1C, when the user enables the camera, the dynamic mode has been in the enabled state in the shooting preview interface, and the user does not need to trigger to start the dynamic mode.

S506: The dynamic photographing module sends an image data buffer request to the video acquisition module by using the camera FWK.

After receiving starting the dynamic mode, the dynamic photographing module may send the image data buffer request to the video acquisition module. Correspondingly, the video acquisition module may receive the image data buffer request from the dynamic photographing module. The image data buffer request indicates to buffer processed image data, to prepare for video encoding.

An execution sequence is not limited between S505 to S506 and S501 to S504.

S507: The video buffer module creates the first video buffer queue.

After the video acquisition module receives the image data buffer request from the dynamic photographing module, the video buffer module may create the first video buffer queue. Specifically, after creating the first video buffer queue, the video acquisition module stores processed images into the first video buffer queue. The processed images may be YUV image data. For example, the first video buffer queue may include 45 frames of image data. The video buffer module stores the first video buffer queue. The video acquisition module may determine a buffer address and a data size of the first video buffer queue.

S508: The video buffer module stores processed image data into the first video buffer queue.

After creating the first video buffer queue and processing the image data, the video buffer module stores the processed image data into the first video buffer queue.

S509: The video acquisition module sends an image obtaining notification to the dynamic photographing module by using the camera FWK.

When the video acquisition module stores each frame of image data into the first video buffer queue, the video acquisition module sends a notification of obtaining the frame of image to the dynamic photographing module by using the camera FWK. Correspondingly, the dynamic photographing module may receive the image obtaining notification from the video acquisition module by using the camera FWK.

S510: The dynamic photographing module determines, based on an image obtaining notification received for the first time, an identifier of obtaining a first frame of image.

After performing S505 and S506, when receiving the image obtaining notification for the first time, the dynamic photographing module may determine, based on the image obtaining notification, the identifier of obtaining the first frame of image. To be specific, the dynamic photographing module may determine that the video buffer module of the current camera HAL has started buffering image data.

S511: The dynamic photographing module sends an audio acquisition message to the audio acquisition module.

The dynamic photographing module may send the audio acquisition message to the audio acquisition module. Correspondingly, the audio acquisition module may receive the audio acquisition message from the dynamic photographing module. The audio acquisition message indicates the audio acquisition module to start acquiring the original audio data. The original audio data may be pulse code modulation (pulse code modulation, PCM) data.

S512: The audio acquisition module creates the first audio buffer queue.

After receiving the audio acquisition message of the dynamic photographing module, the audio acquisition module may create the audio buffer queue. Specifically, the audio acquisition module creates the audio buffer mode to buffer a plurality of frames of original audio data. The audio acquisition module may determine a buffer address and a data size of the first audio video buffer queue. The first audio buffer queue is configured to buffer to-be-encoded audio data. For example, the first audio buffer queue may include 50 frames of audio data.

S513: The audio acquisition module sends a microphone starting message to the microphone.

After receiving the audio acquisition message of the dynamic photographing module, the audio acquisition module may send the microphone starting message to the microphone. Correspondingly, the microphone may receive the microphone starting message from the audio acquisition module. The microphone starting message is used to start the microphone, to acquire the original audio data. Information transmission between the audio acquisition module and the microphone needs to be performed by using the audio FWK and the audio HAL. For details, refer to related descriptions of FIG. 4A. Details are not described herein.

S514: The microphone is started and acquires the original audio data.

After obtaining the original audio data, the microphone may be started and acquire the original audio data. Specifically, the microphone may acquire the original audio data according to a second time interval. For example, the microphone acquires the original audio data once every 22 ms.

S515: The microphone sends the original audio data to the audio buffer module.

After acquiring the original audio data, the microphone may send the original audio data to the audio buffer module by using the audio HAL and the audio FWK. Correspondingly, the audio buffer module may receive the original audio data from the microphone.

S516: The audio buffer module stores the original audio data into the first audio buffer queue.

After creating the first audio buffer queue, the audio buffer module may store the received original audio data into the first audio buffer queue.

**S517 to S520: Encoding initialization.**

S517: The dynamic photographing module sends a video encoding initialization request to the video encoding module.

Correspondingly, the video encoding module receives the video encoding initialization request from the dynamic photographing module.

S518: The video encoding module performs video encoding initialization.

After S517 is performed, the video encoding module may perform video encoding initialization, that is, configure addresses of the video encoder and the video queue module, to prepare for video encoding.

S519: The dynamic photographing module sends an audio encoding initialization request to the audio encoding module.

Correspondingly, the audio encoding module receives the audio encoding initialization request from the dynamic photographing module.

S520: The audio encoding module performs audio encoding initialization.

After S519 is performed, the audio encoding module may perform audio encoding initialization, that is, configure addresses of the audio encoder and the audio queue module, to prepare for video encoding.

An execution sequence is not limited between S517 to S518 and S519 to S520.

**S521 to S526: Stream configuration processing on encoded data.**

S521: The dynamic photographing module sends a stream configuration notification to the video management module.

After receiving the request for starting the dynamic mode, the dynamic photographing module may send the stream configuration notification to the video management module. Correspondingly, the video management module may receive the stream configuration notification from the dynamic photographing module. The stream configuration notification indicates the video management module to configure a data path for image encoding.

S522: The video management module creates a Video_surface buffer.

The Video_surface buffer is a buffer of the video encoder. The video management module may create the Video_surface buffer, and determine a storage address and a storage space size of the Video_surface buffer. In a process of creating the Video_surface, the video management module may determine encoding stream configuration parameter information. The encoding stream configuration parameter information may be related information of the surface.

S523: The video management module sends the encoding stream configuration parameter information to the post camera.

After performing S522, the video management module may send the encoding stream configuration parameter information to the post camera. Correspondingly, the post camera may receive encoding stream configuration parameter information from the video management module.

The encoding stream configuration parameter information is used to configure a data path in the encoding process. The encoding stream configuration parameter information may include an image width width, a height height, a format parameter Format, usage information usage, and a first number number. The image width width and the height heigh can be used to determine a pixel size of the image. The Format can be used to determine that a format of the surface is an encoder format, for example, 24. The usage information usage indicates that usage of the image is encoding. The first number number indicates a quantity of buffers (buffer) applied by the surface.

S524: The post camera performs stream configuration initialization.

The post camera performs stream configuration initialization based on the encoding stream configuration parameter information. Specifically, based on the encoding stream configuration parameter information, the Video_surface may create a buffer queue. A quantity of buffers in the buffer queue is the first number M, for example, 4 or 8. Each empty buffer may be filled with one frame of to-be-encoded image with the image width width and the height height. The Video_surface is in the encoder format. The buffer queue may be used for subsequent transmission of to-be-encoded data from the camera HAL to the camera application.

S525: The post camera sends a stream configuration initialization success message to the video acquisition module.

Correspondingly, the video acquisition module may receive the stream configuration initialization success message from the post camera. The stream configuration initialization success message is used to notify the camera HAL of a stream configuration success.

After being created, the post camera may notify the video management module of a successful configuration of a new path for encoding the current dynamic image. As a new channel, the post camera is different from the native camera FWK, and needs to separately transmit encoded data of the dynamic image. After receiving a path configuration success notification, the video management module may prepare to start video encoding.

S526: The video acquisition module sends the path configuration success notification to the video management module by using the post camera.

After confirming that stream configuration succeeds, the video acquisition module may send the path configuration success notification to the post camera. Correspondingly, the video management module may receive, by using the post camera, the path configuration success notification from the video acquisition module. In this case, the video management module may confirm that encoding stream configuration is completed.

An execution sequence is not limited between S506, S511, S517, S519, and S521.

At this point, obtaining audio and video data by the electronic device and the stream configuration process of the video data have been completed. In the foregoing process, when the dynamic mode is started, audio and the video start to be buffered, to prepare for obtaining the dynamic image, and prepare for the video encoding process.

**2. Video encoding and mixing of a dynamic image that is shot at a single time** (step S601 to step S619 shown in FIG. 6A(1) and FIG. 6A(2)).

FIG. 6A(1) and FIG. 6A(2) are a schematic flowchart of a video encoding method in a dynamic mode according to an embodiment of this application.

When the electronic device enters the camera shooting preview picture and the dynamic mode is in the enabled state, the user may tap the shooting control on the interface. Correspondingly, the dynamic photographing module detects the user operation, and determines that the electronic device needs to record the first video. The following describes an encoding and mixing process of the first video in the dynamic image when the user shoots the dynamic image only once.

S601: The dynamic photographing module receives a shooting request.

When the electronic device starts the dynamic mode, the user triggers shooting, and the dynamic photographing module receives the shooting request. Specifically, the user may tap the start-to-shoot control (FIG. 1C), or may shoot through voice control. An action of triggering shooting is not limited in this application. The video and images need to be obtained to generate the dynamic image. The dynamic photographing mode is used to control generation of the video. The still photographing mode is used to control obtaining of the images. Then, the video and the images are encapsulated in a corresponding manner, to obtain the dynamic image.

**S602 to S611: Start video encoding. The electronic device encodes to-be-encoded images in the first video buffer queue, to obtain the second video buffer queue.**

S602: The dynamic photographing module sends an image encoding starting request to the video encoding module.

When receiving the shooting request, the dynamic photographing module may send the image encoding starting request to the video encoding module. Correspondingly, the video encoding module may receive the image encoding starting request from the dynamic photographing module. The image encoding starting request indicates the video encoding module to encode the original image data (stored in the video buffer module).

S603: The video encoding module starts the video encoder.

After receiving the image encoding starting request from the dynamic photographing module, the video encoding module may start the video encoder. Specifically, hardware of the electronic device may include the video encoder. In this case, the video encoding module may control the video encoder to be enabled, to prepare for encoding.

S604: The video encoding module sends an image data encoding starting request to the video management module.

After starting the video encoder, the video encoding module may send the image data encoding starting request to the video management module. Correspondingly, the video management module may receive the image data encoding starting request from the video encoding module. The image data encoding starting request is used to request the video management module to start image encoding. After the video management module receives the request, the video encoder starts encoding.

**S605 to S611: After starting encoding, the video management module enters a cyclic video encoding process, and cyclically encodes one frame of image each time until the video management module receives an image data encoding ending request, and stops encoding.**

S605: The video management module sends an image data encoding request to the video acquisition module by using the post camera.

After receiving the image data encoding starting request from the video encoding module, the video management module may send the image data encoding request to the video acquisition module by using the post camera. Correspondingly, the video acquisition module may receive the image data encoding request from the video management module by using the post camera. The image data encoding request is used to request for a next frame of to-be-encoded image stored in the video buffer module, for encoding.

The post camera is configured to transmit to-be-encoded data in the dynamic mode.

S606: The video buffer module obtains an n^{th} frame of to-be-encoded image.

When the video acquisition module receives the image data encoding request, the video buffer module needs to obtain the n^{th} frame of to-be-encoded image. One frame of image data stored in the video buffer module is provided for the video encoding module for encoding.

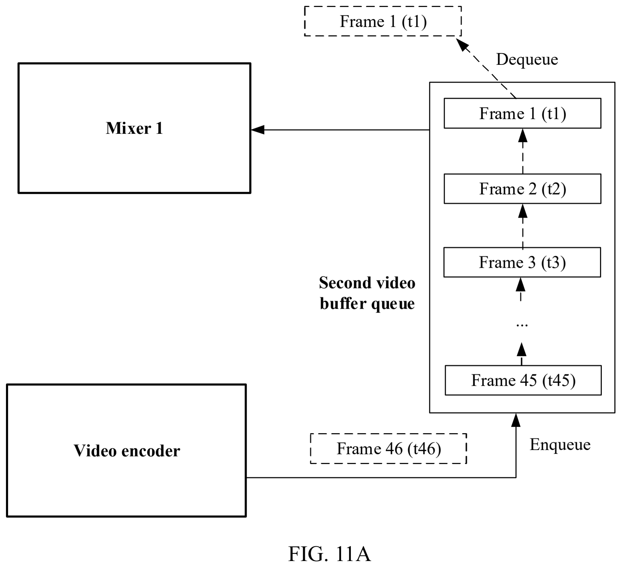

It should be noted that, an image queue with a first number (the first number may be determined and not change) of frames is stored in the video buffer module. For example, in this queue (a first-in-first-out image queue), with shooting by the camera, image frames are continuously added to the end of the queue. When encoding is started, the first frame of to-be-encoded image is selected as one frame of image at the queue head. In the encoding process, a next frame of to-be-encoded image is selected as one frame of image after a previous to-be-encoded image frame in the queue. To be specific, when the video acquisition module (entering cyclic video encoding) receives the image data encoding request for the first time, the video acquisition module determines one frame of image at the queue head of the first video buffer queue in the video buffer module as the next frame of image data. When the video acquisition module does not receive the image data encoding request for the first time, the video acquisition module determines a frame next to next frame of image data of the previously determined image in the first video buffer queue, that is, takes out to-be-encoded images in sequence. The next frame of image data obtained in this case is processed original image data, namely, buffered data in S508. In addition, for a process of obtaining the n^{th} frame of to-be-encoded image, refer to related example descriptions of FIG. 11A to FIG. 11E. Details are not described herein.

S607: The video buffer module sends the n^{th} frame of to-be-encoded image to the video encoding module by using the post camera.

After obtaining the n^{th} frame of to-be-encoded image, the video buffer module may send the n^{th} frame of to-be-encoded image to the video encoding module by using the post camera (which may also be referred to as a post-processing camera). Correspondingly, the video encoding module may receive the n^{th} frame of to-be-encoded image from the video buffer module by using the post camera.

**In** this case, the n^{th} frame of to-be-encoded image includes one frame of to-be-encoded image and a corresponding timestamp. The timestamp can indicate a time point at which the frame of image information is shot.

S608: The video encoding module encodes the n^{th} frame of to-be-encoded image, to obtain an n^{th} frame of encoded image.

When receiving the n^{th} frame of to-be-encoded image from the video buffer module, the video encoding module may encode the n^{th} frame of to-be-encoded image, to obtain the n^{th} frame of encoded image.

S609: The video encoding module sends an image data encoding continuation request to the video management module.

After encoding the n^{th} frame of to-be-encoded image, the video encoding module may send the image data encoding continuation request to the video management module.

S610: The video encoding module sends the n^{th} frame of encoded image to the video queue module.

After performing S608, the video encoding module may send the n^{th} frame of encoded image to the video queue module. The n^{th} frame of encoded image includes the frame of encoded image data and a timestamp. The timestamp is still the timestamp of the corresponding frame of image before encoding, namely, the timestamp when the frame of image is shot.

S611: The video queue module buffers the encoded image data.

After receiving the n^{th} frame of encoded image, the video queue module may buffer the n^{th} frame of encoded image into the second video buffer queue of the video queue module.

In the foregoing process, the video buffer module and the video queue module may both be a data buffer queue. The video buffer module buffers the image data before encoding (the first video buffer queue), and the video queue module buffers the encoded image data (the second video buffer queue).

After performing S604, the video management module starts encoding and performs S605. Then, the video management module performs S609, and may continue to cyclically perform S605. Until the video management module receives an image data encoding stopping request, the video management module may stop encoding, and end the cycle.

**S612 to S619: Start audio encoding. The electronic device encodes to-be-encoded audio in the first audio buffer queue, to obtain the second audio buffer queue.**

S612: The dynamic photographing module sends an audio encoding starting request to the audio encoding module.

When receiving the shooting request, the dynamic photographing module may send the audio encoding starting request to the audio encoding module. Correspondingly, the audio encoding module may receive the audio encoding starting request from the dynamic photographing module.

S613: The audio encoding module starts the audio encoder.

After receiving the audio encoding starting request, the audio encoding module may start the audio encoder. Specifically, hardware of the electronic device may include the audio encoder. In this case, the audio encoding module may control the audio encoder to be enabled, to prepare for encoding.

S614: The audio encoding module sends an audio data encoding starting request to the audio buffer module.

After starting the audio encoder, the audio encoding module may send the audiovisual data encoding starting request to the audio management module. Correspondingly, the audio management module may receive the audiovisual data encoding starting request from the audio encoding module. The audiovisual data encoding starting request is used to request the audio management module to start audiovisual encoding.

**S615 to S619: After audio encoding is started, enter a cyclic audio encoding process, where one frame of audio is cyclically encoded each time until the audio buffer module obtains an audio data encoding ending request, and stops encoding.**

S615: The audio buffer module sends an m^{th} frame of to-be-encoded audio to the audio encoding module.

After receiving the audiovisual data encoding starting request from the audio encoding module, the audio buffer module may send the m^{th} frame of to-be-encoded audio to the audio encoding module. Correspondingly, the audio encoding module may receive the m^{th} frame of to-be-encoded audio from the audio buffer module.

The m^{th} frame of to-be-encoded audio sent to the audio encoding module by the audio buffer module when performing S615 after performing S614 is one frame of audio data at the queue head in the audio buffer module queue. The m^{th} frame of to-be-encoded audio sent to the audio encoding module by the audio buffer module when performing S615 after performing S617 is one frame of audio data after audio in the queue is previously sent, to be specific, the to-be-encoded audio only needs to be taken out frame by frame in a queue sequence.

The m^{th} frame of to-be-encoded audio includes one frame of audio and an audio timestamp. The audio timestamp indicates a time point at which the frame of audio is acquired.

S616: The audio encoding module encodes the m^{th} frame of to-be-encoded audio, to obtain m^{th} to-be-encoded audio.

When receiving the m^{th} frame of to-be-encoded audio from the audio buffer module, the audio encoding module may encode the m^{th} frame of to-be-encoded audio, to obtain the m^{th} frame of encoded audio.

S617: The audio encoding module sends an audio data encoding continuation request to the audio buffer module.

After obtaining a next frame of encoded audio data, the audio encoding module sends the audio data encoding continuation request to the audio buffer module. Correspondingly, the audio buffer module may receive the audio data encoding continuation request from the audio encoding module.

S618: The audio encoding module sends the m^{th} frame of encoded audio to the audio queue module.

After obtaining the m^{th} frame of encoded audio, the audio encoding module may send the m^{th} frame of encoded audio to the audio queue module. Correspondingly, the audio queue module may receive the m^{th} frame of encoded audio from the audio encoding module.

The m^{th} frame of encoded audio may include one frame of encoded audio and an audio timestamp. The audio timestamp may still be the audio timestamp before encoding.

S619: The audio queue module buffers the encoded audio data.

The audio queue module may buffer the m^{th} frame of encoded audio into the second audio buffer queue of the audio queue module.

In the foregoing process, the audio buffer module and the audio queue module may both be a data buffer queue. The audio buffer module buffers the audio data before encoding (the first audio buffer queue), and the audio queue module buffers the encoded audio data (the second audio buffer queue).

After performing S614, the audio buffer module starts encoding and performs S615. Then, the audio buffer module performs S617, and may continue to cyclically perform S615. Until the audio buffer module receives an audio data encoding stopping request, the audio buffer module may stop encoding, and end the cycle.

FIG. 6B is a schematic flowchart of a video mixing method in a dynamic mode according to an embodiment of this application.

**S620 to S633: Mix the encoded audio and images, to obtain video data.**

**The audio is mixed with the images, to obtain the video data.**

S620: The dynamic photographing module sends a mixer starting request to the mixer 1.

When receiving the shooting request (after S601 is performed), the dynamic photographing module may send the mixer starting request to the mixer 1. Correspondingly, the mixer 1 may receive the mixer starting request from the dynamic photographing module.

The mixer starting request may include a timestamp Y when the electronic device receives the shooting request (in S601).

S621: The mixer 1 is started.

When receiving the mixer starting request, the mixer 1 may be started, to start mixing.

S622: The memory creates a first file.

After being started, the mixer 1 may control the memory to create the first file. The first file is a file of a dynamic image. The file of the dynamic image may include a video and images.

S623: The mixer 1 sends a video data mixing starting request to the video queue module.

After the first file is created, the mixer 1 may send the video data mixing starting request to the video queue module. Correspondingly, the video queue module may receive the video data mixing starting request from the mixer 1.

S624 to S626: Image mixing cycle: After S626 is performed, the video queue module continues to perform S624, to mix a next frame. When it is determined not to encapsulate the next frame of image in S625, the cycle is ended.

S624: The video queue module sends an i^{th} frame of encoded image data to the mixer 1.

The video queue module may send the i^{th} frame of encoded image data to the mixer 1. Correspondingly, the mixer 1 may receive the i^{th} frame of encoded image data from the video queue module.

The i^{th} frame of encoded image data is one frame of image data that is encoded earliest in the buffer queue of the current video queue module (one frame of encoded image at the queue head in the second video data queue). When the i^{th} frame of encoded image data is consumed (mixed) by the mixer 1, a frame next to the i^{th} frame becomes one frame of image data at the queue head.

The i^{th} frame of encoded image data may include one frame of encoded image and a timestamp.

S625: The mixer 1 determines whether to encapsulate the next frame of image.

In S620, the mixer 1 obtains the timestamp Y. The electronic device may determine, from the second video buffer queue based on the timestamp Y and specific video duration (or a specific quantity of frames of the video), a start frame (a 1st frame of encoded image) for mixing, and starts encapsulation. Each time one frame of image is encapsulated in the mixer, it is marked that the frame of image has been consumed by the mixer 1. Before one frame of image is encapsulated, the electronic device determines when to encapsulate the frame of image, so that the electronic device can determine when to end encapsulation. If encapsulation is performed, S626 is performed; or if encapsulation is not performed, S626 is not performed. In the second video buffer queue, each frame of encoded image data includes the frame of encoded image and a shooting timestamp.

In a possible implementation, the mixer 1 may determine, from the second video buffer queue based on the timestamp Y and the specific video duration, the start frame for mixing (determine a first frame of encoded image for mixing this time), and determine whether to end encapsulation.

First, the start frame is determined.

The mixer 1 may determine the start frame based on the timestamp Y, the specific video duration, and a timestamp of each encoded image in the second video buffer queue. The specific video duration may be preset, and the specific duration is not limited.

Specifically, the mixer 1 may determine a first time and a second time based on Y and the specific video duration, and determine, based on the second time, the start frame for mixing, and determine, based on the first time, whether to mix one frame of encoded image, to be specific, whether to end mixing.

For example, the specific video duration is 3s, and the electronic device determines to mix images shot within 1.5s before Y and 1.5s after Y. The electronic device may select, from the second video buffer queue, encoded images whose timestamps satisfy a time range from Y-1.5s (the second time) to Y+1.5s (the first time) for inputting into the mixer 1 for mixing. In this case, the electronic device may determine that an image whose timestamp is closest to Y1-1.5s in the second video buffer queue is the start frame. Certainly, an image whose timestamp is closest to Y-1s may alternatively be determined, based on Y-1s, from the second video buffer queue as the start frame. A specific manner of selecting the start frame is not limited.

**Second, determine to end encapsulation.** The mixer 1 starts encapsulation, and marks each frame of encapsulated image, indicating that the electronic device has obtained the image. When an image frame is obtained next time (one frame of image next to the marked image is obtained from the second video buffer queue), the image frame only needs to be obtained in sequence based on a location that is previously marked. When a new (an (i+1)^{th}) image frame is obtained, it is determined whether duration from the current frame to the start frame satisfies the specific video duration. If the specific video duration is satisfied, encapsulation is performed; or if the specific video duration is not satisfied, encapsulation is not performed, and encapsulation is ended.

Optionally, the mixer 1 may determine whether a first time difference between a time of a timestamp of the first frame of encapsulated encoded image (the timestamp of the start frame) and a time of a timestamp of a current frame of encapsulated image (the timestamp of the (i+1)^{th} frame) satisfies the specific video duration. When the first time difference is greater than or equal to (greater than) the specific video duration, it is determined that the specific video duration is satisfied, and the next frame of image is not encapsulated (mixing of the dynamic image is ended), and S626 is not performed. When the first time difference is less than (less than or equal to) the specific video duration, it is determined that the specific video duration is not satisfied, and the next frame of image continues to be encapsulated (the foregoing mixing is not completed, and mixing of the dynamic image is continued), and S626 continues to be performed.

For example, when the time difference between the timestamp of the (i+1)^{th} frame and the timestamp of the start frame is greater than the specific video duration: 3s, the specific video duration is not satisfied; and otherwise, the specific video duration is satisfied. If the time difference between the timestamp of the (i+1)^{th} frame and the timestamp of the start frame is 2.87s and less than 3 seconds, the (i+1)^{th} frame is encapsulated; or if time difference between the timestamp of the (i+1)^{th} frame and the timestamp of the start frame is 3.001s and greater than 3 seconds, the (i+1)^{th} frame is not encapsulated, and the image mixing of this time is ended.

Optionally, the mixer 1 may determine whether the timestamp of the current frame of encapsulated image is less than (less than or equal to) Y and the determined ending time of the specific video duration, and when the timestamp of the current frame of encapsulated image is less than (less than or equal to) Y and the determined ending time of the specific video duration, the (i+1)^{th} frame is encapsulated; or when the timestamp of the current frame of encapsulated image is greater than or equal to (greater than) the ending time, the (i+1)^{th} frame is not encapsulated, and the image mixing of this time is ended.

For example, it is determined whether the timestamp of the frame of image is less than (less than or equal to) Y+1.5s (the second time) (the start time is Y-1.5s, and the start time is selected on this basis). When the timestamp of the frame of image is less than or equal to (less than) Y + 1.5s, the (i+1)^{th} frame is encapsulated; or when the timestamp of the frame of image is greater than (greater than or equal to) Y+1.5s, it is determined not to encapsulate the (i+1)^{th} frame, and the electronic device may determine to end image mixing.

In another possible implementation, the mixer 1 may determine, from the second video buffer queue based on the timestamp Y and the specific quantity of frames of the video, the start frame for mixing (determine a first frame of encoded image for mixing this time), and determine when to end encapsulation.

The mixer 1 may obtain encoded images based on the timestamp Y, the specific quantity of frames of the video, and the timestamp of each encoded image in the second video buffer queue. The electronic device may select, from the second video buffer queue before and after the timestamp Y, successive encoded images whose quantity is the specific quantity of frames of the video, and input the encoded images into the mixer 1. The specific quantity of frames of the video may be preset, and is not limited. After string encapsulation, the mixer 1 marks each frame of encapsulated image, indicating that the electronic device has obtained the image. When an image frame is obtained next time (one frame of image next to the marked image is obtained from the second video buffer queue), the image frame only needs to be obtained in sequence based on a location that is previously marked. When the new (the (i+1)^{th}) image frame is obtained, it is determined whether a quantity of frames from the current frame to the start frame reaches the specific quantity of frames of the video. If the specific quantity of frames of the video is not reached or is just reached, encapsulation is performed; or if the specific quantity of frames of the video is exceeded, encapsulation is not performed, and encapsulation is ended.

For example, if the specific quantity of frames of the video is 40, the electronic device may determine 20 successive frames whose timestamps are before Y and 20 successive frames whose timestamps are after Y1 as the encoded images, and input a smallest time difference from Y. In this case, the electronic device may determine the 20 frames of images before the timestamp Y from the second video buffer queue, and determine one frame of image whose timestamp is earliest in the 20 image frames as the start frame. In a sequential encapsulation process, a quantity of encapsulated frames is determined. When the quantity of frames is less than or equal to 40, it is determined to perform encapsulation, or when the quantity of frames is greater than 40, encapsulation is not performed, and image mixing is ended.

In S625, the start frame is the first frame of encoded image for starting mixing.

S626: The mixer 1 sends an image mixing continuation request to the video queue module.

When determining to encapsulate the next frame of image, the mixer 1 may send the image mixing continuation request to the video queue module. Correspondingly, the video queue module may receive the image mixing continuation request from the mixer 1.

S627: The mixer 1 sends an audio data mixing starting request to the audio queue module.

After the first file is created, the mixer 1 may send the audio data mixing starting request to the audio queue module. Correspondingly, the audio queue module may receive the audio data mixing starting request from the mixer 1.

S628 to S630: Audio mixing cycle: After S630 is performed, the audio queue module continues to perform S628, to mix a next frame. When it is determined not to encapsulate the next frame of audio in S629, the cycle is ended.

S628: The audio queue module sends k^{th} encoded audiovisual data to the mixer 1.

Correspondingly, the mixer 1 may receive the k^{th} encoded audiovisual data from the audio queue module.

S629: The mixer 1 determines whether to encapsulate the next frame of audio.

In S620, the mixer 1 obtains the timestamp Y. The electronic device may determine, from the second audio buffer queue based on the timestamp Y and specific audio duration (or a specific quantity of frames of the audio), a start frame (a 1st frame of encoded audio) for mixing, and starts encapsulation. Each time one frame of audio is encapsulated in the mixer, it is marked that the frame of audio has been consumed by the mixer 1. Before one frame of audio is encapsulated, the electronic device determines when to encapsulate the frame of audio, so that the electronic device can determine when to end encapsulation. If encapsulation is performed, S630 is performed; or if encapsulation is not performed, S630 is not performed. In the second audio buffer queue, each frame of encoded audio data includes the frame of encoded audio and an acquisition timestamp.

In a possible implementation, the mixer 1 may determine, from the second audio buffer queue based on the timestamp Y and the specific audio duration, the start frame for mixing (determine a first frame of encoded audio for mixing this time), and determine when to end encapsulation.

First, the start frame is determined.

The mixer 1 may determine the start frame based on the timestamp Y, the specific audio duration, and a timestamp of each encoded audio in the second audio buffer queue. The specific audio duration may be preset, and the specific duration is not limited.

For example, the specific audio duration is 3s, and the electronic device determines to mix audio acquired within 1.5s before Y and 1.5s after Y. The electronic device may select, from the second audio buffer queue, encoded audio whose timestamps satisfy a time range from Y-1.5s to Y+1.5s for inputting into the mixer 1 for mixing. In this case, the electronic device may determine that audio whose timestamp is closest to Y1-1.5s in the second audio buffer queue is the start frame. Certainly, audio whose timestamp is closest to Y-1s may alternatively be determined, based on Y-1s, from the second audio buffer queue as the start frame. For selection of the start frame, refer to related descriptions of FIG. 11A to FIG. 11E. The specific manner is not limited.

**Second, determine to end encapsulation.** The mixer 1 starts encapsulation, and marks each frame of encapsulated audio, indicating that the electronic device has obtained the image. When an audio frame is obtained next time (one frame of audio next to the marked audio is obtained from the second audio buffer queue), the audio frame only needs to be obtained in sequence based on a location that is previously marked. When a new (an (i+1)^{th}) audio frame is obtained, it is determined whether duration from the current frame to the start frame satisfies the specific audio duration. If the specific audio duration is satisfied, encapsulation is performed; or if the specific audio duration is not satisfied, encapsulation is not performed, and encapsulation is ended.

Optionally, the mixer 1 may determine whether a second time difference between a time of a timestamp of the first frame of encapsulated encoded audio (the timestamp of the start frame) and a time of a timestamp of a current frame of encapsulated audio (the timestamp of the (i+1)^{th} frame) satisfies the specific audio duration. When the first time difference is greater than or equal to (greater than) the specific audio duration, it is determined that the specific audio duration is satisfied, and the next frame of audio is not encapsulated (mixing of the dynamic image is ended), and S630 is not performed. When the second time difference is less than (less than or equal to) the specific audio duration, it is determined that the specific audio duration is not satisfied, and the next frame of audio continues to be encapsulated (the foregoing mixing is not completed, and mixing of the dynamic image is continued), and S630 continues to be performed.

For example, when the time difference between the timestamp of the (i+1)^{th} frame and the timestamp of the start frame is greater than the specific audio duration: 3s, the specific audio duration is not satisfied; and otherwise, the specific audio duration is satisfied. If the time difference between the timestamp of the (i+1)^{th} frame and the timestamp of the start frame is 2.87s and less than 3 seconds, the (i+1)^{th} frame is encapsulated; or if time difference between the timestamp of the (i+1)^{th} frame and the timestamp of the start frame is 3.001s and greater than 3 seconds, the (i+1)^{th} frame is not encapsulated, and the audio mixing of this time is ended.

Optionally, the mixer 1 may determine whether the timestamp of the current frame of encapsulated audio is less than (less than or equal to) Y and the determined ending time of the specific audio duration, and when the timestamp of the current frame of encapsulated image is less than (less than or equal to) Y and the determined ending time of the specific video duration, the (i+1)^{th} frame is encapsulated; or when the timestamp of the current frame of encapsulated image is greater than or equal to (greater than) the ending time, the (i+1)^{th} frame is not encapsulated, and the audio mixing of this time is ended.

For example, it is determined whether the timestamp of the frame of audio is less than (less than or equal to) Y+1.5s (the start time is Y-1.5s, and the start time is selected on this basis). When the timestamp of the frame of audio is less than or equal to (less than) Y+1.5s, the (i+1)^{th} frame is encapsulated; or when the timestamp of the frame of audio is greater than (greater than or equal to) Y+1.5s, it is determined not to encapsulate the (i+1)^{th} frame, and the electronic device may determine to end audio mixing.

In another possible implementation, the mixer 1 may determine, from the second audio buffer queue based on the timestamp Y and the specific quantify of frames of the audio, the start frame for mixing (determine a first frame of encoded audio for mixing this time), and determine when to end encapsulation.

The mixer 1 may obtain the encoded audio based on the timestamp Y, the specific quantity of frames of the audio, and a timestamp of each encoded audio in the second audio buffer queue. The electronic device may select, from the second audio buffer queue before and after the timestamp Y, successive encoded audio whose quantity is the specific quantity of frames of the audio, and input the encoded audio into the mixer 1. The specific quantity of frames of the audio may be preset, and is not limited. After starting encapsulation, the mixer 1 marks each frame of encapsulated audio, indicating that the electronic device has obtained the audio. When an audio frame is obtained next time (one frame of audio next to the marked audio is obtained from the second audio buffer queue), the audio frame only needs to be obtained in sequence based on a location that is previously marked. When a new (an (i+1)^{th}) audio frame is obtained, it is determined whether a quantity of frames from the current frame to the start frame reaches the specific quantity of frames of the audio. If the specific quantity of frames of the audio is not reached or is just reached, encapsulation is performed; or if the specific quantity of frames of the audio is exceeded, encapsulation is not performed, and encapsulation is ended.

For example, if the specific quantity of frames of the audio is 60, the electronic device may determine 30 successive frames whose timestamps are before Y and 30 successive frames whose timestamps are after Y1 as the encoded audio, and input a smallest time difference from Y. In this case, the electronic device may determine the 30 frames of audio before the timestamp Y from the second audio buffer queue, and determine one frame of audio whose timestamp is earliest in the 30 audio frames as the start frame. In a sequential encapsulation process, a quantity of encapsulated frames is determined. When the quantity of frames is less than or equal to 30, it is determined to perform encapsulation, or when the quantity of frames is greater than 30, encapsulation is not performed, and audio mixing is ended.

The start frame in S629 is the first frame of encoded audio for starting mixing.

S630: The mixer 1 sends an audio mixing continuation request to the audio queue module.

When it is determined to encapsulate the next frame of audio, the audio mixing continuation request may be sent to the audio queue module. Correspondingly, the audio queue module may receive the audio mixing continuation request from the mixer 1.

An execution sequence is not limited between S624 to S626 and S628 to S630, and the steps are performed in parallel.

S631: The mixer 1 encapsulates the i^{th} frame of encoded image data and the k^{th} frame of encoded audio data to the first video.

When obtaining the i^{th} frame of encoded image data and the k^{th} frame of encoded audio data, the mixer 1 may encapsulate the i^{th} frame of encoded image data and the k^{th} frame of encoded audio data to the first video. i is an integer from 1 to I, and k is an integer from 1 to K. I and K are both integers greater than 1.

S632: The mixer 1 sends a first video mixing complete notification to the dynamic photo module.

Correspondingly, the dynamic photo module receives the video mixing complete notification from the mixer 1. The first video mixing complete notification may include an identifier of the first video, and indicates that encapsulation of the first video has been completed, and may prepare for subsequent dynamic image splicing.

S633: The memory stores the first video into the first file.

After S631 is performed, the memory may store the first video into the first file after mixing is completed.

An execution sequence is not limited between S632 and S633.

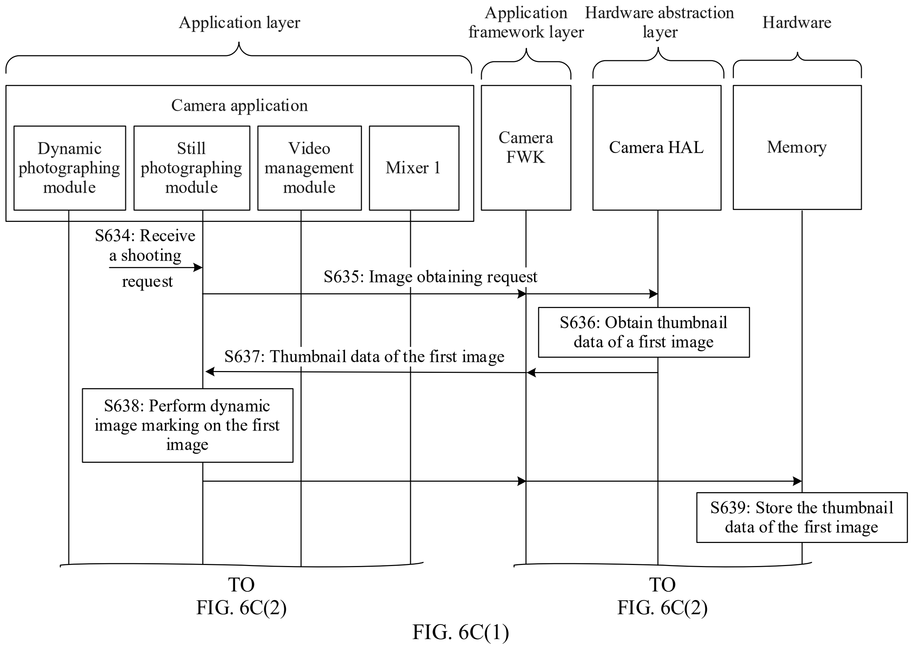

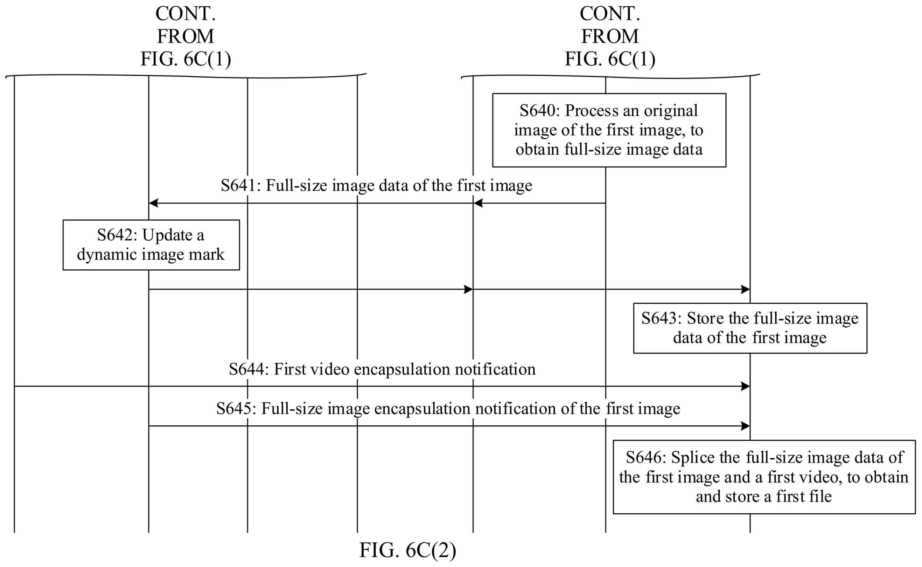

FIG. 6C(1) and FIG. 6C(2) are a schematic flowchart of a method for shooting photos and encapsulating a dynamic image in a dynamic mode according to an embodiment of this application.

When the electronic device enters the camera shooting preview picture and the dynamic mode is in the enabled state, the user may tap the shooting control on the interface. When tap-to-shoot is performed (as shown in FIG. 1C), the still photographing module and dynamic shooting module both receive the shooting request. Action execution of the dynamic shooting module is shown in S601, and action execution of the still photographing module is shown in S634. Afterwards, before obtaining the first video, the electronic device does not receive another shooting request. To be specific, the electronic device processes one shooting of the user, and stops encoding and mixing after processing the shooting. The still photographing module detects the user operation, and determines that the electronic device shoots a still image (the first image). When the first video and the first image are obtained, the dynamic image may be encapsulated. The following is described in detail:
S634: The still photographing module receives the shooting request.

In the foregoing S601, when the user taps to shoot, the dynamic shooting mode and the still photographing mode both receive the shooting request. For details of S634, refer to descriptions of S601. Details are not described herein.

S635: The still photographing module sends an image obtaining request to the camera HAL by using the camera FWK.

After performing S634, the still photographing module may send the image obtaining request to the camera HAL by using the camera FWK. Correspondingly, the camera HAL may receive the image obtaining request from the still photographing module by using the camera FWK.

S636: The video buffer module obtains thumbnail data of the first image.

After receiving the image obtaining request, the camera HAL may immediately obtain the first image from the camera, and obtain the thumbnail data of the first image. The thumbnail data may include a thumbnail and a timestamp of the first image. After the user taps to shoot, the electronic device obtains the thumbnail of the first image, and the thumbnail may be displayed in the gallery control shown in FIG. 1D.

S637: The camera HAL sends the thumbnail data of the first image to the still photographing module by using the camera FWK.

After obtaining the thumbnail data of the first image, the camera HAL may send the thumbnail data of the first image to the still photographing module by using the camera FWK. Correspondingly, the still photographing module may receive, by using the camera FWK, the thumbnail data that is of the first image and that is sent by the camera HAL. The first image in the thumbnail data has poor quality, low pixels, and a small data volume.

S638: The still photographing module performs dynamic image marking on the first image.

A dynamic image includes an image and video data. The image needs to be obtained through shooting, and further needs to be encapsulated together with a video, to become a dynamic image. Therefore, dynamic image marking needs to be performed in advance. In addition, marking at this time further indicates that the current first image is a thumbnail.

S639: The memory stores the thumbnail data of the first image.

After the still photographing module obtains the thumbnail data of the first image, the memory stores the thumbnail data of the first image.

In this case, the gallery can obtain a storage record and a dynamic image mark of the first image, and has stored the thumbnail of the first image.

S640: The camera HAL processes an original image of the first image, to obtain full-size image data.

The camera HAL obtains the full-size image data after processing. The first image has higher pixels and a better effect. A volume of the full-size image data of the first image is greater than that of the thumbnail data.

S641: The camera HAL sends the full-size image data of the first image to the still photographing module by using the camera FWK.

Correspondingly, the still photographing module may receive, by using the camera FWK, the full-size image data of the first image from the camera HAL.

S642: The still photographing module updates a dynamic image record.

After S641 is performed, the still photographing module may update the dynamic image record. The updated dynamic image record may indicate that the full-size image data of the first image is currently obtained.

In this case, the gallery can obtain the updated storage record and the dynamic image mark of the first image, and has stored the full-size image data of the first image.

S643: The memory stores the full-size image data of the first image.

After the still photographing module obtains the full-size image data of the first image, the memory stores the full-size image data of the first image.

S644: The dynamic photographing module sends a first video encapsulation notification to the memory.

After obtaining the first video mixing complete notification (S632 is performed), the dynamic photographing module may send the first video encapsulation notification to the memory. Correspondingly, the memory may receive the first video encapsulation notification from the dynamic photographing module.

S645: The still photographing module sends a full-size image encapsulation notification of the first image to the memory.

After performing S642, the still photographing module may send the full-size image encapsulation notification of the first image to the memory. Correspondingly, the memory may receive the full-size image encapsulation notification of the first image from the still photographing module.

S646: The memory splices the full-size image data of the first image and the first video, to obtain and store the first file.

In S633, the electronic device has stored the first video into the first file. Under a condition of performing S644 and S645, the memory splices the full-size image data of the first image and the first video, and performs encapsulation based on description information of the dynamic image, to obtain the first file (dynamic image). Then, the first file is stored. After the first file is stored into the gallery, the gallery is enabled through tapping (as shown in FIG. 1H). A gallery preview picture of the electronic device may include a dynamic image of the first file, for example, the dynamic image 181 in FIG. 1I. If the user taps to enter the dynamic image, (a) in FIG. 1E may be displayed. The user may play the dynamic image through long press. When the editing control 142a is tapped, the electronic device may display a plurality of frames of thumbnails in the video, and the full-size image (cover frame) of the first image. When the user long presses the first image, the electronic device plays the dynamic image. The dynamic image may be triggered in another operation to be played, or the dynamic image may not be played upon long press. This is not limited in this application.

Optionally, after splicing is completed, the gallery may be notified of updating a record of the first file.

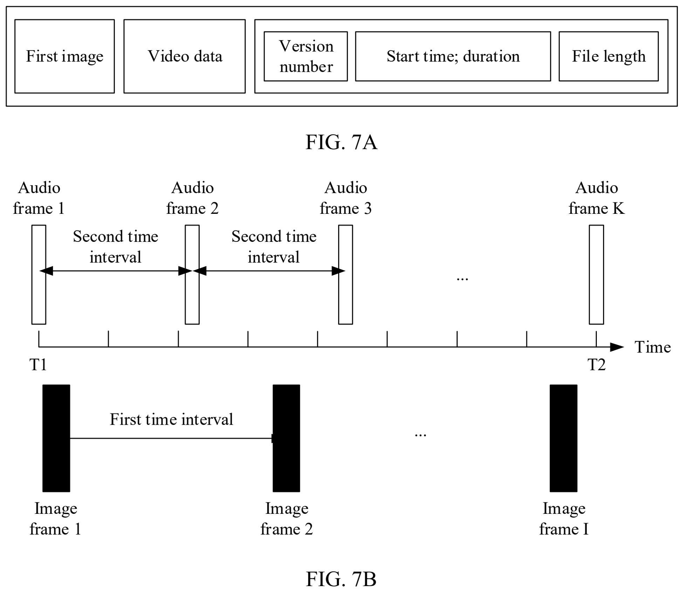

For example, FIG. 7A is a diagram of a format structure of a first file according to an embodiment of this application. As shown in FIG. 7A, the first file is a dynamic image file, and may include three fields. The first field is the full-size image data of the first image (a JPEG image, where in S643, the full-size image data of the first image is stored), and the second field is video data obtained after mixing is completed (the first video, that is, the first video stored in S633), for example, an mp4 file. The third field is a description field of the dynamic image (a field of description information), and the third field may include three subfields. The first subfield is a version number version. For example, the current version number is v2. The second subfield includes a start time start and duration duration. To be specific, the second subfield is used to record the playback start time start and the duration duration during gallery preview. The third subfield is TAG, and is used to record a file length of the first video.

The video data of the first file includes audio data and image data within encapsulation duration. FIG. 7B is a diagram of encapsulation time of audio data and video data of video data according to an embodiment of this application. As shown in FIG. 7B, it is assumed that first encapsulation duration and second encapsulation duration are both duration from T1 to T2. The video data includes a total of K audio frames and I image frames, where K and I are integers greater than 1. Frame numbers of the audio frames may be sequentially an audio frame 1, an audio frame 2, an audio frame 3, ..., and an audio frame K. Frame numbers of the image frames may be sequentially an image frame 1, an image frame 2, ..., and an image frame I. An acquisition duration interval between every two adjacent image frames is a first time interval, and an acquisition duration interval between every two adjacent audio frames is a second time interval. For example, the first time interval is 33 ms, the second time interval is 22 ms, the encapsulation time is 180 ms, K is 8, and I is 5.

**3. Stop encoding and mixing (as shown in** **FIG. 6D****) after single shooting is completed.**

FIG. 6D is a schematic flowchart of a method for stopping video encoding according to an embodiment of this application. The method for stopping video encoding **is steps to be performed after** FIG. 6A(1) and FIG. 6A(2) to FIG. 6C(1) and FIG. 6C(2) **are performed, to be specific, a process of stopping encoding when a continue-to-shoot control is not received.**

S647: The mixer 1 stops mixing when determining to stop mixing.

Specifically, in a process of performing S625 and S629, the mixer 1 determines whether to stop mixing. When determining not to encapsulate a next frame of image and a next frame of audio any more, the mixer 1 determines to stop mixing, and stops mixing, and no longer performs processing.

S648: The mixer 1 sends the first video mixing complete notification to the dynamic photographing module.

Correspondingly, the dynamic photographing module may receive the first video mixing complete notification from the mixer 1.

When it is determined that mixing of the first video is completed (execution of S631 is completed), S648 may be performed. S648 and S632 are a same execution step, and details are not described herein.

S649: The dynamic photographing module determines that a case in which mixing of the video of the dynamic image is not completed does not exist, and determines to stop the encoder.

A procedure in which the dynamic photographing module starts to determine whether to stop encoding when receiving the first video mixing complete notification is as follows: When the video that is of the dynamic image and whose mixing is not completed does not currently exist, the electronic device stops encoding the first video buffer queue and the first audio buffer queue; or when the video that is of the dynamic image and whose mixing is not completed currently exists, the electronic device continues to encode the first video buffer queue and the first audio buffer queue.

Specifically, the electronic device receives a shooting request, and adds a task of the shooting request to a task list. When a video mixing complete notification is received, the task of the corresponding shooting request may be determined and cleared. When obtaining a mixing complete notification each time, the electronic device first clears the task of the corresponding shooting request, and determines whether the task of the shooting request exists in the current task list. If the task is being processed, it may be determined that a case in which mixing of the video of the dynamic image is not completed exists. If no task exists (the task list is empty), it may be determined that a case in which mixing of the video of the dynamic image is not completed does not exist.

In S648, the electronic device receives only one shooting request currently, and enables the task of the shooting request. After receiving the first video mixing complete notification, the electronic device may clear the task of the shooting request, and the electronic device may determine that a case in which mixing of the video of the dynamic image is not completed does not exist, and may determine to stop the encoder.

S650: The dynamic photographing module sends the image data encoding stopping request to the video encoding module.

After S648 is performed, the dynamic photographing module performs S650, to be specific, may send the image data encoding stopping request to the video encoding module. Correspondingly, the video encoding module may receive the image data encoding stopping request from the dynamic photographing module.

S651: The video encoding module stops the video encoder.

After receiving the image data encoding stopping request, the video encoding module may stop the video encoder.

S652: The dynamic photographing module sends the audio data encoding stopping request to the audio encoding module.

After S648 is performed, the dynamic photographing module performs S652, to be specific, may send the audio data encoding stopping request to the audio encoding module. Correspondingly, the audio encoding module may receive the audio data encoding stopping request from the dynamic photographing module.

S653: The audio encoding module stops the audio encoder.

After receiving the audio data encoding stopping request, the audio encoding module may stop the audio encoder.

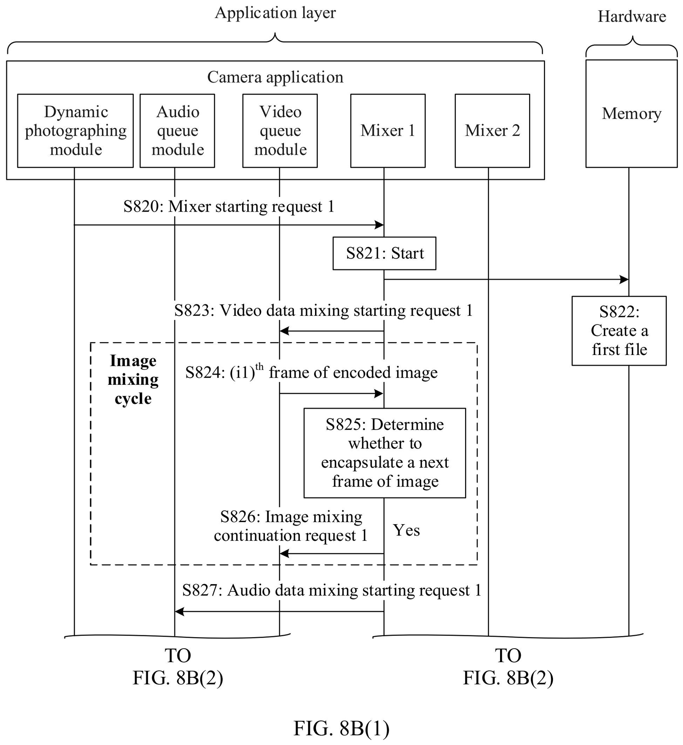

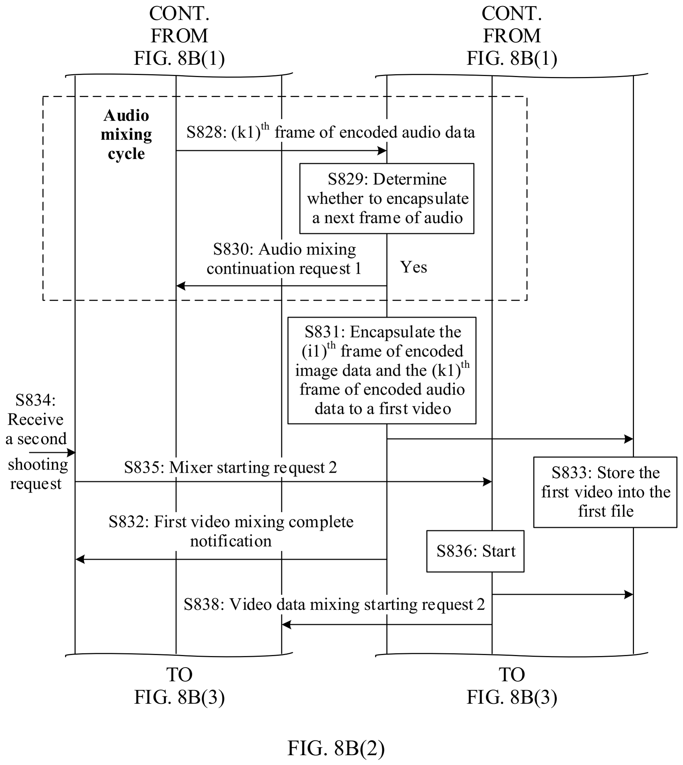

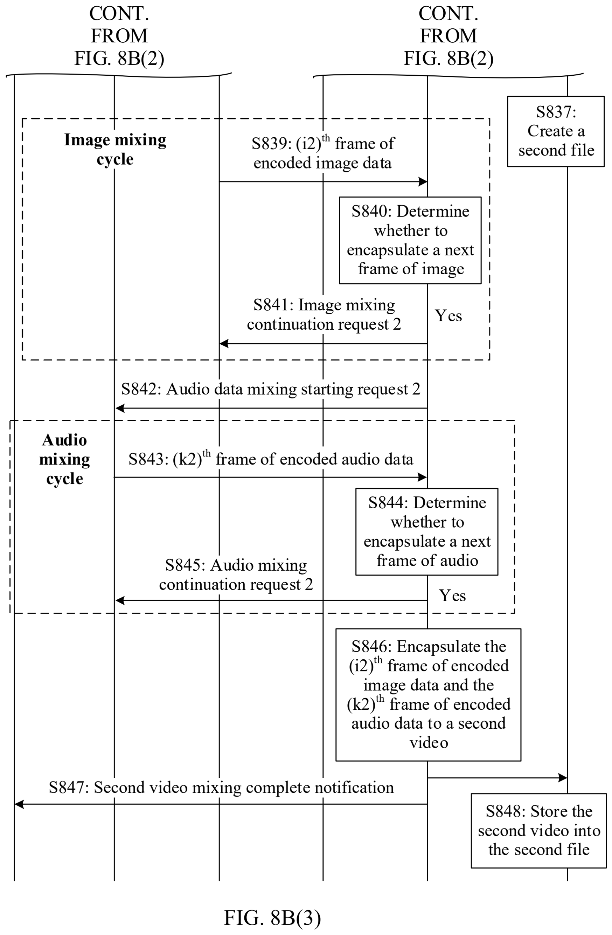

**4. Video encoding and mixing of dynamic images that are continuously shot for a plurality** of times (as shown in FIG. 8A(1) and FIG. 8A(2) and FIG. 8B(1), FIG. 8B(2), and FIG. 8B(3)).

FIG. 8A(1) and FIG. 8A(2) to FIG. 8C(1), FIG. 8C(2), and FIG. 8C(3) are another group of schematic flowcharts of a video data processing method in a dynamic mode according to an embodiment of this application.

When the electronic device enters the camera shooting preview picture and the dynamic mode is in the enabled state, the user may tap the shooting control on the interface for a plurality of successive times. Correspondingly, the dynamic photographing module detects, for a plurality of times, the user operation of shooting dynamic images, and determines that the electronic device needs to obtain videos and photos of a plurality of dynamic images. The following describes an encoding and mixing process of the plurality of dynamic images when the user shoots the dynamic images for a plurality of successive times.

In two shooting processes, the user triggers shooting twice, and the dynamic photographing module and the still photographing module both receive two shooting requests. When receiving the first shooting request, the dynamic photographing module starts the video encoder to start encoding, When the encoder is not stopped, the second shooting request is received. The video encoder and the audio encoder keep encoding, and encoding is stopped until mixing of the video corresponding to the second shooting request is completed. In the foregoing process of continuously shooting dynamic videos, encoding of two dynamic videos and audio requires only one encoding process (encoding once), the videos can be obtained through separate mixing (mixing for a plurality of times), and the encoders do not need to perform encoding separately and do not need to be separately started, to improve execution efficiency, thereby reducing encoding energy consumption. In addition, a problem that videos cannot be continuously generated when dynamic images are continuously shot can be resolved.

An example in which the user taps to shoot dynamic images successively twice is used for descriptions, and a method procedure of burst shooting with three times or more times is similar.

S801 to S819: Receive the shooting request for the first time, and enable an audio and video encoding process.

S801: The dynamic photographing module receives a first shooting request.

When the dynamic mode is enabled, the user starts to trigger shooting for the first time, and the dynamic shooting module can receive the first shooting request. Therefore, the first video is obtained by triggering encoding and first mixing. Specifically, for tap-to-shoot by the user for the first time, refer to related descriptions of S601 and FIG. 1C, and details are not described herein.

**S802 to S811: Start video encoding.**

S802: The dynamic photographing module sends an image encoding starting request to the video encoding module.

S803: The video encoding module starts the video encoder.

S804: The video encoding module sends an image data encoding starting request to the video management module.

S805: The video management module sends an image data encoding request to the video acquisition module by using the post camera.

S806: The video buffer module obtains an n^{th} frame of to-be-encoded image.

S807: The video buffer module sends the n^{th} frame of to-be-encoded image to the video encoding module by using the post camera.

S808: The video encoding module encodes the n^{th} frame of to-be-encoded image, to obtain an n^{th} frame of encoded image.

S809: The video encoding module sends an image data encoding continuation request to the video management module.

S810: The video encoding module sends the n^{th} frame of encoded image to the video queue module.

S811: The video queue module buffers the n^{th} frame of encoded image.

**S812 to S819: Start audio encoding.**

S812: The dynamic photographing module sends an audio encoding starting request to the audio encoding module.

S813: The audio encoding module starts the audio encoder.

S814: The audio encoding module sends an audio data encoding starting request to the audio buffer module.

S815: The audio buffer module sends an m^{th} frame of to-be-encoded audio to the audio encoding module.

S816: The audio encoding module encodes the m^{th} frame of to-be-encoded audio, to obtain an m^{th} frame of encoded audio.

S817: The audio encoding module sends an audio data encoding continuation request to the audio buffer module.

S818: The audio encoding module sends the m^{th} frame of encoded audio to the audio queue module.

S819: The audio queue module buffers the m^{th} frame of encoded audio.

For specific descriptions of S801 to S819, refer to related descriptions of S601 to S619 in FIG. 6A(1) and FIG. 6A(2). Details are not described herein.

FIG. 8B(1), FIG. 8B(2), and FIG. 8B(3) **show a method procedure of invoking two mixers to separately mix encoded audio and videos for two shootings, to obtain two videos.**

**S820 to S833: The user triggers dynamic shooting for the first time, and the mixer 1 mixes encoded audio and images, to obtain the first video.**

S820: The dynamic photographing module sends a mixer starting request 1 to the mixer 1.

The mixer starting request 1 is used to request the mixer 1 to be started. After performing S801, the dynamic photographing module may perform S820.

The mixer starting request 1 includes a timestamp of the first shooting request, namely, a timestamp Y1 when the electronic device obtains the first shooting operation of the user.

S821: The mixer 1 is started.

S822: The memory creates the first file.

The first file is a file of a dynamic image obtained by triggering dynamic shooting for the first time.

S823: The mixer 1 sends a video data mixing starting request 1 to the video queue module.

S824 to S826: Image mixing cycle.

S824: The video queue module sends an (i1)^{th} frame of encoded image data to the mixer 1.

i1 is an integer from 1 to I1.

S825: The mixer 1 determines whether to encapsulate the next frame of image.

In S820, the mixer 1 obtains the timestamp Y1. The electronic device may determine, from the second video buffer queue based on the timestamp Y1, the specific video duration (or the specific quantity of frames of the video), the start frame for mixing, and starts encapsulation; and may determine when to end encapsulation in the encapsulation process. In the second video buffer queue, each frame of encoded image data includes the frame of encoded image and a shooting timestamp.

For specific descriptions of S825, refer to related descriptions of S625. Details are not described herein.

S826: The mixer 1 sends an image mixing continuation request 1 to the video queue module.

S827: The mixer 1 sends an audio data mixing starting request 1 to the audio queue module.

S828 to S830: Audio mixing cycle.

S828: The audio queue module sends a (k1)^{th} frame of encoded audiovisual data to the mixer 1.

k1 is an integer from 1 to K1. I1 and K1 are both integers greater than 1.

S829: The mixer 1 determines whether to encapsulate the next frame of audio.

For specific descriptions of S829, refer to related descriptions of S629. Details are not described herein.

S830: The mixer 1 sends an audio mixing continuation request 1 to the audio queue module.

S831: The mixer 1 encapsulates the (i1)^{th} frame of encoded image data and the (k1)^{th} frame of encoded audio data to the first video.

Only after the mixer 1 encapsulates I1 frames of encoded image data and K1 frames of encoded audio data into the first video, the mixer 1 can determine that encapsulation of the first video is completed.

S832: The mixer 1 sends the first video mixing complete notification to the dynamic photographing module.

After completing encapsulating the first video, the mixer 1 may continue to perform S832.

In embodiments of this application, when the dynamic photographing module receives the first video mixing complete notification, the electronic device may obtain the first video.

S833: The memory stores the first video into the first file.

For specific descriptions of S820 to S833, refer to related descriptions of steps S620 to S633, and details are not described herein again.

An execution sequence is not limited between S832 and S833.

**S834 to S848: The user triggers dynamic shooting for the second time, and the mixer 2 mixes encoded audio and images, to obtain the second video.**

S834: The dynamic photographing module receives a second shooting request.

In this case, when the dynamic mode is in the enabled state, after shooting is triggered for the first time, the user triggers shooting for the second time when encoding of a first dynamic image is not completed. With reference to FIG. 8B(1), FIG. 8B(2), and FIG. 8B(3), before receiving the first video mixing complete notification, the dynamic photographing module receives the second shooting request. The dynamic photographing module continues encoding, that is, the video encoding module and the audio encoding module continue to perform encoding. To be specific, video encoding and audio encoding continue to be cycled, and encoding is stopped until mixing for the second time is completed.

**In embodiments of this application, after encoding is started for the first shooting request, when the encoder is not stopped, the second shooting request for obtaining the dynamic image is received. The second shooting request is after the first shooting request in time. In this case, the execution step S834 is before S832. To be specific, the electronic device receives the second shooting request before mixing of the first video is completed.**

**Therefore, when the audio encoder and the video encoder are not stopped, if the electronic device receives the second shooting request, in this case, a new audio encoder and a new video encoder are not started for the second shooting request, but the foregoing audio encoder and the foregoing video encoder are kept encoding.**

For details of S834, refer to related descriptions of S801 and S601. Details are not described herein.

S835: The dynamic photographing module sends a mixer starting request 2 to the mixer 2.

The mixer starting request 2 includes a timestamp of the second shooting request (in S834), namely, a timestamp Y2 when the electronic device obtains the second shooting operation of the user.

The mixer starting request 2 is used to request the mixer 2 to be started.

S836: The mixer 2 is started.

S837: The memory creates the second file.

The second file is a file of a dynamic image obtained by triggering dynamic shooting for the second time.

S838 to S846: Process of mixing images and audio by the mixer 2. Refer to S623 to S631.

S838: The mixer 2 sends a video data mixing starting request 2 to the video queue module.

S839: The video queue module sends an (i2)^{th} frame of encoded image data to the mixer 2.

i2 is an integer from 1 to I2.

S840: The mixer 2 determines whether to encapsulate the next frame of image.

For details of S840, refer to related descriptions of S625 and S825. Details are not described herein.

S841: The mixer 2 sends an image mixing continuation request 2 to the video queue module.

S842: The mixer 2 sends an audio data mixing starting request 2 to the audio queue module.

S843: The audio queue module sends a (k2)^{th} frame of encoded audiovisual data to the mixer 2.

k2 is an integer from 1 to K2. I2 and K2 are both integers greater than 1.

S844: The mixer 2 determines whether to encapsulate the next frame of audio.

For details of S844, refer to related descriptions of S629 and S829. Details are not described herein.

S845: The mixer 2 sends an audio mixing continuation request 2 to the audio queue module.

S846: The mixer 2 encapsulates the (i2)^{th} frame of encoded image data and the (k2)^{th} frame of encoded audio data to the second video.

The mixer 2 can determine that encapsulation of the second video is completed only after encapsulating I2 frames of encoded image data and K2 frames of encoded audio data into the second video.

After determining in S840 and S844, the second video includes I2 frames of encoded images and K2 frames of encoded audio. A time difference between the first fame (the 1st frame) and the last frame (the (I2)^{th} frame) of images in the I2 frames of encoded images is less than or equal to (less than) the first encapsulation duration; and a time difference between the first frame (the 1st frame) and the last frame (the (K2)^{th} frame) of audio in the K2 frames of encoded audio is less than or equal to (less than) the second encapsulation duration. A time difference between an (I2+1)^{th} frame of encoded image and the 1st frame of encoded image is greater than (greater than or equal to) the first encapsulation duration. A time difference between an (K2+1)^{th} frame of encoded audio and the 1st frame of encoded audio is greater than (greater than or equal to) the second encapsulation duration. The (I2+1)^{th} frame of encoded image is one frame of image located after the (I2)^{th} frame of encoded image in the second video buffer queue; and the (K2+1)^{th} frame of encoded audio is one frame of audio located after the (K2)^{th} frame of encoded audio in the second audio buffer queue.

S847: The mixer 2 sends a second video mixing complete notification to the dynamic photo module.

After completing encapsulating the second video, the mixer 2 may continue to perform S847.

S848: The memory stores the second video into the second file.

For specific descriptions of S835 to S848, refer to related descriptions of S620 to S633 and S820 to S833. Details are not described herein.

An execution sequence is not limited between S832 and S833.

FIG. 8C(1), FIG. 8C(2), and FIG. 8C(3) **show a method procedure of shooting photos and separately encapsulating videos obtained through mixing and shot photos, to obtain two dynamic images in two dynamic shootings.**

When tap-to-shoot is performed for the first time (as shown in FIG. 1C), the dynamic photo module and the still photographing module both receive the first shooting request. Specific action execution of the dynamic photo module is shown in S801, and specific action execution of the still photographing module is shown in S849. When tap-to-shoot is performed for the second time (as shown in FIG. 1F), the dynamic photo module and the still photographing module both receive the second shooting request. Specific action execution of the dynamic photo module is shown in S834, and specific action execution of the still photographing module is shown in S862.

**S849 to S861: The user triggers the first dynamic shooting, shoots the first image, and encapsulates the first video and the first image, to obtain the first file (the dynamic image obtained through the first shooting).**

S849: The still photographing module receives the first shooting request.

When the user triggers dynamic shooting for the first time, the dynamic photographing module and the still shooting module both receive the first shooting request. After receiving the first shooting request, the still shooting module triggers to obtain the first image, where the first image is used to generate the first dynamic image.

For details of S849, refer to related descriptions of S801 and S634. Details are not described herein.

S850: The still photographing module sends an image obtaining request 1 to the camera HAL by using the camera FWK.

S851: The video buffer module obtains the thumbnail data of the first image.

S852: The camera HAL sends the thumbnail data of the first image to the still photographing module by using the camera FWK.

S853: The still photographing module performs dynamic image marking on the first image.

S854: The memory stores the thumbnail data of the first image.

In this case, the electronic device may display the thumbnail of the first image in the gallery control in the shooting preview picture, as shown in FIG. 1D.

S855: The camera HAL processes the original image of the first image, to obtain the full-size image data.

S856: The camera HAL sends the full-size image data of the first image to the still photographing module by using the camera FWK.

S857: The still photographing module updates a dynamic image record 1.

S858: The memory stores the full-size image data of the first image.

S859: The dynamic photographing module sends the first video encapsulation notification to the memory.

After S832 is performed, the dynamic photographing module may send the first video encapsulation notification to the memory.

S860: The still photographing module sends the full-size image encapsulation notification of the first image to the memory.

S861: The memory splices the full-size image data of the first image and the first video, to obtain and store the first file.

In S833, the electronic device has stored the first video into the first file. After S859 and S860 are performed, that is, after two notifications of encapsulating the first video and the first image are received, the first file may start to be spliced. At this point, the electronic device obtains one dynamic image (the first file) through shooting, and does not obtain the second dynamic image. A dynamic image 181 shown in FIG. 1I may be displayed in the gallery.

For specific descriptions of S849 to S861, refer to related descriptions of steps S634 to S646, and details are not described herein again.

An execution sequence is not limited between S849 to S861 and S801 to S833. The first image may be obtained after the first video, or the first image may be obtained before the first video. When the user touches dynamic shooting for the first time, the dynamic photographing module and the still photographing module both receive the first shooting request. The still photographing module obtains the first image, and the dynamic photographing module obtains the first video. The two are processed almost in parallel and do not interfere with each other. Therefore, an execution sequence is not limited.

**S862 to S874: The user triggers the second dynamic shooting, shoots the second image, and encapsulates the second video and the second image, to obtain the second file (the dynamic image obtained through the second shooting).**

S862: The still photographing module receives the second shooting request.

When the user triggers dynamic shooting for the second time (as shown in FIG. 1F), the dynamic photographing module and the still shooting module both receive the second shooting request (S834 and S862 are performed). After receiving the second shooting request, the still shooting module triggers to obtain the second image, where the second image is used to generate the second dynamic image. Before the encoders (the video encoder and the audio encoder) are stopped, the still photographing module receives the second shooting request.

For specific descriptions of S862, refer to S834 and S634. Details are not described herein.

S863: The still photographing module sends an image obtaining request 2 to the camera HAL by using the camera FWK.

S864: The camera HAL obtains thumbnail data of the second image.

S865: The camera HAL sends the thumbnail data of the second image to the still photographing module by using the camera FWK.

S866: The still photographing module performs dynamic image marking on the second image.

S867: The memory stores the thumbnail data of the second image.

S868: The camera HAL processes an original image of the second image, to obtain full-size image data.

S869: The camera HAL sends the full-size image data of the second image to the still photographing module by using the camera FWK.

S870: The still photographing module updates a dynamic image record 2.

S871: The memory stores the full-size image data of the second image.

In embodiments of this application, the full-size image data of the first image and the second image is cover image data.

S872: The dynamic photographing module sends a second video encapsulation notification to the memory.

After S847 is performed, the dynamic photographing module receives the second video mixing complete notification, and may send the second video encapsulation notification to the memory.

S873: The still photographing module sends a full-size image encapsulation notification of the second image to the memory.

S874: The memory splices the full-size image data of the second image and the second video, to obtain and store the second file.

In S848, the electronic device has stored the second video into the second file. After S872 and S873 are performed, that is, after two notifications of encapsulating the second video and the second image are received, the second file may be encapsulated. At this point, the electronic device obtains two dynamic images (the first file) through shooting, and two dynamic images: 191A and 191B shown in FIG. 1J may be displayed in the gallery.

For specific descriptions of S862 to S874, refer to related descriptions of S634 to S646 and S849 to S861. Details are not described herein.

An execution sequence is not limited between S862 to S874 and S834 to S848. The second image may be obtained after the second video, or the second image may be obtained before the second video. Similarly, when the user touches dynamic shooting for the second time, the dynamic photographing module and the still photographing module both receive the second shooting request. The still photographing module obtains the second image, and the dynamic photographing module obtains the second video. The two are processed almost in parallel and do not interfere with each other. Therefore, an execution sequence is not limited.

Based on descriptions of FIG. 8A(1) and FIG. 8A(2) to FIG. 8C(1), FIG. 8C(2), and FIG. 8C(3), when the user continuously shoots dynamic images within a short time, if the dynamic photographing mode of the electronic device determines that a mixing task of a video is still being executed, encoding needs to be kept, and a processing process of stopping encoding is performed until mixing of all videos is completed and there is no mixing task. In this way, during dynamic image burst shooting, the image needs to be encoded only once, and a video of each dynamic image is separately mixed, so that a dynamic image shot each time can be obtained, thereby ensuring implementability of a solution of continuously shooting a plurality of dynamic images. In addition, a quantity of times of encoding can also be reduced, to improve execution efficiency, thereby saving processing resources.

5. **Stop encoding and mixing after burst shooting is completed (step S875 to step S884 shown in** **FIG. 8D****).**

FIG. 8D is a schematic flowchart of another method for stopping video encoding according to an embodiment of this application. The method for stopping video encoding **is steps to be performed after** FIG. 8A(1) and FIG. 8A(2) to FIG. 8C(1), FIG. 8C(2), and FIG. 8C(3) **are performed, to be specific, a process of stopping encoding when a continue-to-shoot control is not received.**

In embodiments of this application, when obtaining the first video or the second video, the electronic device determines whether to stop encoding. Specifically, when the video that is of the dynamic image and whose mixing is not completed does not currently exist, the electronic device stops encoding the first video buffer queue and the first audio buffer queue; or when the video that is of the dynamic image and whose mixing is not completed currently exists, the electronic device continues to encode the first video buffer queue and the first audio buffer queue.

S875: The mixer 1 is stopped when determining to stop mixing.

For S875, refer to related descriptions of S647, and details are not described herein.

S876: The mixer 1 sends the first video mixing complete notification to the dynamic photographing module.

S876 and S832 are a same execution step, and details are not described herein.

S877: The dynamic photographing module determines that a case in which mixing of the video of the dynamic image is not completed exists, and determines not to stop the encoder.

When receiving the video mixing complete notification, the dynamic photographing module triggers a procedure of determining whether to stop encoding. A procedure of determining whether to stop encoding is as follows: When the video that is of the dynamic image and whose mixing is not completed does not currently exist, the electronic device stops encoding the first video buffer queue and the first audio buffer queue; or when the video that is of the dynamic image and whose mixing is not completed currently exists, the electronic device continues to encode the first video buffer queue and the first audio buffer queue. To be specific, whether a mixing task is currently being processed, and the video mixing complete notification is not received. In this case, the dynamic photographing module receives a dynamic shooting message twice, but only receives the first video mixing complete notification of the first time (the second video mixing complete notification is not received). A mixing task is still being processed, and therefore it is determined not to stop encoding (encoding is continued). For a logic of determining whether a task exists in the task list, refer to related descriptions of S649. Details are not described herein.

FIG. 9A is a diagram of a change of a task queue according to an embodiment of this application. Specifically, as shown in FIG. 9A, the electronic device receives two shooting requests. Therefore, the task queue includes a task of the first shooting request and a task of the second shooting request. When receiving the first video mixing complete notification, the electronic device may clear the task of the first shooting request from the task queue. The task queue obtained after clearing includes the task of the second shooting request. The electronic device may determine that the current task queue further includes a task, and may determine that a case in which mixing of the video of the dynamic image is not completed exists. In embodiments of this application, the task queue is a task queue created in response to shooting a dynamic image through tapping by the user. When a shooting request is received, one corresponding task is created. When mixing of the video of the dynamic image is completed, the corresponding task is cleared.

In the foregoing processing process, before receiving the first video mixing complete notification, the dynamic photographing module receives the second shooting request. In this case, the electronic device does not receive the second video mixing complete notification for the second shooting request, and may determine that a case in which mixing of the video of the dynamic image is not completed exists, and determine not to stop the encoder.

S878: The mixer 2 is stopped when determining to stop mixing.

For S878, refer to related descriptions of S647 and S875. Details are not described herein.

S879: The mixer 2 sends the second video mixing complete notification to the dynamic photographing module.

S879 and S847 are a same execution step, and details are not described herein.

S880: The dynamic photographing module determines that a case in which mixing of the video of the dynamic image is not completed does not exist, and determines to stop the encoder.

When receiving the second video mixing complete notification, the dynamic photographing module triggers a procedure of determining whether to stop encoding. In this case, the dynamic photographing module receives a dynamic shooting message twice, receives two video mixing complete notifications, and does not receive a new shooting request before receiving the second video mixing complete notification. It is determined that a case in which mixing of the video of the dynamic image is not completed does not exist (the mixing tasks are both completed), and therefore it is determined to stop encoding, and S881 and S883 are performed.

FIG. 9B is a diagram of a change of another task queue according to an embodiment of this application. Specifically, the task of the first shooting request in the task queue shown in FIG. 9B has been cleared, and only the task of the second shooting request is included. When receiving the second video mixing complete notification, the electronic device may correspondingly clear the task of the second shooting request from the task queue. The task queue obtained after clearing has no task. The electronic device may determine that the current task queue has no task, and may determine that a case in which mixing of the video of the dynamic image is not completed does not exist.

Optionally, the dynamic photographing module receives a third shooting request before receiving the second video mixing complete notification, where the third shooting request is a user operation after the second shooting request. When receiving the second video mixing complete notification, the dynamic photographing module determines that mixing of the video of the dynamic image of the third shooting request is not completed, and may determine not to stop the encoders, and S881 to S884 are not performed. To be specific, the video encoder and the audio encoder keep encoding.

S881: The dynamic photographing module sends the image data encoding stopping request to the video encoding module.

S882: The video encoding module stops the video encoder.

S883: The dynamic photographing module sends the audio data encoding stopping request to the audio encoding module.

S884: The audio encoding module stops the audio encoder.

For S881 to S883, refer to related descriptions of S649 to S652, and details are not described herein

In the foregoing burst shooting process, the dynamic photographing module determines whether to stop encoding by determining whether processing of mixing tasks corresponding to all shooting requests in a current task thread is completed, and when receiving a mixing task complete notification each time, triggers shooting to perform the foregoing determining (S877 and S880). In this way, it can be ensured that encoding may be stopped when the mixing tasks of all the shooting requests are completed. In this way, during burst shooting of dynamic images, a case in which one encoder is started upon each shooting request can be avoided, to prevent a problem that encoding excessively occupies processing resources. This can also ensure mixing for a plurality of times with encoding once, to simplify an encoding logic and increase a processing speed, thereby saving processing resources.

Optionally, when the dynamic mode is enabled, if the dynamic mode cannot be detected after burst shooting (FIG. 8A(1) and FIG. 8A(2) to FIG. 8C(1), FIG. 8C(2), and FIG. 8C(3) are performed), encoding is stopped (FIG. 8D is performed). If the user taps to shoot a dynamic image again, encoding is restarted, to perform the process of FIG. 6A(1) and FIG. 6A(2) and FIG. 6B.

Optionally, when the dynamic mode is enabled, encoding is stopped (FIG. 6D is performed) after single shooting (FIG. 6A(1) and FIG. 6A(2) and FIG. 6B are performed). If the user taps to perform burst shooting, encoding is performed again, to perform the process of FIG. 8A(1) and FIG. 8A(2) to FIG. 8C(1), FIG. 8C(2), and FIG. 8C(3).

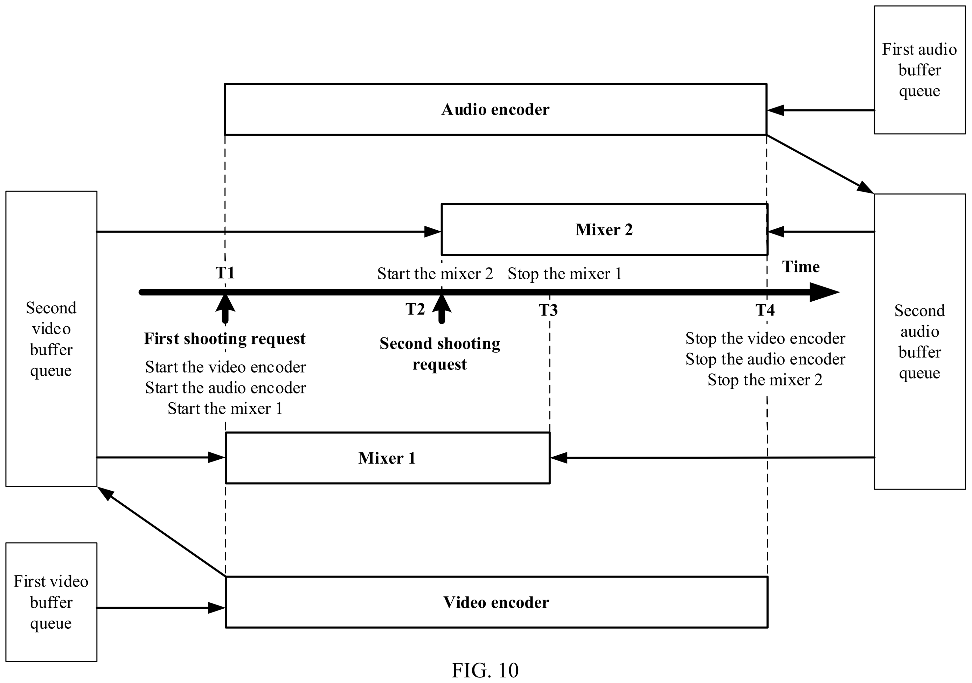

**With reference to the video encoding and mixing processes of** FIG. 8A(1) and FIG. 8A(2) **to** **FIG. 8D****,** **FIG. 10** **is an example of a diagram of mixed encoding of videos in dynamic images according to an embodiment of this application.**

As shown in FIG. 10, when the dynamic mode is enabled, the electronic device starts to buffer the first audio buffer queue and the first video buffer queue. A quantity of image frames in the first audio buffer queue and the first video buffer queue may be determined. For example, there are 45 frames in the first video buffer queue. When a quantity of frames of the first video buffer queue does not reach 45, with joining of new image frames, the quantity of frames in the first video buffer queue continuously increases; or when the quantity of frames of the first video buffer queue reaches 45, with joining of a new image frame, an old image frame is out of the queue (the last frame at the queue end is out of the queue), and 45 frames are kept. With acquisition of image frames, the first video buffer queue in FIG. 10 continuously moves forward, and image frames in the first video buffer queue also continuously flow. For the first audio buffer queue, refer to the descriptions of the first video buffer queue. Details are not described herein.

At a moment T1, when the user taps to shoot once, the electronic device receives the first shooting request, and starts the video encoder, the audio encoder, and the mixer 1. The video encoder obtains the to-be-encoded images from the first video buffer queue, encodes the to-be-encoded images, and buffers the encoded images into the second video buffer queue. The audio encoder obtains the to-be-encoded audio from the first audio buffer queue, encodes the to-be-encoded audio, and buffers the encoded audio into the second audio buffer queue. Quantities of frames of the second audio buffer queue and the second video buffer queue may also be determined. As the audio encoder outputs encoded audio and the video encoder outputs encoded images, data frames in the second audio buffer queue and the second video buffer queue also continuously flow. For details, refer to the descriptions of the first video buffer queue. Details are not described herein. The mixer 1 is started, and mixes encoded data of the second audio buffer queue and the second video buffer queue.

At a moment T2, mixing of the first video by the mixer 1 is not completed, and the video encoder and the audio encoder are also in an encoding process. The user taps to shoot again, and the electronic device receives the second shooting request, and starts the mixer 2. The mixer 2 is started, and may mix encoded data of the second audio buffer queue and the second video buffer queue.

At a moment T3, the mixer 1 completes mixing the first video, and the mixer 1 is stopped. In this case, mixing of the second video by the mixer 2 is not completed, and the video encoder and the audio encoder keep encoding. The mixer 1 may obtain the first video. A time at which the images and audio in the first video are acquired starts before a time at which the mixer 1 is started to a time at which the mixer 1 is stopped.

At a moment T4, mixing of the second video by the mixer 2 is completed, and no new shooting request is received in a process of encoding and mixing the second video. Mixing tasks of all shooting requests are completed, and the video encoder, the audio encoder, and the mixer 2 are all stopped. The mixer 2 may obtain the second video. A time at which the images and audio in the second video are acquired starts before a time at which the mixer 2 is started to a time at which the mixer 2 is stopped.

In the foregoing implementation, the encoder keeps encoding when a mixing task is being processed, so that a problem of failing to respond for encoding in time caused by burst shooting can be resolved. A plurality of mixers consume encoding results of a group of encoders, so that videos can be separately mixed in response to a plurality of shooting requests, to ensure that a dynamic image burst shooting effect can be achieved, thereby ensuring burst shooting experience of the user. In addition, one-way encoding and multi-way mixing can save encoding resources and improve encoding efficiency.

FIG. 11A to FIG. 11E are examples of a group of diagrams of producing and consuming image frames in a second video buffer queue according to an embodiment of this application. A specific flow direction of image frames in the encoding and mixing process is described with reference to FIG. 10.

In embodiments of this application, the second video buffer queue keeps specific queue duration or a specific quantity of frames of the queue. As the video encoder continuously performs encoding, newly encoded image frames are stored into the second video buffer queue, and the earliest image frame is removed from the second video buffer queue, to ensure the specific queue duration or the specific quantity of frames of the queue.

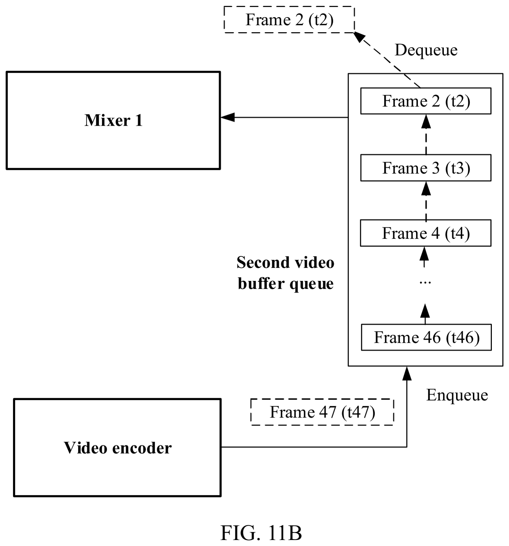

For example, as shown in FIG. 11A, the second video buffer queue includes a total of 45 frames, and each frame of data includes an encoded image frame and a timestamp (t). For example, a corresponding timestamp of an encoded image frame 1 is t1, a corresponding timestamp of an encoded image frame 2 is t2, ..., and a corresponding timestamp of an encoded image frame 45 is t45, where t1, t2, ..., and t45 are far to near in time (corresponding to the earliest to latest image frames). The video encoder obtains a new frame of encoded image, a frame 46 (t46) through encoding. The electronic device may enqueue the frame 46 (t46), and remove the encoded image frame corresponding to the earliest frame t1 from the second video buffer queue. As shown in FIG. 11B, the second video buffer queue changes to the frame 2 to the frame 46. With the video encoder obtains the new encoded image frame 47 through encoding, the second video buffer queue also dequeues the frame 2, and enqueues the frame 47. This is performed continuously until encoding ends.

At the moment T1, the mixer 1 starts to consume the encoded images in the second video buffer queue. As shown in FIG. 11A, the mixer 1 is started, and obtains the encoded images from the second video buffer queue for mixing. For a specific process, refer to related descriptions of S625 and S825. Details are not described herein.

For a process in which the mixer 1 and the mixer 2 select image frames for mixing (determine whether to mix frames in the second video buffer queue), refer to S625. The following is specifically described by using examples:

For example, the specific video duration is 3s, the mixer 1 obtains the timestamp T1 of the first shooting request, and the mixer 1 may determine that the first time is T1+1.5s, and the second time is T1-1.5s. The mixer 1 may determine, based on the second time, the 1st frame of encoded image that starts to be mixed (a start image frame for mixing), and in the second video buffer queue, t1<T1-1.5s≤t2 (or t1 ≤ T1-1.5s<t2), it may be determined that the frame 1 corresponding to t1 or the frame 2 corresponding to t2 is the 1st frame of encoded image. The mixer 1 sequentially obtains image frames according to a timestamp sequence starting from the start image frame.

For example, the specific video duration is 3s, the mixer 1 obtains the timestamp T1 of the first shooting request, may determine a timestamp of one frame of image based on T1, and determine the first time and the second time based on the timestamp. Timestamps of two successive frames: the frame 44 and the frame 45 in the second video buffer queue satisfy t44<T1≤t45, and t45 is closest to T1 in time. It may be determined that the first time is t45+1.5, and the second time is t45-1.5s. Certainly, the first time may alternatively be determined as t44+1.5, and the second time may be determined as t44-1.5s. If t1<t45-1.5s≤t2, the mixer 1 may determine that the frame 1 corresponding to t1 or the frame 2 corresponding to t2 is the 1st frame of encoded image.

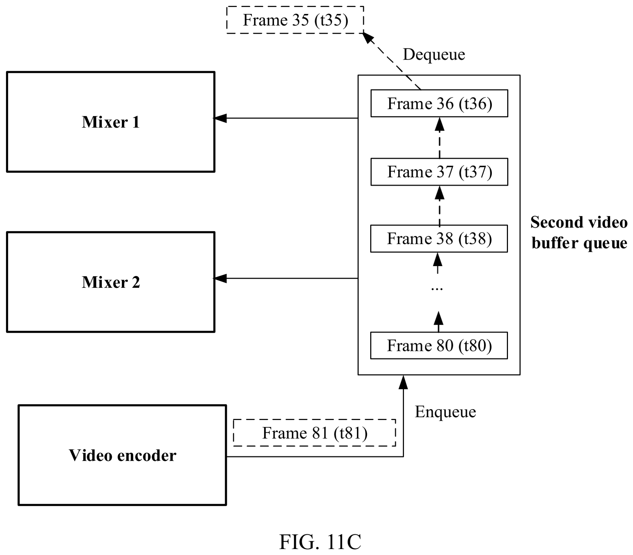

At the moment T2, the mixer 2 starts to consume the encoded images in the second video buffer queue, and the mixer 1 continues to consume the encoded images in the second video buffer queue. As shown in FIG. 11C, the mixer 1 and the mixer 2 separately obtain the encoded images from the second video buffer queue for mixing. In this case, the second video buffer queue includes encoded images of a frame 36 to a frame 80, and the second video buffer queue dequeues the frame 35 and enqueues the frame 81.

For example, the mixer 2 obtains the timestamp T2 of the second shooting request and the specific video duration 3s, and the mixer 2 may determine that the first time is T2+1.5s, and the second time is T2-1.5s. The mixer 2 may determine, based on the second time, the start image frame that starts to be mixed. For example, in the second video buffer queue, t36<T2-1.5s≤t37, and it may be determined that the frame 36 corresponding to t36 or the frame 37 corresponding to t37 is the start frame. The mixer 2 may perform mixing starting from the frame 36, or may perform mixing starting from the frame 37, and then sequentially obtain image frames in a timestamp sequence.

For example, after obtaining T2, the mixer 2 may determine that a timestamp that is of an image frame in the second video buffer queue and that is closest to T2 is t80. In this way, it may be determined that t80-1.5 is the second time, t80+1.5 is the first time, t36<t80-1.5≤t37, and the frame 36 corresponding to t36 or the frame 37 corresponding to t37 is the start frame.

In the foregoing process, the mixer 1 continues mixing. For example, the mixer 1 obtains the frame 38 and determines, based on the first time T1+1.5s, that t38<T1+1.5s and t37<T1+1.5s, and determines to mix the frame 38.

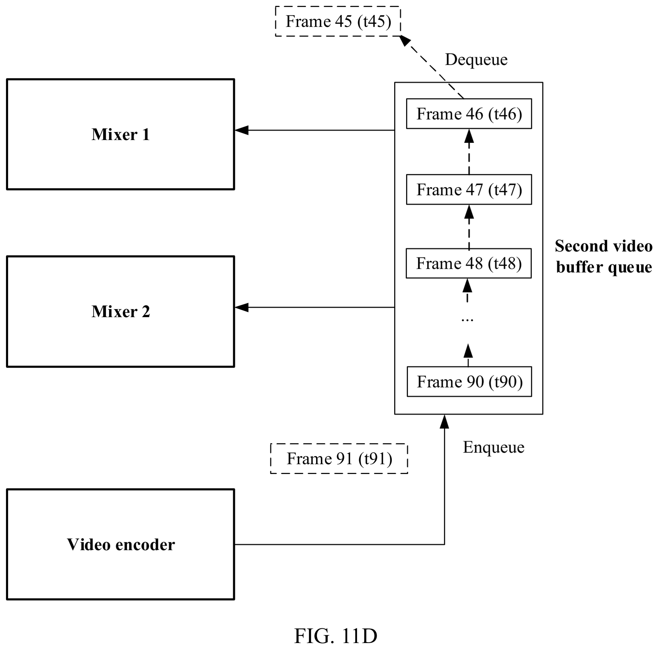

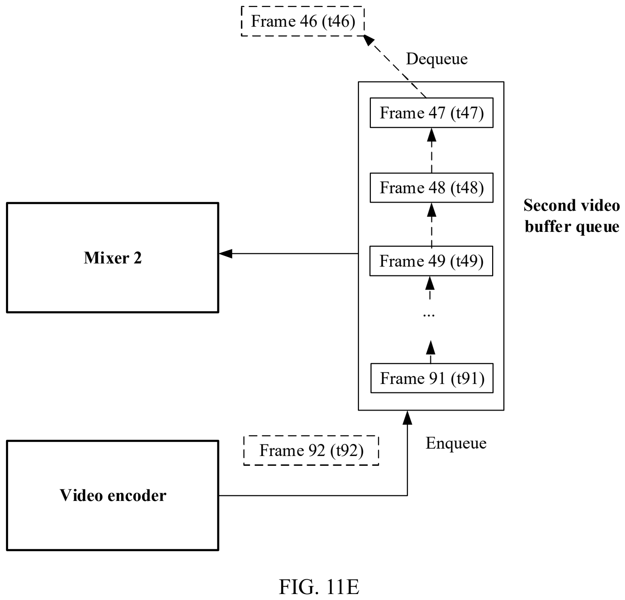

At the moment T3, the mixer 1 stops consuming the encoded images in the second video buffer queue, and the mixer 2 continues to consume the encoded images in the second video buffer queue. As shown in FIG. 11D, the mixer 1 and the mixer 2 are both consuming encoded images in the second video buffer queue. The second video buffer queue includes encoded images from the frame 46 to the frame 90. The video encoder outputs and enqueues the frame 91 and dequeues the frame 45. As shown in FIG. 11E, the second video buffer queue includes encoded images from the frame 47 to the frame 91. The mixer 1 ends encoding and stops consuming. The mixer 2 continues mixing. The mixer 1 and the mixer 2 consume some same encoded images, for example, the frame 36 to the frame 90.

For example, the mixer 1 determines that the first time is T1+1.5s, and determines, based on T1+1.5s, whether to continue mixing in the mixing process. In the second video buffer queue, if t90<T1+1.5s≤t91, it may be determined to end mixing at the frame 90 (the frame 90 is included in mixing) corresponding to t90, or it may be determined to end mixing at the frame 91 (the frame 91 is included in mixing) corresponding to t91. The mixer 1 may end mixing.

For example, the specific video duration is 3s, and the mixer 1 determines that the first time is t45+1.5. In the second video buffer queue, if t89<t45+1.5s≤t90, it may be determined to end mixing at the frame 89 (the frame 89 is included in mixing) corresponding to t89, or it may be determined to end mixing at the frame 90 (the frame 90 is included in mixing) corresponding to t90. The mixer 1 may end mixing.

At the moment T4, the mixer 1 stops consuming the encoded images in the second video buffer queue. In this case, the mixer 2 and the video encoder may both be stopped.

For example, the mixer 2 determines that the first time is T2+1.5s, and determines, based on T2+1.5s, whether to continue mixing in the mixing process. In the second video buffer queue, if t125<T2+1.5s≤t126, it may be determined to end mixing at the frame 125 (the frame 125 is included in mixing) corresponding to t125, or it may be determined to end mixing at the frame 126 (the frame 126 is included in mixing) corresponding to t126. The mixer 2 may end mixing (the frame 125 and the frame 126 are not shown in the figure).

For example, the specific video duration is 3s, and the mixer 1 determines that the first time is t80+1.5. In the second video buffer queue, if t124<t80+1.5s≤t125, it may be determined to end mixing at the frame 124 (the frame 124 is included in mixing) corresponding to t124, or it may be determined to end mixing at the frame 125 (the frame 125 is included in mixing) corresponding to t125. The mixer 2 may end mixing.

In embodiments of this application, if the mixer 1 mixes the frame 1 to the frame 90, and the mixer 2 mixes the frame 36 to the frame 125, a first video frame may be the frame 1 to the frame 90, and a second video frame may be the frame 91 to the frame 125.

In the foregoing process, a consumption time of the mixer 1 is from T1 to T3, and a consumption time of the mixer 2 is from T2 to T4. For specific consumption processes of the mixer 1 and the mixer 2, refer to the processing processes of S625, S629, S825, S829, S840, and S844, and details are not described herein.

In addition, for processing processes of the second audio buffer queue, the audio encoder, the mixer 1, and the mixer 2, refer to the foregoing processes. Details are not described herein.

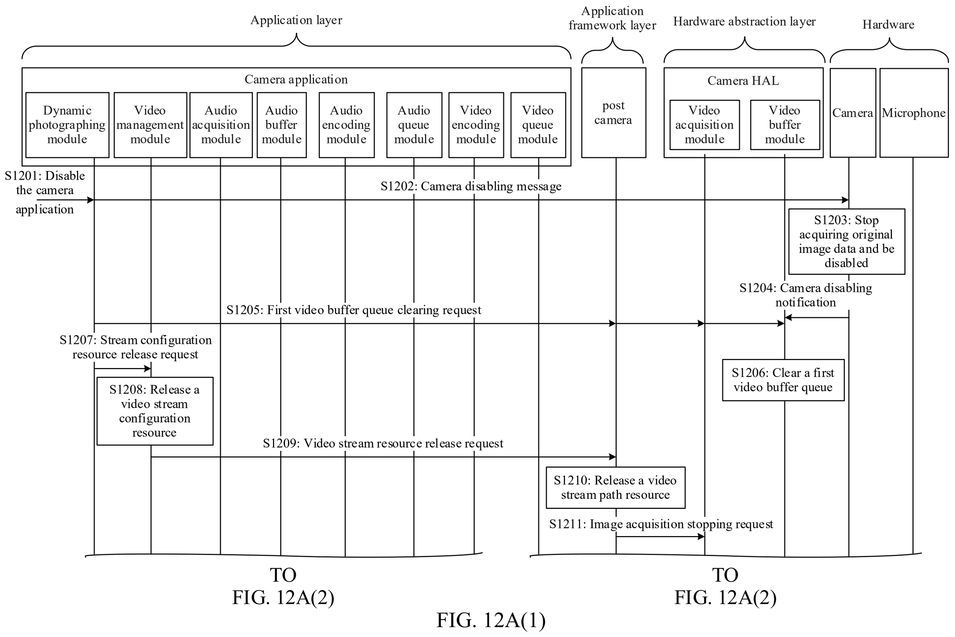

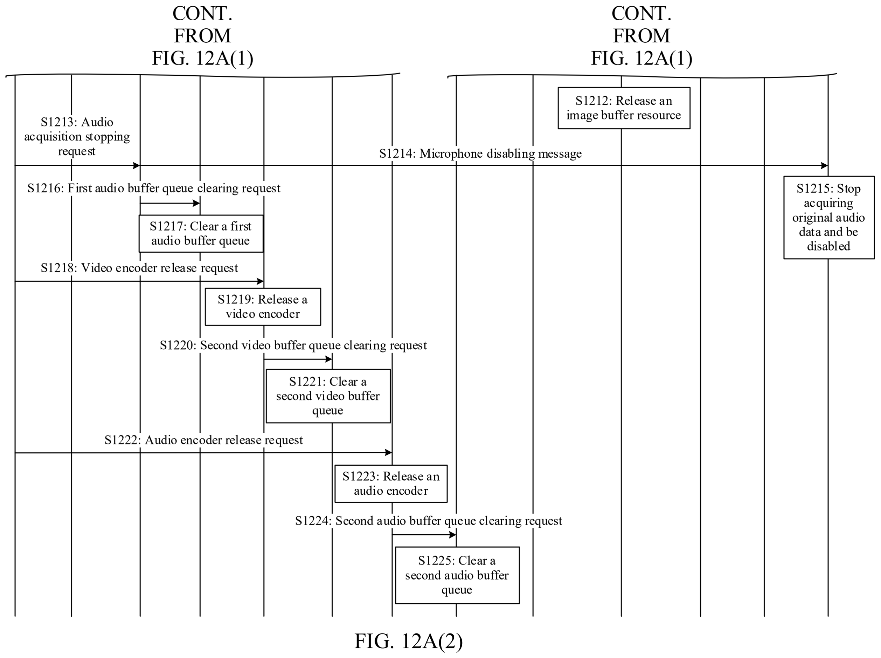

**6. Exit from the camera when there is no task of shooting a dynamic image** (step S1201 to step S1225 shown in FIG. 12A(1) and FIG. 12A(2)).

FIG. 12A(1) and FIG. 12A(2) are a schematic flowchart of a shooting exiting method according to an embodiment of this application. The shooting exiting method of FIG. 12A(1) and FIG. 12A(2) is performed by the electronic device after FIG. 6D or FIG. 8D is performed. To be specific, when processing of mixing tasks has been completed and encoding is stopped currently, if the user triggers to exit from the camera, the electronic device performs a process of exiting from the camera, releasing resources, and clearing audio and video buffer queues.

S1201: The dynamic shooting module receives a request for disabling the camera application.

After the electronic device receives the user operation of triggering to exit from the camera application, the dynamic shooting module may receive the request for disabling the camera application, and the electronic device may exit from the preview shooting picture. The operation of exiting from the camera application may alternatively be a touch operation of the user, or may be a voice instruction or a finger instruction, and this is not limited.

S1202: The dynamic photographing module sends a camera disabling message to the camera.

After receiving the request for disabling the camera application, the dynamic photographing module may send the camera disabling message to the camera. Correspondingly, the camera may receive the camera disabling message from the dynamic photographing module.

S1203: The camera stops acquiring original image data and is disabled.

After receiving the camera disabling message, the camera may stop acquiring the original image data and is disabled.

S1204: The camera sends a camera disabling notification to the video buffer module.

After being disabled, the camera may send the camera disabling notification to the video buffer module. Correspondingly, the video buffer module may receive the camera disabling notification from the camera.

S1205: The dynamic shooting module sends a first video buffer queue clearing request to the video buffer module.

After receiving the request for disabling the camera application, the dynamic photographing module may send the first video buffer queue clearing request to the video buffer module. Correspondingly, the video buffer module may receive the first video buffer queue clearing request from the dynamic photographing module.

S1206: The video buffer module clears the first video buffer queue.

When receiving the camera disabling notification and the first video buffer queue clearing request, the video buffer module may clear the first video buffer queue.

S1207: The dynamic shooting module sends a stream configuration resource release request to the video management module.

After receiving the request for disabling the camera application, the dynamic photographing module may send the stream configuration resource release request to the video management module. Correspondingly, the video management module may receive the stream configuration resource release request from the dynamic photographing module.

S1208: The video management module releases a video stream configuration resource.

After receiving the stream configuration resource release request from the dynamic photographing module, the video management module may release the video stream configuration resource. In this way, stored information such as matching encoding paths can be cleared.

S1209: The video management module sends the video stream resource release request to the post camera.

After performing S1208, the video management module may send the video stream resource release request to the post camera. Correspondingly, the post camera may receive the video stream resource release request from the video management module.

S1210: The post camera releases a video stream path resource.

After S1209 is performed, the post camera may release the video stream path resource, that is, release a created resource such as the surface.

S1211: The post camera sends an image acquisition stopping request to the video acquisition module.

After performing S1210, the post camera may send the image acquisition stopping request to the video acquisition module. Correspondingly, the video acquisition module may receive the image acquisition stopping request from the post camera.

S1212: The video acquisition module releases an image buffer resource.

After S1211 is performed, the video acquisition module may release the image buffer resource, that is, clear stream configuration parameter information or the like.

S1213: The dynamic photographing module sends an audio acquisition stopping request to the audio acquisition module.

After receiving the request for disabling the camera application, the dynamic photographing module may send the audio acquisition stopping request to the audio acquisition module. Correspondingly, the audio acquisition module may receive the audio acquisition stopping request from the dynamic photographing module.

S1214: The audio acquisition module sends a microphone disabling message to the microphone.

After S1213 is performed, the audio acquisition module may send the microphone disabling message to the microphone. Correspondingly, the microphone may receive the microphone disabling message from the audio acquisition module.

S1215: The microphone stops acquiring original audio data and is disabled.

After S1214 is performed, the microphone may stop acquiring the original audio data and is disabled.

S1216: The audio acquisition module sends a first audio buffer queue clearing request to the audio buffer module.

After the microphone is disabled, the first audio buffer queue clearing request may be sent to the audio buffer module. Correspondingly, the audio buffer module may receive the first audio buffer queue clearing request from the audio acquisition module.

S1217: The audio buffer module clears the first audio buffer queue.

After S1216 is performed, the audio buffer module may clear the first audio buffer queue.

S1218: The dynamic photographing module sends a video encoder release request to the video encoding module.

After receiving the request for disabling the camera application, the dynamic photographing module may send the video encoder release request to the video encoding module. Correspondingly, the video encoding module may receive the video encoder release request from the dynamic photographing module.

S1219: The video encoding module releases the video encoder.

After S1218 is performed, the video encoding module may release the video encoder.

S1220: The video encoding module sends a second video buffer queue clearing request to the video queue module.

After performing S1219, the video encoding module may send the second video buffer queue clearing request to the video queue module. Correspondingly, the video queue module may receive the second video buffer queue clearing request from the video encoding module.

S1221: The video queue module clears the second video buffer queue.

After S1220 is performed, the video queue module may clear the second video buffer queue.

S1222: The dynamic photographing module sends an audio encoder request to the audio encoding module.

After receiving the request for disabling the camera application, the dynamic photographing module may send the audio encoder request to the audio encoding module. Correspondingly, the audio encoding module may receive the audio encoder request from the dynamic photographing module.

S1223: The audio encoding module releases the audio encoder.

After S1222 is performed, the audio encoding module may release the audio encoder.

S1224: The audio encoding module sends a second audio buffer queue clearing request to the audio queue module.

The audio encoding module may send the second audio buffer queue clearing request to the audio queue module. Correspondingly, the audio queue module may receive the second audio buffer queue clearing request from the audio encoding module.

S1225: The audio queue module clears the second audio buffer queue.

After S1224 is performed, the audio queue module may clear the second audio buffer queue.

In the foregoing execution process, an execution sequence is not limited between S1202, S1205, S1213, S1218, and S1222, and the steps are all processed after S1201.

At this point, all encoders, encoding paths, and data buffers before and after encoding during current dynamic image shooting are all cleared, to release processing resources and storage resources.

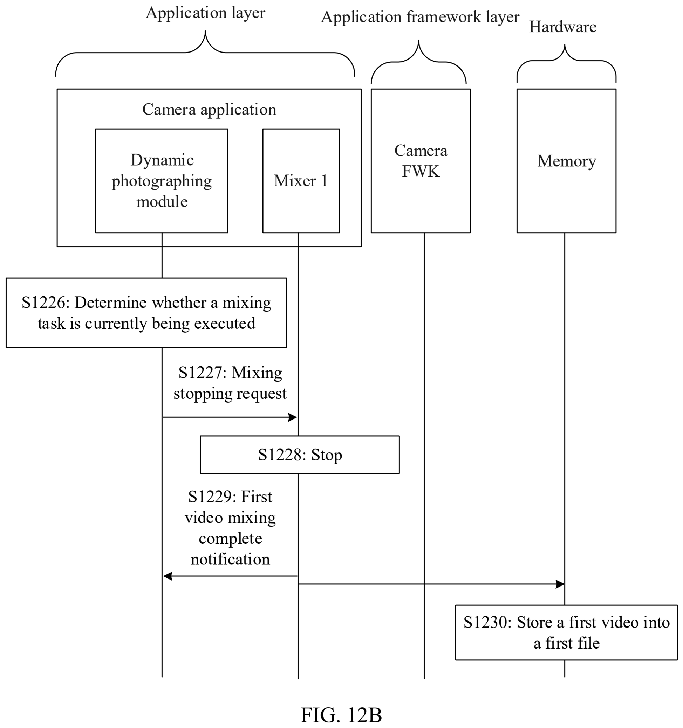

**7. Exit from the camera when there is a task of shooting a dynamic image** (step S1226 to step S1230 shown in FIG. 12B).

FIG. 12B is a schematic flowchart of another shooting exiting method according to an embodiment of this application. FIG. 12B is an existing procedure in a process of performing FIG. 6A(1) and FIG. 6A(2) and FIG. 6B or FIG. 8A(1) and FIG. 8A(2) to FIG. 8C(1), FIG. 8C(2), and FIG. 8C(3).

In a process in which the mixer 1 in the electronic device is processing mixing of the first video, the user triggers an operation of exiting from the camera. In this case, the electronic device also performs the steps of S1201 to S1225. Further, the electronic device performs the steps of S1226 to S1230. The following provides specific descriptions:

S1226: Determine whether a mixing task is currently being executed.

Optionally, after receiving the request of disabling the camera application, the dynamic photographing module may determine whether a mixing task is currently being executed. If the mixer 1 is processing a mixing task currently and does not complete mixing, S1227 is performed; and otherwise, S1227 is not performed.

S1227: The dynamic photographing module sends a mixing stopping request to the mixer 1.

When receiving the request for disabling the camera application, the dynamic photographing module may directly send the mixing stopping request to the mixer 1. Correspondingly, the mixer 1 may receive the mixing stopping request from the dynamic photographing module.

S1228: The mixer 1 is stopped.

The mixer 1 is stopped after S1227 is performed.

In this case, a logic of determining whether to stop the mixer 1 is not a stopping logic triggered in S825 and S829, but a cyclic process in which the mixer 1 directly stop mixing when receiving the mixing stopping request. In this case, the first video mixed by the mixer may not reach encapsulation duration. For example, the encapsulation duration is 3s. When the first video is encapsulated for 1.5s, the mixer 1 receives the mixing stopping request, and immediately stops mixing. In this case, duration of the first video is 1.5s.

S1229: The mixer 1 sends the first video mixing complete notification to the dynamic photographing module.

After performing S1228, the mixer 1 may send the first video mixing complete notification to the dynamic photographing module. Correspondingly, the dynamic photographing module may receive the first video mixing complete notification from the mixer 1.

Execution of S1229 is the same as that of S832 (S648), and the difference lies only in trigger conditions. S1229 is triggered when the user exits from the camera, and the mixer 1 ends mixing in advance.

S1230: The memory stores the first video into the first file.

After S1228 is performed, the memory stores the first video into the first file, and only needs to store the encapsulated first video.

In the foregoing implementation, there are two manners in which the electronic device determines to obtain the first video. One is obtaining the video 1 by ending mixing when the encapsulation duration is satisfied, and the other is obtaining the video 2 by ending mixing when the user exits from the camera in advance. Upon comparison, duration of the video 1 is less than that of the video 2.

In the foregoing mixing logic, a priority corresponding to the user operation is the highest, and it can be ensured that video mixing can be completed in cooperation with the user operation when the dynamic image is obtained.

Based on the context, the term "when..." used in the foregoing embodiments may be interpreted as a meaning of "if...", "after...", "in response to determining...", or "in response to detecting...". Similarly, based on the context, the phrase "when it is determined that..." or "if (a stated condition or event) is detected" may be interpreted as a meaning of "if it is determined that..." or "in response to determining..." or "when (a stated condition or event) is detected" or "in response to detecting (a stated condition or event)".

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, procedures or functions according to embodiments of this application are entirely or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, wireless, or microwaves) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk), or the like.

A person of ordinary skill in the art may understand that all or some of the procedures of the methods in embodiments may be implemented by a computer program instructing relevant hardware. The program may be stored in a computer-readable storage medium. When the program is executed, the procedures in the method embodiments may be performed. The foregoing storage medium includes any medium that can store program code, such as a ROM, a random access memory RAM, a magnetic disk, or an optical disc.

## Claims

1. A shooting method, wherein the method is applied to an electronic device, and the method comprises:
starting a first video encoder in response to a first operation performed on a shooting control;
encoding a first video frame by using the first video encoder;
in a process in which the first video encoder encodes the first video frame, encoding a second video frame by using the first video encoder in response to a second operation performed on the shooting control;
generating a first dynamic image, wherein the first dynamic image corresponds to the first video frame;
generating a second dynamic image, wherein the second dynamic image corresponds to the second video frame; and
controlling the first video encoder to stop encoding.

2. The method according to claim 1, wherein after the controlling the first video encoder to stop encoding, the method further comprises:
starting a second video encoder in response to a third operation performed on the shooting control;
encoding a third video frame by using the second video encoder;
generating a third dynamic image, wherein the third dynamic image corresponds to the third video frame;
controlling the second video encoder to stop encoding after the third dynamic image is generated;
starting a third video encoder in response to a fourth operation performed on the shooting control;
encoding a fourth video frame by using the third video encoder; and
generating a fourth dynamic image, wherein the fourth dynamic image corresponds to the fourth video frame.

3. The method according to claim 1, wherein before controlling, by the electronic device, the first video encoder to stop encoding, the method further comprises:
adding a first shooting task to a task list in response to the first operation;
adding a second shooting task to the task list in response to the second operation;
when the first dynamic image is generated,
clearing the first shooting task;
controlling the first encoder to continue encoding when there is a task in the task list;
when the second dynamic image is generated,
clearing the second shooting task; and
controlling the first video encoder to stop encoding when there is no task in the task list.

4. The method according to claim 2, wherein before controlling, by the electronic device, the second video encoder to stop encoding, the method further comprises:
adding a third shooting task to a task list in response to the third operation;
clearing the third shooting task when the third dynamic image is generated; and
controlling the third video encoder to stop encoding when there is no task in the task list.

5. The method according to claim 1, wherein after generating, by the electronic device, a first dynamic image, the method further comprises:
displaying a second user interface in response to an operation of starting a gallery, wherein the second user interface comprises a first thumbnail of a first still image of the first dynamic image;
displaying a third user interface in response to an operation performed on the first thumbnail, wherein the third user interface comprises the first still image; and
playing, by the electronic device, the first dynamic image in response to an operation performed on the first still image.

6. The method according to claim 5, wherein the first dynamic image comprises the first still image and a first video, the first video comprises M frames of still images, and M is an integer greater than 1.

7. The method according to any one of claims 1 to 6, wherein the method further comprises:
starting a first audio encoder in response to the first operation;
encoding a first audio frame by using the first audio encoder, wherein the first dynamic image corresponds to the first audio frame; and
in a process in which the first audio encoder encodes the first audio frame, encoding a second audio frame by using the first audio encoder in response to the second operation, wherein the second dynamic image corresponds to the second audio frame.

8. The method according to claim 7, wherein the generating a first dynamic image comprises:
mixing a first encoded video frame and a first audio code video frame by using a first mixer to generate the dynamic image, wherein the first encoded video frame is obtained after the first video encoder encodes the first video frame, and the first encoded audio frame is obtained after the first audio encoder encodes the first audio frame; and
the generating a second dynamic image comprises:
mixing a second encoded video frame and a second audio code video frame by using a second mixer to generate the second dynamic image, wherein the second encoded video frame is obtained after the first video encoder encodes the second video frame, and the second encoded audio frame is obtained after the second audio encoder encodes the second audio frame.

9. The method according to claim 8, wherein after generating, by the electronic device, the first dynamic image and the second dynamic image, the method further comprises:
controlling the first video encoder to stop encoding, and controlling the first audio encoder to stop encoding.

10. The method according to claim 1, wherein the method further comprises:
obtaining the first video frame by using a camera in response to an operation of starting the camera;
storing the first video frame into a first video buffer queue; and
encoding, by the first video encoder, the first video frame to obtain the first encoded video frame, and then storing the first encoded video frame into a second video buffer queue.

11. The method according to claim 7, wherein the method further comprises:
obtaining the first audio frame by using a microphone in response to an operation of starting a camera;
storing the first audio frame into a first audio buffer queue; and
encoding, by the first audio encoder, the first audio frame to obtain the first encoded audio frame, and then storing the first encoded audio frame into a second audio buffer queue.

12. The method according to claim 10, wherein the method further comprises:
creating the first video buffer queue, creating the second video buffer queue, creating the first audio buffer queue, and creating the second audio buffer queue in response to an operation performed on a dynamic mode control.

13. The method according to claim 12, wherein the first video buffer queue is stored in a hardware abstraction layer HAL of the electronic device, and the second video buffer queue, the first audio buffer queue, and the second audio buffer queue are stored at an application layer of the electronic device.

14. The method according to claim 10, wherein the method further comprises:
determining a first time based on a shooting time of the first operation and specific video duration by using a first mixer;
when a first time difference between a timestamp of an i^{th} frame of encoded image and a timestamp of a 1st frame of encoded image is less than or equal to the first time, mixing the i^{th} frame of encoded image to the first dynamic image by using the first mixer, wherein the i^{th} frame of encoded image is an encoded video frame in the second video buffer queue; and
when the first time difference between the timestamp of the i^{th} frame of encoded image and the timestamp of the 1st frame of encoded image is greater than the first time, controlling the first mixer to end mixing.

15. The method according to claim 14, wherein the method further comprises:
determining a second time based on the shooting time and the specific video duration by using the first mixer; and
selecting, by using the first mixer from the second video buffer queue, a frame of encoded video frame whose timestamp is closest to the second time as the 1st frame of encoded image.

16. The method according to claim 1, wherein the method further comprises:
creating the first video encoder and a first audio encoder in response to an operation performed on a dynamic mode control.

17. The method according to claim 16, wherein the method further comprises:
releasing the first video encoder and the first audio encoder in response to an operation of exiting from a camera.

18. The method according to claim 1, wherein the method further comprises:
displaying a first user interface in response to an operation of starting a camera, wherein the first user interface displays an image obtained by the camera, and the first user interface comprises a dynamic mode control in a disabled state; and
switching, by the dynamic mode control, to an enabled state in response to an operation performed on the dynamic mode control.

19. An electronic device, comprising: one or more processors and one or more memories, wherein the one or more processors are coupled to the one or more memories, the one or more memories are configured to store computer program code, the computer program code comprises computer instructions, and when the one or more processors execute the computer instructions, the electronic device is enabled to perform the method according to any one of claims 1 to 18.

20. A computer-readable storage medium, wherein the computer-readable storage medium stores a computer program, and the computer program is executed by a processor to implement the method according to any one of claims 1 to 18.
